# EUROPÄISCHE PATENTSCHRIFT

(11) **EP 3 728 339 B1**
(45) Veröffentlichungstag und Bekanntmachung des Hinweises auf die Patenterteilung: **06.07.2022**
(21) Anmeldenummer: 18816108.7
(22) Anmeldetag: 18.12.2018
(51) Int. Cl.: C08F 2/02, C08F 2/48, C08F 220/18, C08F 220/30, G02B 1/04

(54) **ZUSAMMENSETZUNG FÜR OPHTHALMOLOGISCHE PRODUKTE**
COMPOSITION FOR OPHTHALMOLOGICAL PRODUCTS
COMPOSITION POUR PRODUITS OPHTALMOLOGIQUES

(30) Priorität: 22.12.2017 EP 17210179
(43) Veröffentlichungstag der Anmeldung: 28.10.2020
(73) Patentinhaber: AMO Ireland, Dublin (IE)
(72) Erfinder: DOBELMANN-MARA, Lars, 64846 GROSS-ZIMMERN (DE); HELMSTETTER, Simon, 64823 Gross-Umstadt (DE); RIEDMUELLER, Stefan, 60488 FRANKFURT AM MAIN (DE); SCHRAUB, Martin, 64665 ALSBACH-HAEHNLEIN (DE)
(74) Vertreter: Carpmaels & Ransford LLP
(86) Internationale Anmeldenummer: PCT/EP2018/085433
(87) Internationale Veröffentlichungsnummer: WO 2019/121642

(56) Entgegenhaltungen:
- WO-A1-01/18079
- WO-A1-2017/032442
- WO-A1-2017/032443
- WO-A1-2017/032444
- WO-A2-2008/013950
- WO-A2-2009/074520

## Beschreibung

### Technisches Gebiet

Die vorliegende Erfindung betrifft eine Zusammensetzung für ophthalmologische Produkte, entsprechende Copolymere und deren Herstellung sowie deren Verwendung zur Herstellung von ophthalmischen Linsen oder ophthalmologischen Implantaten sowie diese Produkte.

### Stand der Technik

Die Katarakt bezeichnet eine Trübung der Augenlinse, die zu einem langsamen, schmerzlosen Verlust der Sehschärfe führt, insbesondere, wenn sich die beginnende Trübung im zentralen Bereich der Linse befindet. Die Betroffenen nehmen ihre Umwelt "wie durch Nebel" wahr. Die getrübte Linse kann in den meisten Fällen operativ durch ein künstliches Linsenimplantat ersetzt werden, so genannte Intraokularlinsen (IOL).

Es ist eine Vielzahl von Intraokularlinsen bekannt. Aufgebaut ist eine Intraokularlinse beispielsweise aus einer zentralen optischen Linse und der peripher anschließenden Haptik, die die optische Linse im Auge fixiert. Die Haptik kann verschiedene Formen aufweisen, beispielsweise C-Haptiken oder Plattenhaptiken. Anhand des Materials können die Linsen in harte, nicht faltbare IOL und weiche, faltbare IOL unterteilt werden. Die harten Linsen bestehen aus Polymethylmethacrylat. Faltbare Linsen bestehen aus Acrylaten, Siloxanen oder Hydrogelen. Der Vorteil der faltbaren Linsen besteht im wesentlich kleineren Einschnitt, der für die Implantation nötig ist. Eine neue Form der Intraokularlinse ist die Licht-adjustierbare Linse (LAL). Bei der LAL kann nach der Operation durch eine Bestrahlung mit Licht geeigneter Wellenlänge, z.B. UV-Licht, die Brechkraft nachjustiert werden.

Eine Phake Intraokularlinse (PIOL) ist eine künstliche Linse, die zusätzlich zu der körpereigenen Linse in das Auge implantiert wird. Phake Intraokularlinsen können im Rahmen der Korrektur einer Fehlsichtigkeit implantiert werden. Aufgebaut ist eine PIOL aus der zentralen optischen Linse und der peripher anschließenden Haptik, die die optische Linse im Auge fixiert. Durch die Lokalisation der PIOL im Auge wird zwischen Vorderkammer- und Hinterkammerlinsen unterschieden. Die Vorderkammerlinse wird zwischen Hornhaut und Iris implantiert, die Hinterkammerlinse zwischen Iris und Augenlinse. Vorderkammerlinsen bestehen entweder aus hartem Polymethylmethacrylat oder weichen Materialien wie Silikon- oder Acryl-Verbindungen. Hinterkammerlinsen werden in der Regel aus weichen Materialien hergestellt.

Eine licht-adjustierbare Linse kann beispielsweise aus Siloxanen bestehen, die Reste enthalten, welche im UV-Bereich photochemisch aktiv sind. Wird die LAL mit UV-Licht bestrahlt, verändern die Polymere Ihre Struktur. Die erste licht-adjustierbare Linse wurde 1999 von dem amerikanischen Augenarzt Dr. Daniel Schwarz und Robert Grubbs entwickelt (Daniel M. Schwartz et al, Light-adjustable lens: development of in vitro nomograms; in Transactions of the American Ophthalmological Society Bd 102, Dezember 2004, 67-74.)

Die Entwicklung von geeigneten Materialien für IOLs ist rapide vorangeschritten. In US 8,247,511 wird beispielsweise die Herstellung einer Intraokularlinse beschrieben, in dem ein starres Copolymer aus einem ersten Monomer, gewählt aus der Gruppe von Ethylenglycolphenyletheracrylat (EGPEA) und Polyethylenglycolphenyletheracrylat [(poly-EG)PEA], einem zweiten Monomer aus der Gruppe der unsubstituierten oder substituierten Styrole und einem dritten Monomer enthaltend eine ethylenisch ungesättigte Gruppe, welches als Homopolymer ein Hydrogel bilden würde, hergestellt wird, eine starre Intraokularlinse geformt wird und diese durch Hydratisierung in eine faltbare Intraokularlinse umgewandelt wird, wobei die Linse einen Brechungsindex von ca. 1,50 hat.

Künstliche Intraokularlinsen, welche aus einem Polymermaterial gebildet werden, welches photochemisch aktivierbare Gruppen enthält, so dass eine photoinduzierte Veränderung der optischen Eigenschaften der künstlichen Intraokularlinse durchgeführt werden kann, sind beispielsweise aus EP 1926454 bekannt.

In M. Schraub et al, European Polymer Journal 51 (2014) 21-27 wird beispielsweise die Photochemie von 3-Phenyl-coumarin enthaltenden Polymethacrylaten beschrieben.

In WO 2017/032442, WO 2017/032444 und WO 2017/032443 werden Materialen für die Herstellung von Medizinprodukten, bevorzugt ophthalmologischen Produkten, besonders bevorzugt für die Herstellung von Intraokularlinsen beschrieben. Diese Materialien können bevorzugt als photoaktive Monomere bei der Herstellung von geeigneten Polymeren oder Copolymeren der Produkte verwendet werden.

Sowohl hydrophobe, weiche Acrylatpolymere als auch Siloxanpolymere, die für die Verwendung zur Herstellung von Intraokularlinsen bekannt sind, weisen Glistening auf. Hierbei ist die Neigung zu Glistening in erstgenannten Polymeren ausgeprägter. Glistening ist nach A. Miyata und S. Yaguchi, J Cataract Refract Surg 2004; 30:1768-1772 ein Phasentrennungsphänomen, das bei Temperaturschwankungen auftritt, sobald sich das Polymer in einer wässrigen Umgebung befindet, wie es im menschlichen Auge der Fall ist. Der Wassergehalt des Polymers steigt mit der Temperatur. Bei einem Temperatursturz sinkt die Wasseraufnahmekapazität des Polymers, wodurch es zur Phasentrennung kommt. Die Polymerphase hat hierbei einen anderen Brechungsindex als die Wasserphase, wodurch die Wasserphase in Form von Vakuolen als Glistening wahrgenommen wird. Der Grad des Glistenings wird hierbei maßgeblich von der Temperaturabhängigkeit des Wassergehalts des Polymers bestimmt. Je größer die Temperaturabhängigkeit, desto schwerwiegender kann die glisteningbedingte visuelle Einschränkung des Patienten sein.

Der Wassergehalt eines Polymers lässt sich durch Hinzufügen einer hydrophilen Komponente bei der Polymerisation erhöhen. Eine hydrophile Komponente ist ein Monomer, dessen unvernetztes Homopolymer wasserlöslich oder in Wasser quellbar ist. Ein vernetztes Copolymer, das eine hydrophile Komponente enthält, kann beispielsweise ein Hydrogel sein. Solche Hydrogele bilden eine weitere Klasse von ophthalmologischen Materialien, nämlich hydrophile Acrylatpolymere. Diese sind im trockenen Zustand steif und werden nach Quellung in Wasser weich, wie beispielsweise aus US 8,247,511 und Bozukova D et al, Mat. Sci. Eng. 2010, 69:63-83 bekannt.

Der Wassergehalt solcher Polymere ist größer als 10 Gewichtsprozent. Ist der Wassergehalt eines solchen gequollenen Polymers höher als 10 Gewichtsprozent, kann von einem Hydrophilen Polymer gesprochen werden.

Im Gegensatz zu hydrophoben Acrylatpolymeren zeigen Hydrogele kein Glistening, jedoch tritt bei diesen Calcifizierung auf, wie in Trivedi et al, Eye 2002, 16: 217-241 beschrieben. Bei einer Calcifizierung handelt es sich um Calciumverbindungen, die sich vor allem an der Linsenoberfläche ablagern und die Sicht trüben.

Folglich gibt es zwei Phänomene, nämlich Glistening und Calcifizierung, die unerwünscht sind und bei einer zu niedrigen beziehungsweise zu hohen Hydrophilie des polymeren Materials auftreten.

Aufgabe der vorliegenden Erfindung ist die Bereitstellung eines geeigneten polymeren Materials enthaltend spezielle photoaktive polymerisierte Monomere, welches bei einer Umgebungstemperatur zwischen 16°C und 18°C weich und formbar ist und wenig Glistening bzw. kein Glistening aufweist und gleichzeitig hydrophob genug ist, damit keine Calcifizierung stattfinden kann, sowie die entsprechende Zusammensetzung, die zur Herstellung dieses Materials geeignet ist. Das polymere Material sollte zusätzlich transparent sein und bei Einstrahlung von Licht einer Wellenlänge λ seinen Brechungsindex ändern, beispielsweise bei Nutzung einer UV-Lichtquelle der entsprechenden Wellenlänge λ oder bei Nutzung eines Lasers mit ausreichend hoher Pulsfrequenz, dessen emittiertes Licht die Wellenlänge 2 λ oder auch n λ besitzt, wobei n eine natürliche Zahl ist. Weiterhin sollte das polymere Material und die entsprechende ophthalmologische Linse enthaltend das polymere Material, Entfaltungszeiten von unter 60 Sekunden, vorzugsweise von 10 bis 40 Sekunden, besonders bevorzugt von 15 bis 25 Sekunden, in wässriger Umgebung bei 35°C haben. Entfalgungszeiten von bekannten Matrialien werden beispielsweise in "The Ophthalmologist, 2017, Issue#1217" beschrieben.

Die speziellen photoaktiven Monomere sind beispielsweise aus WO 2017/032442 bekannt.

Die Aufgabe wird entsprechend durch die unabhängigen und abhängigen Ansprüche der vorliegenden Patentanmeldung gelöst.

### Zusammenfassung der Erfindung

Es wurde gefunden, dass bei geeigneter Auswahl an Monomeren in einer Zusammensetzung enthaltend spezielle photoaktive Monomere dieses zur Herstellung eines vernetzten transparenten Copolymers führt, das, durch Einstrahlung von Licht der entsprechenden Wellenlänge, seinen Brechungsindex ändert, kaum oder kein Glistening aufweist und welches ohne weitere Hydratisierung bei einer Umgebungstemperatur zwischen 16°C und 18°C weich ist, um beispielsweise in Form einer Intraokularlinse mittels gängiger Applikatoren nach dem Stand der Technik in ein Auge implantiert werden zu können. Das polymere Material ist zusätzlich transparent und ändert bei Einstrahlung von Licht einer entsprechenden Wellenlänge λ seinen Brechungsindex, beispielsweise bei Nutzung einer UV-Lichtquelle der entsprechenden Wellenlänge λ oder bei Nutzung eines Lasers mit ausreichend hoher Pulsfrequenz, dessen emittiertes Licht die Wellenlänge 2 λ oder n λ besitzt. Die aus dem vernetzten transparenten Copolymer hergestellten Intraokularlinsen besitzen vorteilhafte Entfaltungszeiten.

Vorzugsweise weist das Material kein Glistening auf. Der Begriff "kaum oder kein Glistening" bedeutet, dass das Copolymer stets klar ist und die Vakuolenzahl nach dem Glistening-Test, wie hier und in Clinical Ophthalmology, 2013, 7, 1529-1534 beschrieben, unter 100 Vakuolen/mm³, bevorzugt unter 25 Vakuolen/mm³ ist, besonders bevorzugt unter 20 Vakuolen/mm³ ist und ganz besonders bevorzugt unter 10 Vakuolen/mm³ oder unter 5 Vakuolen/mm³ ist; diese Werte entsprechen der Skala 0, die von Akira Miyata eingeführt wurde. Miyata et al, Jpn J Ophthalmol 2001, 45, 564 - 569 beschreiben die Skala 0 mit unter 50 Vakuolen/mm³, die Grenze der Skala 1 mit 50 Vakuolen/mm³, die Grenze der Skala 2 mit 100 Vakuolen/mm³ und die Grenze der Skala 3 mit 200 Vakuolen/mm³.

Ein erster Gegenstand der Erfindung ist daher eine Zusammensetzung enthaltend spezielle photoaktive Monomere der Formel (1), wie nachfolgend beschrieben, mindestens ein hydrophiles Monomer, dessen unvernetztes Homopolymer wasserlöslich oder in Wasser quellbar ist, einen UV-Absorber und einen Quervernetzer, wobei das molare Verhältnis der Summe aller Verbindungen der Formel (1) zur Summe aller hydrophilen Monomere 1:0,51 bis 1:1,24 ist.

Ein weiterer Gegenstand der Erfindung ist die Verwendung der Zusammensetzung zur Herstellung eines entsprechenden Copolymers bzw. zur Herstellung eines Rohlings für eine ophthalmische Linse oder ein ophthalmologisches Implantat.

Ein weiterer Gegenstand der Erfindung ist das entsprechend vernetzte Copolymer, ein Verfahren zur Herstellung eines derartigen Copolymers und dessen Verwendung zur Herstellung eines Artikels, vorzugsweise eines Rohlings für eine ophthalmische Linse, eines Rohlings für ein ophthalmologisches Implantat, eine ophthalmische Linse oder ein ophthalmologisches Implantat.

Ein weiterer Gegenstand der Erfindung ist der entsprechende Artikel sowie das Verfahren zur Herstellung des Artikels.

### Beschreibung der Erfindung

Der erste Gegenstand der Erfindung ist daher eine Zusammensetzung enthaltend mindestens eine Verbindung der Formel (1) 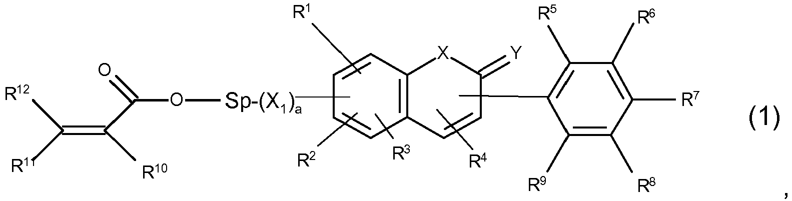 wobei für die verwendeten Symbole und Indizes gilt:
- X: ist bei jedem Auftreten gleich oder verschieden O, S oder NR⁰;
- Y: ist bei jedem Auftreten gleich oder verschieden O oder S;
- X₁: ist O oder S;
- a: ist 0 oder 1;
- Sp: ist ein Alkandiyl, Alkendiyl oder ein Alkindiyl, das mit einem oder mehreren Gruppen R substituiert sein kann;
- R⁰: ist eine geradkettige oder verzweigte Alkylgruppe mit 1 bis 10 C-Atomen;
- R¹, R², R³ und R⁴: sind jeweils unabhängig voneinander bei jedem Auftreten H, F, Cl, Br, I, eine geradkettige oder verzweigte Alkylgruppe mit 1 bis 20 C-Atomen, eine teilweise oder vollständig halogenierte geradkettige oder verzweigte Alkylgruppe mit 1 bis 20 C-Atomen oder eine Aryl- oder Heteroarylgruppe mit 5 bis 40 Ringatomen;
- R⁵, R⁶, R⁷, R⁸ und R⁹: sind jeweils unabhängig voneinander bei jedem Auftreten H, F, Cl, Br, I, eine geradkettige oder verzweigte Alkylgruppe mit 1 bis 20 C-Atomen, eine geradkettige oder verzweigte Alkoxygruppe mit 1 bis 20 C-Atomen, eine teilweise oder vollständig halogenierte geradkettige oder verzweigte Alkylgruppe mit 1 bis 20 C-Atomen, eine teilweise oder vollständig halogenierte geradkettige oder verzweigte Alkoxygruppe mit 1 bis 20 C-Atomen oder eine Aryl- oder Heteroarylgruppe mit 5 bis 40 Ringatomen, wobei mindestens ein Rest aus der Gruppe der Substituenten R⁵ bis R⁹ eine geradkettige oder verzweigte Alkylgruppe mit 1 bis 20 C-Atomen bedeutet, die teilweise oder vollständig halogeniert sein kann;
- R¹⁰, R¹¹, R¹²: sind jeweils unabhängig voneinander bei jedem Auftreten H, F, eine lineare oder verzweigte Alkylgruppe mit 1 bis 20 C-Atomen, die teilweise oder vollständig halogeniert sein kann, oder eine Arylgruppe mit 6 bis 14 C-Atomen;
- R: ist bei jedem Auftreten gleich oder verschieden ausgewählt aus der Gruppe bestehend aus einer geradkettigen oder verzweigten Alkylgruppe mit 1 bis 10 C-Atomen, einer teilhalogenierten oder vollständig halogenierten geradkettigen oder verzweigten Alkylgruppe mit 1 bis 10 C-Atomen, einer geradkettigen oder verzweigten Alkoxygruppe mit 1 bis 10 C-Atomen oder einer teilhalogenierten oder vollständig halogenierten geradkettigen oder verzweigten Alkoxygruppe mit 1 bis 10 C-Atomen;
mindestens ein hydrophiles Monomer, dessen unvernetztes Homopolymer wasserlöslich oder in Wasser quellbar ist;
mindestens einen UV-Absorber und mindestens einen Quervernetzer, wobei das molare Verhältnis der Summe aller Verbindungen der Formel (1) zur Summe aller hydrophilen Monomere 1:0,51 bis 1:1,24 ist.

Der Begriff Zusammensetzung wird im Folgenden synonym für den Begriff Formulierung oder Zubereitung verwendet.

Die Zusammensetzung kann die genannten notwendigen oder optionalen Bestandteile umfassen oder enthalten, daraus im Wesentlichen oder daraus bestehen. Alle Verbindungen oder Komponenten, die in den Zusammensetzungen verwendet werden können, sind entweder bekannt und käuflich erwerbbar oder können nach bekannten Verfahren synthetisiert werden, wie beispielsweise für die Verbindungen der Formel (1) in WO 2017/032442, Seiten 21 und 22 sowie Seiten 44 bis 78 beschrieben. Das Dokument WO 2017/032442 ist hiermit per Bezugnahme Bestandteil der Beschreibung.

Die Verbindungen der Formel (1) und deren bevorzugte Ausführungsformen, wie nachfolgend beschrieben, umfassen alle Stereoisomere oder racemischen Mischungen.

Im Allgemeinen werden Oberflächen anhand ihres Kontaktwinkels mit Wasser in hydrophile und hydrophobe Oberflächen eingeteilt. Es gilt: 0° < Konatktwinkel < 90° hydrophil; Kontakwinkel > 90° hydrohob. Der Kontakwinkel ist hierbei das Resultat aus Oberflächenstruktur und Material (Literatur: Förch, R.; Schönherr, H.; Tobias, A.; Jenkins, A. See Appendix C. In Surface Design: Applications in Bioscience and Nanotechnology; Wiley-VCH:Weinheim, Germany, 2009; Seite 471). Da sich die Unterteilung in hydrophil und hydrophob vorwiegend auf die Bulk-Eigenschaften der Polymere sowie deren Einzelkomponenten beziehen soll, ist die genannte Einteilung mittels Konatkwinkel nicht zweckmäßig.

Für die Einteilung von Intraokularlinsen in hydrophile und hydrophobe Linsen geben Bozukova et al deren Wassergehalt als Unterteilungskriterium an. Ist dieser Wassergehalt kleiner als 10 - 20 Gew.-% handelt es sich um eine hydrophobe Intraokularlinse; ist dieser Wassergehalt größer als 10 - 20 Gew.-% handelt es sich um eine hydrophile Intraokularlinse (Literatur: Bozukova D, Pagnoulle C, Jerome R, Jerome C, (2010) Polymers in modern ophthalmic implants -Historical background and recent advances, Material Science and Engineering R 69:63-83). Die Wasseraufnahme eine Materials ist für die im Rahmen dieser Erfindung hergestellten Polymere hinsichtlich deren Anwendungsgebiet das zweckmäßigere Entscheidungkriterium bezüglich Hydrophilie und Hydrophobie. Zur Einteilung von Monomeren in hydrophile und hydrophobe Monomere ist es im Rahmen dieser Erfindung und deren Applikationszielen zweckmäßig, eine von Bozukova et al beschriebenen Unterteilung zu nutzen: Liefert ein Monomer ein Homopolymer, das entweder gänzlich wasserlöslich ist oder eine Wasseraufnahme von über 10 Gew.-% aufweist, zeigt dies hydrophile Eigenschaft und wird im Rahmen dieser Erfindung als hydrophiles Monomer klassifiziert. Die hydrophile Eigenschaft wird durch funktionelle Gruppen im Monomer bewirkt, welche in der Lage sind, Wassermolküle zu binden. Die Eigenschaft lässt sich im gequollenen Zustand durch das Vorhandensein nicht gefrierbaren Wassers belegen. Das nicht gefrierbare Wasser beruht hierbei auf der Tatsache, dass funktionelle Gruppen im Polymer Wasser an sich binden und dieses Wasser somit unabhängig von der Temperatur nicht in der Lage ist Eiskristalle zu bilden. Unberührt davon kann ein solches Polymer noch gefrierbares Wasser enthalten, welches Eiskristalle bildet, jedoch wird dieses nicht für eine Unterteilung in hydrophile und hydrophobe Monomere herangezogen. Beispiele für funktionelle Gruppen, die in der Lage sind nicht gefrierbares Wasser zu binden, sind unter Anderem Hydroxygruppen, Aminogruppen, Ammoniumgruppen, Carboxylgruppen, Sulfongruppen, Sulfatgruppen, Etherbrücken oder Amidgruppen. Das Vorhandensein solcher funktioneller Gruppen in einem Monomer ist somit ein Indikator für ein hydrophiles Monomer.

Erfüllt ein Monomer somit ein oder mehrere der genannten Kriterien Wasserlöslickeit des resultierenden Homopolymers, Wasseraufnahme des resultierenden Homopolymers größer als 10 Gew.-% und/oder Vorhandensein von nicht gefrierbarem Wasser im resultierenden Homopolymer, so ist dies im Rahmen der Erfindung ein "hydrophiles Monomer". Erfüllt ein Monomer keines der genannten Kriterien, so wird dieses im Rahmen der Erfindung als "nicht hydrophiles Monomer" bezeichnet.

Im Rahmen der vorliegenden Erfindung werden unter einer geradkettigen oder verzweigten Alkylgruppe mit 1 bis 20 C-Atomen die Reste Methyl, Ethyl, n-Propyl, i-Propyl, Cyclopropyl, n-Butyl, i-Butyl, s-Butyl, t-Butyl, Cyclobutyl, 2-Methylbutyl, n-Pentyl, s-Pentyl, t-Pentyl, 2-Pentyl, neo-Pentyl, Cyclopentyl, n-Hexyl, s-Hexyl, t-Hexyl, 2-Hexyl, 3-Hexyl, neo-Hexyl, 2-Methylpentyl, n-Heptyl, 2-Heptyl, 3-Heptyl, 4-Heptyl, n-Octyl, 2-Ethylhexyl, n-Nonyl, n-Decyl, 2-(2,6-Dimethyl)octyl, 3-(3,7-Dimethyl)octyl, 1,1-Dimethyl-n-hex-1-yl-, 1,1-Dimethyl-n-hept-1-yl-, 1,1-Dimethyl-n-oct-1-yl-, n-Undecyl, n-Dodecyl, 1,1-Dimethyl-n-dec-1-yl-, n-Tridecyl, n-Tetradecyl, 1,1-Dimethyl-n-dodec-1-yl-, n-Heptadecyl, n-Hexadecyl, 1,1-Dimethyl-n-tetradec-1-yl-, n-Octadecyl, n-Nonadecyl, 1,1-Dimethyl-n-hexadec-1-yl-, 1,1-Dimethyl-n-octadec-1-yl-, 1,1-Diethyl-n-hex-1-yl-, 1,1-Diethyl-n-hept-1-yl-, 1,1-Diethyl-n-oct-1-yl-, 1,1-Diethyl-n-dec-1-yl-, 1,1-Diethyl-n-dodec-1-yl-, 1,1-Diethyl-n-tetradec-1-yl-, 1,1-Diethyl-n-hexadec-1-yl-, 1,1-Diethyl-n-octadec-1-yl- und n-Eicosyl verstanden.

Teilweise halogenierte Alkylgruppen entsprechen den geradkettigen oder verzweigten Alkylgruppen mit 1 bis 20 C-Atomen, wie zuvor beschrieben, wobei mindestens ein H-Atom gegen ein Halogenatom ausgetauscht wurde, jedoch nicht alle H-Atome gegen Halogenatome ausgetauscht wurden. Bevorzugte Halogenatome sind F-Atome oder Cl-Atome, besonders bevorzugt sind teilweise fluorierte Alkylgruppen, beispielsweise 2,2,2-Trifluorethyl.

Vollständig halogenierte Alkylgruppen entsprechen den geradkettigen oder verzweigten Alkylgruppen mit 1 bis 20 C-Atomen, wie zuvor beschrieben, wobei alle H-Atome gegen das entsprechende Halogenatom ausgetauscht wurden. Bevorzugte Halogenatome sind F-Atome oder Cl-Atome, besonders bevorzugt sind vollständig fluorierte Alkylgruppen. Beispiele hierfür sind Trifluormethyl, Pentafluorethyl oder Nonafluorbutyl.

Im Rahmen der vorliegenden Erfindung entspricht Alkandiyl einer divalenten Gruppe, die sich von einer geradkettigen oder verzweigten Alkylgruppe mit 1 bis 20 C-Atomen ableitet, wie zuvor beschrieben.

Im Rahmen der vorliegenden Erfindung entspricht Alkendiyl einer divalenten Gruppe, die sich von einer geradkettigen oder verzweigten Alkenylgruppe mit 1 bis 20 C-Atomen ableitet, die einer geradkettigen oder verzweigten Alkylgruppe mit 1 bis 20 C-Atomen entspricht, wie zuvor beschrieben, jedoch mindestens eine Doppelbindung enthält.

Im Rahmen der vorliegenden Erfindung entspricht Alkindiyl einer divalenten Gruppe, die sich von einer geradkettigen oder verzweigten Alkinylgruppe mit 1 bis 20 C-Atomen ableitet, die einer geradkettigen oder verzweigten Alkylgruppe mit 1 bis 20 C-Atomen entspricht, wie zuvor beschrieben, jedoch mindestens eine Dreifachbindung enthält.

Alkandiyl, Alkendiyl oder Alkindiyl kann entsprechend mit einem oder mehreren Resten R substituiert sein.

Im Rahmen der vorliegenden Erfindung entspricht eine teilweise halogenierte oder vollständig halogenierte geradkettige oder verzweigte Alkoxygruppe mit 1 bis 20 C-Atomen einer teilweise halogenierten oder vollständig halogenierten geradkettigen oder verzweigten Alkylgruppe mit 1 bis 20 C-Atomen, wobei die zuvor beschriebene Alkylgruppe entsprechend an ein O-Atom gebunden vorliegt und kann als O-Alkyl abgekürzt werden.

Im Rahmen der vorliegenden Erfindung entspricht eine geradkettige oder verzweigte Thioalkylgruppe mit 1 bis 20 C-Atomen einer geradkettigen oder verzweigten Alkylgruppe mit 1 bis 20 C-Atomen, wobei die zuvor beschriebene Alkylgruppe entsprechend an ein S-Atom gebunden vorliegt und kann als S-Alkyl abgekürzt werden.

Eine Cycloalkylgruppe enthaltend 3 bis 8 C-Atome ist beispielsweise Cyclopropyl, Cyclobutyl, Cyclopentyl, Cyclohexyl, Cycloheptyl und Cyclooctyl, welches noch jeweils mit einem Rest R substituiert sein kann.

Eine Arylgruppe im Sinne dieser Erfindung enthält 6 bis 40 aromatische Ringatome, bevorzugt C-Atome. Eine Heteroarylgruppe im Sinne dieser Erfindung enthält 5 bis 40 aromatische Ringatome, wobei die Ringatome C-Atome und mindestens ein Heteroatom umfassen, mit der Maßgabe, dass die Summe aus C-Atomen und Heteroatomen mindestens 5 ergibt. Die Heteroatome sind bevorzugt ausgewählt aus N, O und/oder S. Dabei wird unter einer Arylgruppe bzw. Heteroarylgruppe entweder ein einfacher aromatischer Cyclus, also Phenyl, abgeleitet von Benzol, bzw. ein einfacher heteroaromatischer Cyclus, beispielsweise abgeleitet von Pyridin, Pyrimidin oder Thiophen, oder eine kondensierte Aryl- oder Heteroarylgruppe, beispielsweise Naphthalin, Anthracen, Phenanthren, Chinolin oder Isochinolin, verstanden.

Unter einer Aryl- oder Heteroarylgruppe mit 5 - 40 Ringatomen, welches noch jeweils mit einem Rest R substituiert sein kann und welches über beliebige Positionen am Aromaten bzw. Heteroaromaten verknüpft sein kann, werden beispielsweise die folgenden Gruppen Benzol, Naphthalin, Anthracen, Benzanthracen, Phenanthren, Benzophenanthren, Pyren, Chrysen, Perylen, Fluoranthen, Benzfluoranthen, Naphthacen, Pentacen, Benzpyren, Biphenyl, Biphenylen, Terphenyl, Terphenylen, Fluoren, Spirobifluoren, Dihydrophenanthren, Dihydropyren, Tetrahydropyren, cis- oder trans-Indenofluoren, cis- oder trans-Monobenzoindenofluoren, cis- oder trans-Dibenzoindenofluoren, Truxen, Isotruxen, Spirotruxen, Spiroisotruxen, Furan, Benzofuran, Isobenzofuran, Dibenzofuran, Thiophen, Benzothiophen, Isobenzothiophen, Dibenzothiophen, Pyrrol, Indol, Isoindol, Carbazol, Indolocarbazol, Indenocarbazol, Pyridin, Chinolin, Isochinolin, Acridin, Phenanthridin, Benzo-5,6-chinolin, Benzo-6,7-chinolin, Benzo-7,8-chinolin, Phenothiazin, Phenoxazin, Pyrazol, Indazol, Imidazol, Benzimidazol, Naphthimidazol, Phenanthrimidazol, Pyridimidazol, Pyrazinimidazol, Chinoxalinimidazol, Oxazol, Benzoxazol, Naphthoxazol, Anthroxazol, Phenanthroxazol, Isoxazol, 1,2-Thiazol, 1,3-Thiazol, Benzothiazol, Pyridazin, Benzopyridazin, Pyrimidin, Benzpyrimidin, Chinoxalin, 1,5-Diazaanthracen, 2,7-Diazapyren, 2,3-Diazapyren, 1,6-Diazapyren, 1,8-Diazapyren, 4,5-Diazapyren, 4,5,9,10-Tetraazaperylen, Pyrazin, Phenazin, Phenoxazin, Phenothiazin, Fluorubin, Naphthyridin, Azacarbazol, Benzocarbolin, Phenanthrolin, 1,2,3-Triazol, 1,2,4-Triazol, Benzotriazol, 1,2,3-Oxadiazol, 1,2,4-Oxadiazol, 1,2,5-Oxadiazol, 1,3,4-Oxadiazol, 1,2,3-Thiadiazol, 1,2,4-Thiadiazol, 1,2,5-Thiadiazol, 1,3,4-Thiadiazol, 1,3,5-Triazin, 1,2,4-Triazin, 1,2,3-Triazin, Tetrazol, 1,2,4,5-Tetrazin, 1,2,3,4-Tetrazin, 1,2,3,5-Tetrazin, Purin, Pteridin, Indolizin und Benzothiadiazol verstanden.

Eine Arylalkylgruppe ist eine Alkylgruppe, die mit mindestens einer Arylgruppe substituiert ist.

Eine Alkylarylalkylgruppe ist eine Alkylgruppe, die mit mindestens einer Arylgruppe substituiert ist, wobei die Arylgruppe mit mindestens einer Alkylgruppe substituiert ist.

Für Aryl- und Alkylgruppen gelten die zuvor genannten Bedeutungen oder bevorzugten Bedeutungen.

Im Rahmen der Erfindung ist R bei jedem Auftreten gleich oder verschieden ausgewählt aus der Gruppe bestehend aus einer geradkettigen oder verzweigten Alkylgruppe mit 1 bis 10 C-Atomen, einer teilhalogenierten oder vollständig halogenierten geradkettigen oder verzweigten Alkylgruppe mit 1 bis 10 C-Atomen, einer geradkettigen oder verzweigten Alkoxygruppe mit 1 bis 10 C-Atomen oder einer teilhalogenierten oder vollständig halogenierten geradkettigen oder verzweigten Alkoxygruppe mit 1 bis 10 C-Atomen. R ist bevorzugt bei jedem Auftreten Methyl, Ethyl, Trifluormethyl oder Methoxy.

Im Rahmen der Erfindung ist R⁰ eine geradkettige oder verzweigte Alkylgruppe mit 1 bis 10 C-Atomen, vorzugsweise eine geradkettige oder verzweigte Alkylgruppe mit 1 bis 4 C-Atomen.

In einer Ausführungsform der Erfindung werden bevorzugt Verbindungen der Formel (1) für die erfindungsgemäße Zusammensetzung ausgewählt, in denen Y die Bedeutung O hat und X die Bedeutung O, S oder NR⁰ hat, wobei R⁰ eine zuvor angegebene Bedeutung hat.

Es werden weiterhin bevorzugt Verbindungen der Formel (1) für die erfindungsgemäße Zusammensetzung gewählt, in denen Y die Bedeutung O und X die Bedeutung O oder S haben, bevorzugt bei denen Y die Bedeutung O und X die Bedeutung O haben. Derartige besonders bevorzugte Verbindungen der Formel (1) können durch die Formel (2) dargestellt werden, 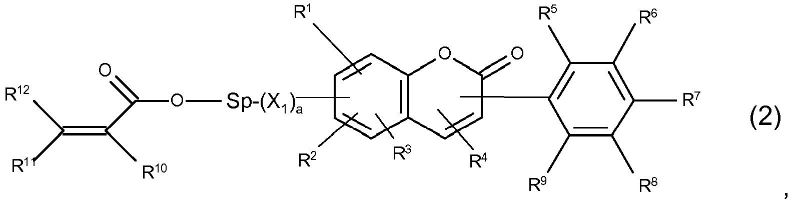 wobei X₁, a, Sp, R¹ bis R¹² eine zuvor genannte oder eine nachfolgend bevorzugt genannte Bedeutung haben.

In Verbindungen der Formel (1) oder (2), wie zuvor beschrieben, ist X₁ bevorzugt O und a entspricht 0 oder 1. Besitzt der Spacer Sp eine gerade Anzahl von C-Atomen, so ist a bevorzugt 1. Besitzt der Spacer Sp eine ungerade Anzahl von C-Atomen, so ist a bevorzugt 0.

In Verbindungen der Formel (1) oder (2), wie zuvor beschrieben oder bevorzugt beschrieben, ist Sp bevorzugt ein Alkandiyl mit 6 bis 20 C-Atomen, das mit einem oder mehreren R substituiert sein kann, besonders bevorzugt ein Alkandiyl mit 8, 9, 10, 11, 12, 13, 14, 15 oder 16 C-Atomen, das mit einem oder mehreren R substituiert sein kann, ganz besonders bevorzugt ein Alkandiyl mit 9, 10, 11, 12, 13 oder 14 C-Atomen, das mit einem oder mehreren R substituiert sein kann. Das Alkandiyl, wie zuvor beschrieben, ist bevorzugt unsubstituiert. Das Alkandiyl ist ganz besonders bevorzugt ein Alkandiyl mit 10, 11, 12 oder 13 C-Atomen oder -(CH₂)₁₁- und -(CH₂)₁₂-.

In Verbindungen der Formel (1) oder (2), wie zuvor beschrieben oder bevorzugt beschrieben, sind die Substituenten R¹, R², R³ und R⁴ bevorzugt H, was durch Verbindungen der Formel (3) dargestellt werden kann, 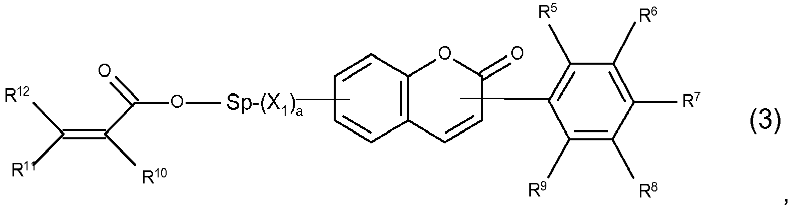 wobei X₁, a, Sp, R⁵ bis R¹² eine zuvor genannte oder eine zuvor oder nachfolgend bevorzugt genannte Bedeutung haben.

In einer Ausführungsform der Erfindung werden bevorzugt Verbindungen der Formel (1), (2) oder (3) für die erfindungsgemäße Zusammensetzung ausgewählt, wie zuvor beschrieben oder als bevorzugt beschrieben, wobei die Substituenten R¹¹ und R¹² H bedeuten und R¹⁰ eine zuvor angegebene Bedeutung hat.

Der Substituent R¹⁰ ist bevorzugt H oder eine geradkettige oder verzweigte Alkylgruppe mit 1, 2, 3, 4, 5 oder 6 C-Atomen oder eine unsubstituierte oder ein- oder mehrfach durch R substituierte Phenylgruppe. Der Substituent R¹⁰ in Verbindungen der Formel (1), (2) oder (3) ist besonders bevorzugt H, Methyl, Ethyl oder Phenyl, ganz besonders bevorzugt H oder Methyl.

Ist der Substituent R¹⁰ in Verbindungen der Formel (1), (2) oder (3), wie zuvor beschrieben, H, dann bezeichnet man diese Monomere als Acrylate. Ist der Substituent R¹⁰ in Verbindungen der Formel (1), (2) oder (3), wie zuvor beschrieben, Methyl, dann bezeichnet man diese Monomere als Methacrylate. Acrylate sind besonders bevorzugt.

In Verbindungen der Formel (1), (2) und (3), wie zuvor beschrieben oder als bevorzugt beschrieben, sind die Substituenten R¹¹, R¹², R⁵, R⁶ und R⁸ bevorzugt H, was durch Verbindungen der Formel (4) dargestellt werden kann, 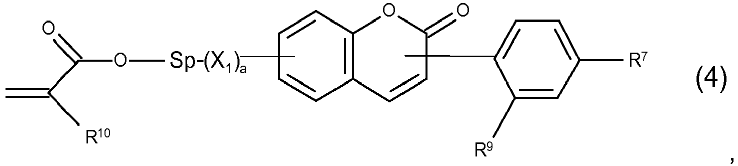 wobei X₁, a, Sp, R⁷, R⁸ und R¹² eine zuvor genannte oder eine zuvor oder nachfolgend bevorzugt genannte Bedeutung haben.

In Verbindungen der Formel (1), (2), (3) oder (4) ist R⁹ bevorzugt eine nicht fluorierte, teilweise fluorierte oder vollständig fluorierte geradkettige oder verzweigte Alkyl- oder Alkoxygruppe mit 1 bis 6 C-Atomen, wobei Sp, X₁, a, R⁷ und R¹⁰ oder einer der anderen Substituenten R¹ bis R¹² bei Ihrem Auftreten eine zuvor genannte Bedeutung oder bevorzugte Bedeutung haben.

In Verbindungen der Formel (1), (2), (3) oder (4) ist R⁹ besonders bevorzugt eine nicht fluorierte, teilweise fluorierte oder vollständig fluorierte geradkettige oder verzweigte Alkyl- oder Alkoxygruppe mit 1 bis 4 C-Atomen, wobei Sp, X₁, a, R⁷ und R¹⁰ oder einer der anderen Substituenten R¹ bis R¹² bei Ihrem Auftreten eine zuvor genannte Bedeutung oder bevorzugte Bedeutung haben.

In Verbindungen der Formel (1), (2), (3) oder (4) ist R⁷ bevorzugt eine nicht fluorierte, teilweise fluorierte oder vollständig fluorierte geradkettige oder verzweigte Alkylgruppe mit 2 bis 8 C-Atomen, wobei Sp, X₁, a, R⁹ und R¹⁰ oder einer der anderen Substituenten R¹ bis R¹² bei Ihrem Auftreten eine zuvor genannte Bedeutung oder bevorzugte Bedeutung haben.

In Verbindungen der Formel (1), (2), (3) oder (4) ist R⁷ besonders bevorzugt eine nicht fluorierte, teilweise fluorierte oder vollständig fluorierte geradkettige oder verzweigte Alkylgruppe mit 3 bis 8 C-Atomen, wobei Sp, X₁, a, R⁹ und R¹⁰ oder einer der anderen Substituenten R¹ bis R¹² bei Ihrem Auftreten eine zuvor genannte Bedeutung oder bevorzugte Bedeutung haben.

Bevorzugte Beispiele der Verbindungen der Formel (1) bis (4), die erfindungsgemäß für die Zusammensetzung ausgewählt werden, entsprechen den Verbindungen (M-1), (M-2) und (M-6) bis (M-63):

| | |
|---|---|
| 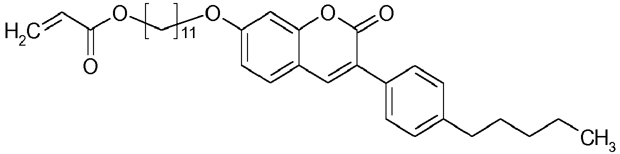 | (M-1) |
| 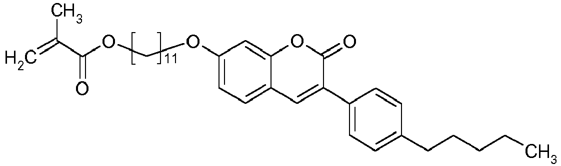 | (M-2) |
| 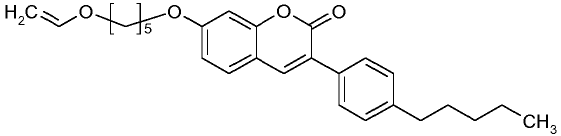 | (M-3) |
| 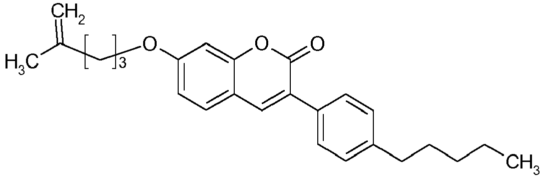 | (M-4) |
| 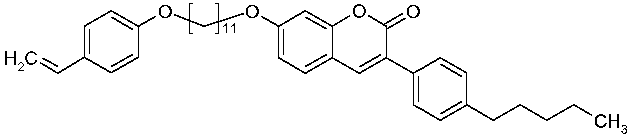 | (M-5) |
| 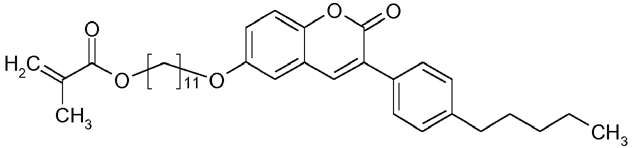 | (M-6) |
| 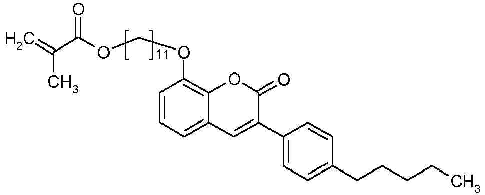 | (M-7) |
| 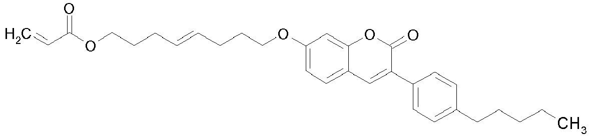 | (M-8) |
| 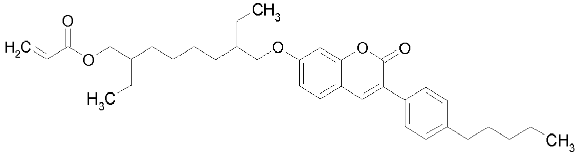 | (M-9) |
| 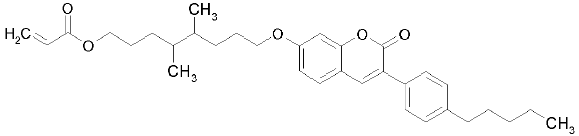 | (M-10) |
| 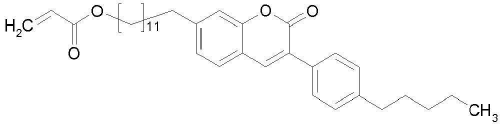 | (M-11) |
| 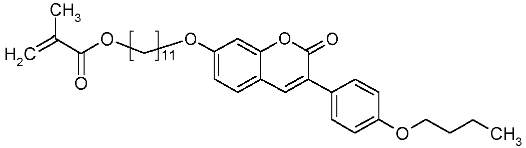 | (M-12) |
| 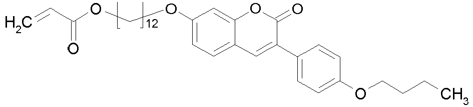 | (M-13) |
| 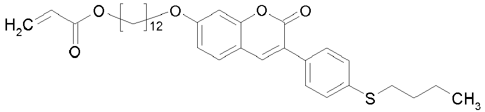 | (M-14) |
| 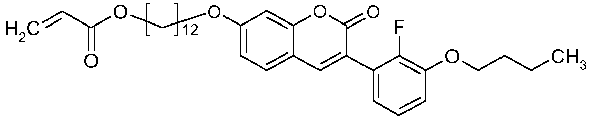 | (M-15) |
| 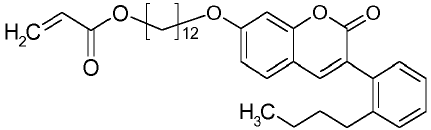 | (M-16) |
| 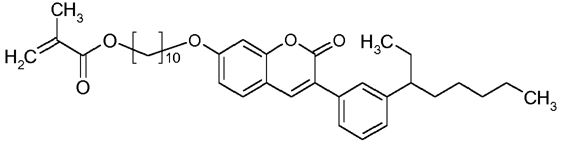 | (M-17) |
| 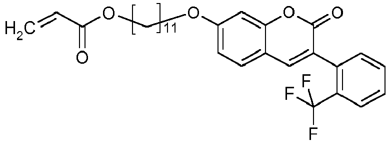 | (M-18) |
| 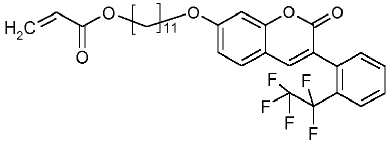 | (M-19) |
| 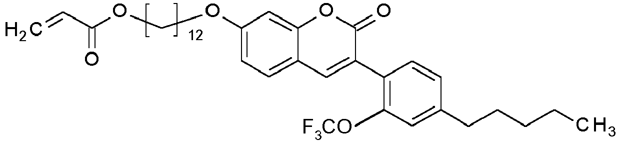 | (M-20) |
| 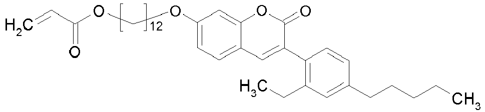 | (M-21) |
| 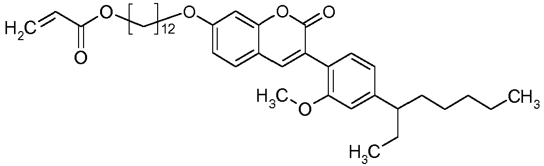 | (M-22) |
| 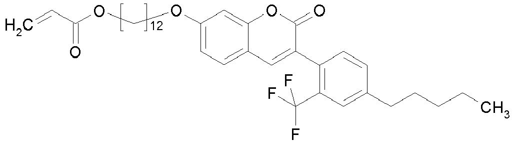 | (M-23) |
| 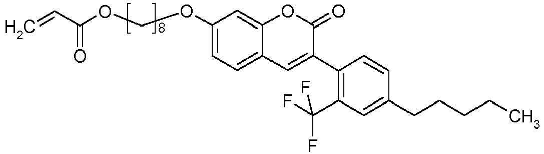 | (M-24) |
| 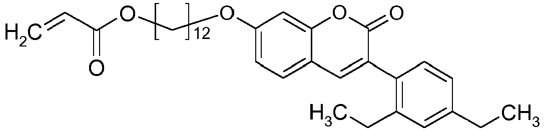 | (M-25) |
| 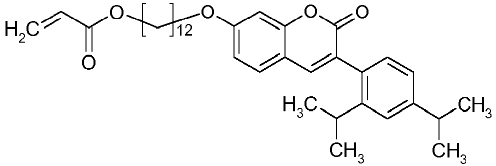 | (M-26) |
| 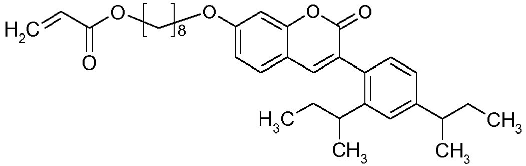 | (M-27) |
| 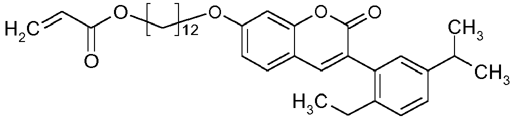 | (M-28) |
| 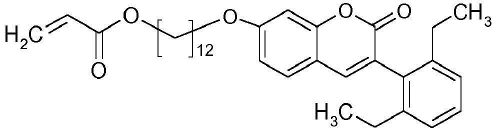 | (M-29) |
| 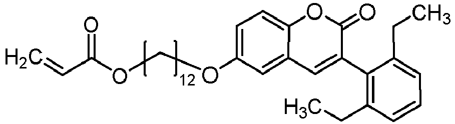 | (M-30) |
| 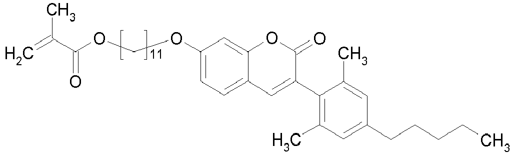 | (M-31) |
| 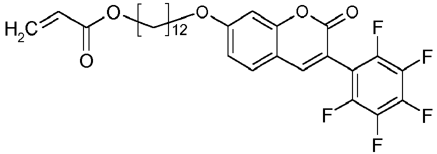 | (M-32) |
| 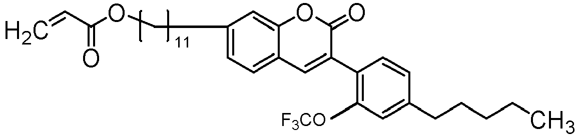 | (M-33) |
| 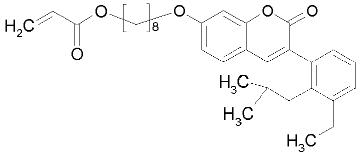 | (M-34) |
| 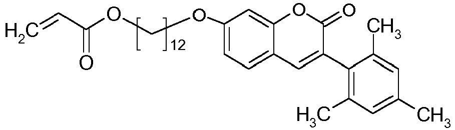 | (M-35) |
| 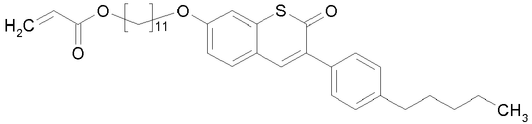 | (M-36) |
| 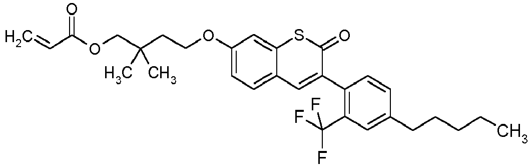 | (M-37) |
| 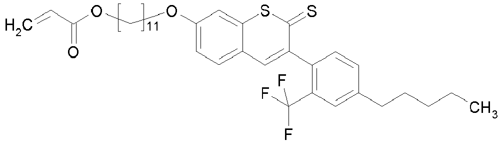 | (M-38) |
| 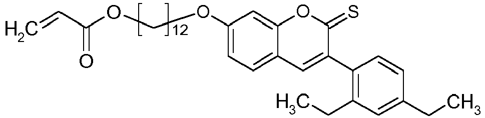 | (M-39) |
| 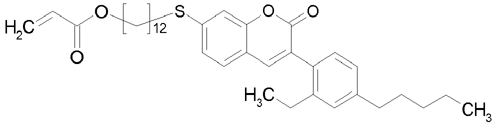 | (M-40) |
| 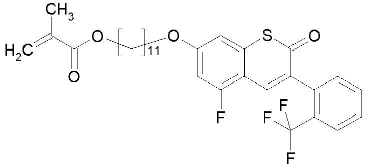 | (M-41) |
| 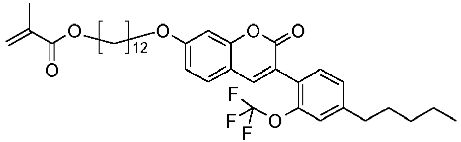 | (M-42) |
| 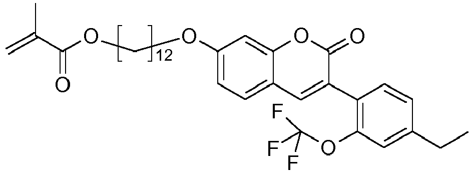 | (M-43) |
| 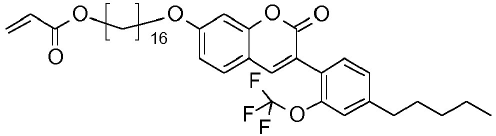 | (M-44) |
| 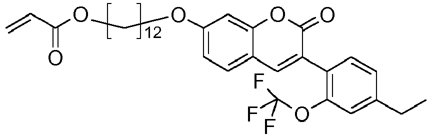 | (M-45) |
| 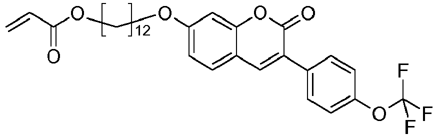 | (M-46) |
| 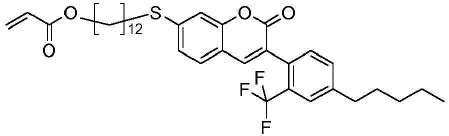 | (M-47) |
| 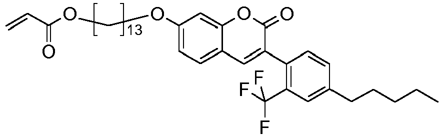 | (M-48) |
| 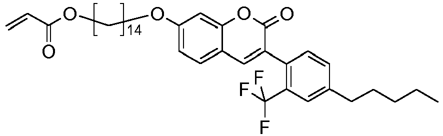 | (M-49) |
| 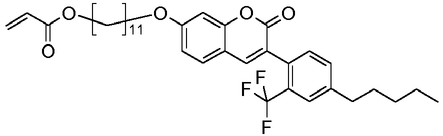 | (M-50) |
| 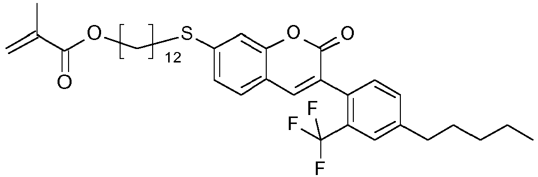 | (M-51) |
| 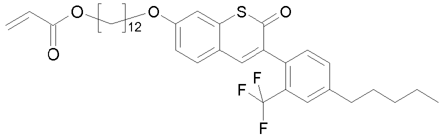 | (M-52) |
| 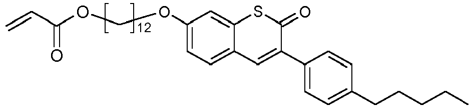 | (M-53) |
| 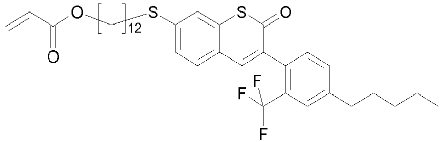 | (M-54) |
| 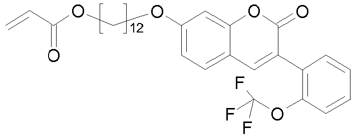 | (M-55) |
| 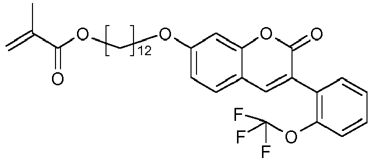 | (M-56) |
| 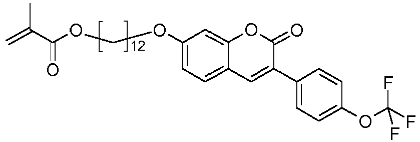 | (M-57) |
| 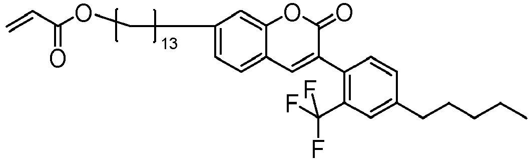 | (M-58) |
| 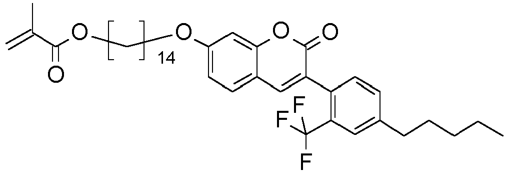 | (M-59) |
| 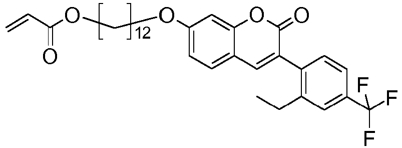 | (M-60) |
| 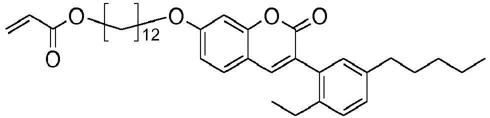 | (M-61) |
| 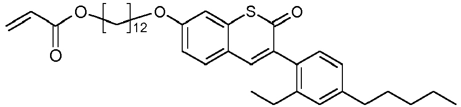 | (M-62) |
| 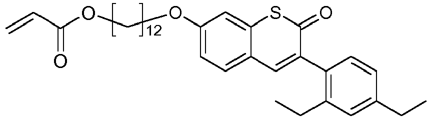 | (M-63). |

Die erfindungsgemäße Zusammensetzung enthält neben einer oder mehrerer Verbindungen der Formel (1), (2), (3), (4), wie zuvor beschrieben oder bevorzugt beschrieben oder den Verbindungen (M-1) bis (M-63) auch mindestens ein hydrophiles Monomer in dem molaren Verhältnis, wie zuvor beschrieben oder nachfolgend bevorzugt beschrieben.

Das hydrophile Monomer, wie zuvor definiert, ist beispielsweise dadurch gekennzeichnet, dass sein entsprechendes Homopolymer in Wasser löslich oder in Wasser quellbar ist. Es zeichnet sich durch die Anwesenheit polarer Gruppen aus, die Wasser koordinieren können, beispielsweise und vorzugsweise OH- oder NH₂-Gruppen.

Geeignete Beispiele für hydrophile Monomere sind 3-Hydroxypropylmethacrylat, 3-Hydroxypropylacrylat, 2-Hydroxyethylmethacrylat, 2-Hydroxyethylacrylat, 4-Hydroxybutylmethacrylat, 4-Hydroxybutylacrylat, Glycerylmethacrylat, Glycerylacrylat, Acrylamid, N-Vinylpyrrolidon, 6-Hydroxyhexylmethacrylat, 6-Hydroxyhexylacrylat, 18-Hydroxyoctadecylmethacrylat, 18-Hydroxyoctadecylacrylat, 11-Hydroxyundecylmethacrylat, 11-Hydroxyundecylacrylat, 12-Hydroxydodecylmethacrylat oder 12-Hydroxydodecylacrylat oder eine Kombination dieser Verbindungen. Das hydrophile Monomer oder die hydrophilen Monomere werden bevorzugt aus Acrylat- oder Methacrylat-Monomeren der oben genannten Gruppe ausgewählt.

Bevorzugte hydrophile Monomere sind n-Hydroxyalkylacrylate und n-Hydroxyalkylmethacrylate mit 1 bis 4- C-Atomen in der Alkylkette. Besonders bevorzugt werden 2-Hydroxyethylmethacrylat (HEMA), 2-Hydroxyethylacrylat (HEA) oder eine Mischung dieser Monomere für die erfindungsgemäße Zusammensetzung ausgewählt.

Ein weiterer Gegenstand der Erfindung ist demzufolge eine Zusammensetzung, wie zuvor beschrieben oder nachfolgend bevorzugt beschrieben, wobei das mindestens eine hydrophile Monomer aus 3-Hydroxypropylmethacrylat 3-Hydroxypropylacrylat, 2-Hydroxyethylmethacrylat, 2-Hydroxyethylacrylat, 4-Hydroxybutylmethacrylat, 4-Hydroxybutylacrylat, Glycerylmethacrylat, Glycerylacrylat, Acrylamid, N-Vinylpyrrolidon, 6-Hydroxyhexylmethacrylat, 6-Hydroxyhexylacrylat, 18-Hydroxyoctadecylmethacrylat, 18-Hydroxyoctadecylacrylat, 11-Hydroxyundecylmethacrylat, 11-Hydroxyundecylacrylat, 12-Hydroxydodecylmethacrylat, 12-Hydroxydodecylacrylat, Ethylenglycolphenyletheracrylat, Ethylenglycolphenylethermethacrylat oder einer Kombination dieser Verbindungen ausgewählt wird.

Die erfindungsgemäße Zusammensetzung enthält neben einer oder mehrerer Verbindungen der Formel (1), (2), (3), (4), wie zuvor beschrieben oder bevorzugt beschrieben oder den Verbindungen (M-1) bis (M-63) auch ein hydrophiles Monomer oder eine Kombination hydrophiler Monomere, wie zuvor beschrieben, wobei das molare Verhältnis der Summe aller Verbindungen der Formel (1) oder der bevorzugten Verbindungen der Formel (1) zur Summe aller hydrophilen Monomere bevorzugt 1:0,56 bis 1:1,2 beträgt oder besonders bevorzugt 1:0,6 bis 1:1 beträgt.

Die erfindungsgemäße Zusammensetzung kann neben einer oder mehrerer Verbindungen der Formel (1), (2), (3), (4), wie zuvor beschrieben oder bevorzugt beschrieben oder den Verbindungen (M-1) bis (M-63) und den hydrophilen Monomeren, wie zuvor beschrieben, in den genannten molaren Verhältnissen, mindestens ein weiteres nicht hydrophiles Monomer, welches nicht der Formel (1) entspricht und/oder mindestens einen Blauabsorber enthalten.

Ein weiterer Gegenstand der Erfindung ist daher die Zusammensetzung, wie zuvor beschrieben oder bevorzugt beschrieben, dadurch gekennzeichnet, dass sie mindestens ein weiteres nicht hydrophiles Monomer, welches nicht der Formel (1) oder einer bevorzugten Ausführungsform der Verbindungen der Formel (1) entspricht, enthält.

Ein weiterer Gegenstand der Erfindung ist daher die Zusammensetzung, wie zuvor beschrieben oder bevorzugt beschrieben, dadurch gekennzeichnet, dass sie mindestens einen Blauabsorber enthält.

Geeignete Blauabsorber sind Stoffe, die im blauen Wellenlängenbereich des sichtbaren Lichts Absorption zeigen. Bevorzugt wird ein Blauabsorber ausgewählt, der ebenfalls ein Acrylat oder ein Methacrylat ist und bei der Polymerisation als weiteres Monomer zur Verfügung steht. Aus der Literatur sind geeignete Blauabsorber bekannt, beispielsweise aus WO 2012/167124. Ein besonders bevorzugter Blauabsorber ist N-2-[3-(2'-methylphenylazo)-4-hydroxyphenylethyl]ethylmethacrylamid. Sie können der erfindungsgemäßen Zusammensetzung zugesetzt werden, damit die polymerisierte Zusammensetzung neben dem UV-Licht auch kurzwelliges sichtbares Licht filtern kann, um damit die Netzhaut besser zu schützen, wenn das Material zur Herstellung eines ophthalmologischen Produkts verwendet wird.

Das nicht hydrophile Monomer oder die nicht hydrophilen Monomere, welche(s) nicht der Formel (1) oder einer bevorzugten Ausführungsform der Verbindungen der Formel (1) entspricht/entsprechen, können zur weiteren Optimierung der Zusammensetzung und des entsprechenden resultierenden Copolymeren zugesetzt werden. Es handelt sich hier um eine polymerisierbare Substanz, die weitere unsubstituierte oder substituierte aliphatische Reste und/oder unsubstituierte oder substituierte aromatische Reste und/oder Sulfidbindungenund/oder fluorierte Reste trägt. Bei Wahl eines substituierten aliphatischen oder aromatischen Restes sind diese vorzugsweise durch mindestens einen Substituenten R# substituiert, wobei R# bei jedem Auftreten unabhängig voneinander F, Cl, Br, I, eine geradkettige oder verzweigte Alkylgruppe mit 1 bis 20 C-Atomen, eine geradkettige oder verzweigte Alkoxygruppe mit 1 bis 20 C-Atomen, eine teilweise oder vollständig halogenierte geradkettige oder verzweigte Alkylgruppe mit 1 bis 20 C-Atomen, eine teilweise oder vollständig halogenierte geradkettige oder verzweigte Alkoxygruppe mit 1 bis 20 C-Atomen, eine Cycloalkylgruppe mit 5 bis 8 C-Atomen, eine Arylalkoxygruppe mit 7 bis 20 C-Atomen oder eine Aryl- oder Heteroarylgruppe mit 5 bis 40 Ringatomen bedeutet, wobei die Aryl- oder Heteroarylgruppe oder die Arylgruppe als Teil der Arylalkkoxygruppe mit einer geradkettigen oder verzweigten Alkylgruppe mit 1 bis 12 C-Atomen oder einer Cycloalkylgruppe mit 5 bis 8 C-Atomen substituiert sein kann.

Beispiele für nicht hydrophile Monomere sind: n-Butylacrylat, n-Butylmethacrylat, Ethylmethacrylat, Ethylacrylat, Methylmethacrylat, Methylacrylat, n-Propylmethacrylat, n-Propylacrylat, iso-Propylmethacrylat, iso-Propylacrylat, n-Pentylacrylat, n-Pentylmethacrylat, iso-Pentylmethacrylat, iso-Pentylacrylat, s-Butylacrylat, s-Butylmethacrylat, n-Hexylacrylat, n-Hexylmethacrylat, s-Pentylacrylat, s-Pentylmethacrylat, iso-Hexylacrylat, iso-Hexylmethacrylat, n-Octylacrylat, n-Octylmethacrylat, isoOctylacrylat, iso-Octylmethacrylat, n-Nonylacrylat, n-Nonylmethacrylat, n-Decylacrylat, n-Decylmethacrylat, n-Undecylacrylat, n-Undecylmethacrylat, n-Dodecyllacrylat, n-Dodecylmethacrylat, n-Octadecylacrylat, n-Octadecylmethacrylat, 2-Ethylhexylacrylat, 2-Ethylhexylmethacrylat, n-Dodecylacrylat, n-Dodecylmethacrylat, n-Tridecylacrylat, n-Tridecylmethacrylat, n-Tetradecylacrylat, n-Tetradecylmethacrylat, n-Pentadecylacrylat, n-Pentadecylmethacrylat, n-Hexadecylacrylat, n-Hexadecylmethacrylat, 2,2-Dimethylpropylacrylat, 2,2-Dimethylpropylmethacrylat, Trimethylcyclohexylacrylat, Trimethylcyclohexylmethacrylat, iso-Butylacrylat, iso-Butylmethacrylat, 2-(4-Bromphenyl)ethylmethacrylat, 4-Phenylbutylmethacrylat, 4-Methylphenylmethacrylat, Phenylmethacrylat, 4-Methylphenylacrylat, Benzylacrylat, Benzylmethacrylat, 2-Benzyloxyethylmethacrylat, 3-Benzyloxypropylmethacrylat, Phenylethylacrylat, Phenylethylmethacrylat, 3-Phenylpropylmethacrylat, 2-Phenoxyethylacrylat, 2-Benzyloxyethylacrylat, 3-Phenylpropylacrylat, 4-Methylbenzylacrylat, Phenylacrylat, 2-(Phenylthio)ethylmethacrylat, 4-Phenylbutylacrylat, 5-Phenylpentylacrylat, 3-Benzyloxypropylacrylat, 2-(Phenylthio)propylacrylat, 2-(Phenylthio)ethylacrylat, 4-Phenylbutylacrylat, 4-Methylbenzylmethacrylat, 2-(2-Methylphenyl)ethylacrylat, 2-(2-Methylphenyl)ethylmethacrylat, 2-(3-Methylphenyl)ethylacrylat, 2-(3-Methylphenyl)ethylmethacrylat, 2-(4-Methylphenyl)ethylacrylat, 2-(4-Methylphenyl)ethylmethacrylat, 2-(4-Propylphenyl)ethylacrylat, 2-(4-Propylphenyl)ethylmethacrylat, 2-(4-(1-Methylethyl)phenyl)ethylacrylat, 2-(4-(1-Methylethyl)phenyl)ethylmethacrylat, 2-(4-Methoxyphenyl)ethylmethacrylat, 2-(4-Methoxyphenyl)ethylacrylat, 2-(4-Cyclohexylphenyl)ethylacrylat, 2-(4-Cyclohexylphenyl)ethylmethacrylat, 2-(4-Chlorphenyl)ethylmethacrylat, 2-(4-Chlorphenyl)ethylacrylat, 2-(3-Chlorphenyl)ethylmethacrylat, 2-(3-Chlorphenyl)ethylacrylat, 2-(2-Chlorphenyl)ethylmethacrylat, 2-(2-Chlorphenyl)ethylacrylat, 2-(4-Bromphenyl)ethylacrylat, 2-(4-Phenylphenyl)ethylmethacrylat, 2-(4-Phenylphenyl)ethylacrylat, 2-(3-Phenylphenyl)ethylmethacrylat, 2-(3-Phenylphenyl)ethylacrylat, 2-(4-Benzylphenyl)ethylmethacrylat, 2-(4-Benzylphenyl)ethylacrylat, 2-(Phenylthio)ethylacrylat, 3-Benzyloxypropylacrylat, 2-[2-(Benzyloxy)ethoxy]ethylacrylat, 2-[2-(Benzyloxy)ethoxy]ethylmethacrylat, Pentafluorphenylmethacrylat, Heptadecafluordecylmethacrylat, Dodecafluorheptylmethacrylat, Heptadecafluorodecylacrylat, Trifluorethylmethacrylat, Octafluorpentylmethacrylat, Hexafluorbutylmethacrylat, Octafluorpentylacrylat, Trifluorethylacrylat, Heptafluorbutylacrylat, Tetrafluorpropylmethacrylat, Hexafluorbutylacrylat, Pentafluorphenylacrylate, Hexafluor-iso-propylmethacrylat.

Bevorzugte nicht hydrophile Monomere sind Phenoxyalkylacrylate, Phenoxyalkylmethacrylate, Alkylacrylate und Alkylmethacrylate mit einer Kettenlänge von 8 bis 20 C-Atomen, sowie Phenylalkoxyacrylate, Phenylalkoxymethacrylate, Phenylalkoxyalkylacrylate und Phenylalkoxyalkylmethacrylate mit einer Kettenlänge der Alkylen- bzw. Alkyloxygruppe von 1 bis 8 C-Atomen, die vorzugsweise geradkettig sind.

Besonders bevorzugt wird als nicht hydrophiles Monomer n-Octadecylmethacrylat (C18MA) oder 2-Phenoxyethylacrylat (EGPEA) oder eine Kombination dieser Verbindungen ausgewählt. Eine synonyme Bezeichnung für 2-Phenoxyethylacrylat ist Ethylenglycolphenyletheracrylat. Ein weiterer Gegenstand der Erfindung ist eine Zusammensetzung, wie zuvor beschrieben oder als bevorzugt beschrieben, wobei mindestens ein nicht hydrophiles Monomer ausgewählt aus n-Butylacrylat, n-Butylmethacrylat, Ethylmethacrylat, Ethylacrylat, Methylmethacrylat, Methylacrylat, n-Propylmethacrylat, n-Propylacrylat, iso-Propylmethacrylat, iso-Propylacrylat, n-Pentylacrylat, n-Pentylmethacrylat, iso-Pentylmethacrylat, iso-Pentylacrylat, s-Butylacrylat, s-Butylmethacrylat, n-Hexylacrylat, n-Hexylmethacrylat, s-Pentylacrylat, s-Pentylmethacrylat, iso-Hexylacrylat, iso-Hexylmethacrylat, n-Octylacrylat, n-Octylmethacrylat, isoOctylacrylat, iso-Octylmethacrylat, n-Nonylacrylat, n-Nonylmethacrylat, n-Decylacrylat, n-Decylmethacrylat, n-Undecylacrylat, n-Undecylmethacrylat, n-Dodecyllacrylat, n-Dodecylmethacrylat, n-Octadecylacrylat, n-Octadecylmethacrylat, 2-Ethylhexylacrylat, 2-Ethylhexylmethacrylat, n-Dodecylacrylat, n-Dodecylmethacrylat, n-Tridecylacrylat, n-Tridecylmethacrylat, n-Tetradecylacrylat, n-Tetradecylmethacrylat, n-Pentadecylacrylat, n-Pentadecylmethacrylat, n-Hexadecylacrylat, n-Hexadecylmethacrylat, 2,2-Dimethylpropylacrylat, 2,2-Dimethylpropylmethacrylat, Trimethylcyclohexylacrylat, Trimethylcyclohexylmethacrylat, iso-Butylacrylat, iso-Butylmethacrylat, 2-(4-Bromphenyl)ethylmethacrylat, 4-Phenylbutylmethacrylat, 4-Methylphenylmethacrylat, Phenylmethacrylat, 4-Methylphenylacrylat, Benzylacrylat, Benzylmethacrylat, 2-Benzyloxyethylmethacrylat, 3-Benzyloxypropylmethacrylat, Phenylethylacrylat, Phenylethylmethacrylat, 3-Phenylpropylmethacrylat, 2-Phenoxyethylacrylat, 2-Benzyloxyethylacrylat, 3-Phenylpropylacrylat, 4-Methylbenzylacrylat, Phenylacrylat, 2-(Phenylthio)ethylmethacrylat, 4-Phenylbutylacrylat, 5-Phenylpentylacrylat, 3-Benzyloxypropylacrylat, 2-(Phenylthio)propylacrylat, 2-(Phenylthio)ethylacrylat, 4-Phenylbutylacrylat, 4-Methylbenzylmethacrylat, 2-(2-Methylphenyl)ethylacrylat, 2-(2-Methylphenyl)ethylmethacrylat, 2-(3-Methylphenyl)ethylacrylat, 2-(3-Methylphenyl)ethylmethacrylat, 2-(4-Methylphenyl)ethylacrylat, 2-(4-Methylphenyl)ethylmethacrylat, 2-(4-Propylphenyl)ethylacrylat, 2-(4-Propylphenyl)ethylmethacrylat, 2-(4-(1-Methylethyl)phenyl)ethylacrylat, 2-(4-(1-Methylethyl)phenyl)ethylmethacrylat, 2-(4-Methoxyphenyl)ethylmethacrylat, 2-(4-Methoxyphenyl)ethylacrylat, 2-(4-Cyclohexylphenyl)ethylacrylat, 2-(4-Cyclohexylphenyl)ethylmethacrylat, 2-(4-Chlorphenyl)ethylmethacrylat, 2-(4-Chlorphenyl)ethylacrylat, 2-(3-Chlorphenyl)ethylmethacrylat, 2-(3-Chlorphenyl)ethylacrylat, 2-(2-Chlorphenyl)ethylmethacrylat, 2-(2-Chlorphenyl)ethylacrylat, 2-(4-Bromphenyl)ethylacrylat, 2-(4-Phenylphenyl)ethylmethacrylat, 2-(4-Phenylphenyl)ethylacrylat, 2-(3-Phenylphenyl)ethylmethacrylat, 2-(3-Phenylphenyl)ethylacrylat, 2-(4-Benzylphenyl)ethylmethacrylat, 2-(4-Benzylphenyl)ethylacrylat, 2-(Phenylthio)ethylacrylat, 3-Benzyloxypropylacrylat, 2-[2-(Benzyloxy)ethoxy]ethylacrylat, 2-[2-(Benzyloxy)ethoxy]ethylmethacrylat, Pentafluorphenylmethacrylat, Heptadecafluordecylmethacrylat, Dodecafluorheptylmethacrylat, Heptadecafluorodecylacrylat, Trifluorethylmethacrylat, Octafluorpentylmethacrylat, Hexafluorbutylmethacrylat, Octafluorpentylacrylat, Trifluorethylacrylat, Heptafluorbutylacrylat, Tetrafluorpropylmethacrylat, Hexafluorbutylacrylat, Pentafluorphenylacrylate, Hexafluor-iso-propylmethacrylat oder eine Kombination dieser Verbindungen enthalten ist.

In den erfindungsgemäßen Zusammensetzungen, wie zuvor beschrieben, ist/sind auch mindestens ein Quervernetzer und mindestens ein UV-Absorber enthalten. Dabei ist es auch möglich, dass eine Substanz beide Eigenschaften übernimmt, d.h. zugleich Quervernetzer und UV-Absorber ist.

Bei einem Quervernetzer handelt es sich um ein Monomer mit mindestens zwei polymerisierbaren Gruppen. Bevorzugt besitzt der Quervernetzer zwei polymerisierbare Gruppen. Optional kann der Quervernetzer auch funktionelle Gruppen enthalten, die in der Lage sind, Wasser zu koordinieren, wie beispielsweise OH- oder NH₂-Gruppen. Derartig funktionalisierte Quervernetzer sind ebenfalls geeignete hydrophile Monomere im Sinn der Erfindung und werden bevorzugt in Kombination mit den zuvor beschriebenen hydrophilen Monomeren eingesetzt.

Beispiele für Quervernetzer sind:
Para-Divinylbenzol, Allylacrylat, Ethyleneglycol-Divinylether, Divinylsulfon, Allylmethacrylat, N,N'-Methylen-bis-Acrylamid, Ethylenglycoldiacrylat, N,N'-Methylen-bis-Methacrylamid, 1,3-Propandioldiacrylat, 2,3-Propandioldiacrylat, 1,4-Butandioldiacrylat, 1,3-Butandioldiacrylat, 1,5-Pentandioldiacrylat, 1,6-Hexandioldiacrylat, 1,7-Heptandioldiacrylat, 1,8-Octandioldiacrylat, 1,9-Nonandioldiacrylat, 1,10-Decandioldiacrylat, 1,11-Undecandioldiacrylat, 1,12-Dodecandioldiacrylat, 1,13-Tridecandioldiacrylat, 1,14-Tetradecandioldiacrylat, 1,15-Pentadecandioldiacrylat, 1,16-Hexadecandioldiacrylat, 1,17-Heptadecandioldiacrylat, 1,18-Octadecandioldiacrylat, 1,19-Nonadecandioldiacrylat, 1,20-Eicosandioldiacrylat, 1,21-Heneicosandioldiacrylat, 1,22-Docosandioldiacrylat, 1,23-Tricosandioldiacrylat, 1,24-Tetracosandioldiacrylat, Ethylenglycoldimethacrylat, N,N'-Dihydroxyethylenbisacrylamid, Thiodiethylenglycoldiacrylat, 1,3-Propandioldimethacrylat, 2,3-Propandioldimethacrylat, 1,3-Butandioldimethacrylat, 1,4-Butandioldimethacrylat, 1,5-Pentandioldimethacrylat, 1,6-Hexandioldimethacrylat, 1,7-Heptandioldimethacrylat, 1,8-Octandioldimethacrylat, 1,9-Nonandioldimethacrylat, 1,10-Decandioldimethacrylat, 1,11-Undecandioldimethacrylat, 1,12-Dodecandioldimethacrylat, 1,13-Tridecandioldimethacrylat, 1,14-Tetradecandioldimethacrylat, 1,15-Pentadecandioldimethacrylat, 1,16-Hexadecandioldimethacrylat, 1,17-Heptadecandioldimethacrylat, 1,18-Octadecandioldimethacrylat, 1,19-Nonadecandioldimethacrylat, 1,20-Eicosandioldimethacrylat, 1,21-Heneicosandioldimethacrylat, 1,22-Docosandioldimethacrylat, 1,23-Tricosandioldimethacrylat, 1,24-Tetracosandioldimethacrylat, 2-(Acryloyloxy)-ethyl methacrylat, 2-(Acryloyloxy)-propyl methacrylat, 3-(Acryloyloxy)-propyl methacrylat, 4-(Acryloyloxy)-butyl methacrylat, 5-(Acryloyloxy)-pentyl methacrylat, 6-(Acryloyloxy)-hexyl methacrylat, 7-(Acryloyloxy)-heptyl methacrylat, 8-(Acryloyloxy)-octyl methacrylat, 9-(Acryloyloxy)-nonyl methacrylat, 10-(Acryloyloxy)-decyl methacrylat, 11-(Acryloyloxy)-undecyl methacrylat, 12-(Acryloyloxy)-dodecyl methacrylat, 13-(Acryloyloxy)-tridecyl methacrylat, 14-(Acryloyloxy)-tetradecyl methacrylat, 15-(Acryloyloxy)-pentadecyl methacrylat, 16-(Acryloyloxy)-hexadecyl methacrylat, 17-(Acryloyloxy)-heptadecyl methacrylat, 18-(Acryloyloxy)-octadecyl methacrylat, 19-(Acryloyloxy)-nonadecyl methacrylat, 20-(Acryloyloxy)-eicosanyl methacrylat, 21-(Acryloyloxy)-heneicosanyl methacrylat, 22-(Acryloyloxy)-docosanyl methacrylat, 23-(Acryloyloxy)-tricosanyl methacrylat, 24-(Acryloyloxy)-tetracosanyl methacrylat, Neopentylglycoldiacrylat, Di(ethylenglycol)diacrylat, N,N'-Hexamethylenbisacrylamid, Thiodiethylenglycoldiacrylat, Thiodiethylenglycoldimethacrylat, Neopentylglycoldimethacrylat, Diethylenglycoldimethacrylat, Diallylphthalat, Triallylcyanurat, Glyceryl-1,3-dimethacrylat, N,N'-Hexamethylenbismethacrylamid, Tri(ethylenglycol)diacrylat, Tri(ethylenglycol)dimethacrylat, Tetra(ethylenglycol)diacrylat, Tetra(ethylenglycol)dimethacrylat, Penta(ethylenglycol)diacrylat, Penta(ethylenglycol)dimethacrylat, Hexa(ethylenglycol)diacrylat, Hexa(ethylenglycol)dimethacrylat, Poly(ethylenglycol)dimethacrylat, Poly(ethylenglycol)diacrylat.

Bevorzugte Quervernetzer sind Ethylenglycoldimethacrylat, 1,3-Propandioldiacrylat, 2,3-Propandioldiacrylat, 1,4-Butandioldiacrylat, 1,3-Butandioldiacrylat, 1,5-Pentandioldiacrylat, 1,6-Hexandioldiacrylat, 1,7-Heptandioldiacrylat, 1,8-Octandioldiacrylat, 1,9-Nonandioldiacrylat, 1,10-Decandioldiacrylat, 1,11-Undecandioldiacrylat, 1,12-Dodecandioldiacrylat, 1,13-Tridecandioldiacrylat, 1,14-Tetradecandioldiacrylat, 1,15-Pentadecandioldiacrylat, 1,16-Hexadecandioldiacrylat, 1,17-Heptadecandioldiacrylat, 1,18-Octadecandioldiacrylat, 1,19-Nonadecandioldiacrylat, 1,20-Eicosandioldiacrylat, 1,21-Heneicosandioldiacrylat, 1,22-Docosandioldiacrylat, 1,23-Tricosandioldiacrylat, 1,24-Tetracosandioldiacrylat, 1,3-Propandioldimethacrylat, 2,3-Propandioldimethacrylat, 1,3-Butandioldimethacrylat, 1,4-Butandioldimethacrylat, 1,5-Pentandioldimethacrylat, 1,6-Hexandioldimethacrylat, 1,7-Heptandioldimethacrylat, 1,8-Octandioldimethacrylat, 1,9-Nonandioldimethacrylat, 1,10-Decandioldimethacrylat, 1,11-Undecandioldimethacrylat, 1,12-Dodecandioldimethacrylat, 1,13-Tridecandioldimethacrylat, 1,14-Tetradecandioldimethacrylat, 1,15-Pentadecandioldimethacrylat, 1,16-Hexadecandioldimethacrylat, 1,17-Heptadecandioldimethacrylat, 1,18-Octadecandioldimethacrylat, 1,19-Nonadecandioldimethacrylat, 1,20-Eicosandioldimethacrylat, 1,21-Heneicosandioldimethacrylat, 1,22-Docosandioldimethacrylat, 1,23-Tricosandioldimethacrylat, 1,24-Tetracosandioldimethacrylat, Glyceryl-1,3-dimethacrylat und Diallylphthalat.

Ganz besonders bevorzugt wird Glyceryl-1,3-dimethacrylat (GDMA), Ethylenglycoldimethacrylat (EGDMA), Penta(ethylenglycol)dimethacrylat, Hexa(ethylenglycol)dimethacrylat oder eine Kombination dieser Verbindungen erfindungsgemäß ausgewählt.

Besonders bevorzugte Quervernetzer sind Ethylenglycoldimethacrylat, 1,3-Propandioldiacrylat, 1,4-Butandioldimethacrylat, 1,6-Hexandioldimethacrylat, 1,18-Octadecandioldiacrylat, 1,18-Octadecandioldimethacrylat, Glyceryl-1,3-dimethacrylat und Diallylphthalat. Ganz besonders bevorzugt wird Glyceryl-1,3-dimethacrylat (GDMA), Ethylenglycoldimethacrylat (EGDMA), Penta(ethylenglycol)dimethacrylat, Hexa(ethylenglycol)dimethacrylat, 1,18-Octadecandioldiacrylat, 1,18-Octadecandioldimethacrylat, 18-(Acryloyloxy)-octadecyl methacrylat, 1-Acryloyl-18-octadecandioldimethacrylat oder eine Kombination dieser Verbindungen erfindungsgemäß ausgewählt.

Ein weiterer Gegenstand der Erfindung ist demzufolge eine Zusammensetzung, wie zuvor beschrieben oder nachfolgend bevorzugt beschrieben, wobei der Quervernetzer aus der Gruppe Para-Divinylbenzol, Allylacrylat, Ethyleneglycol-Divinylether, Divinylsulfon, Allylmethacrylat, N,N'-Methylen-bis-Acrylamid, Ethylenglycoldiacrylat, N,N'-Methylen-bis-Methacrylamid, 1,3-Propandioldiacrylat, 2,3-Propandioldiacrylat, 1,4-Butandioldiacrylat, 1,3-Butandioldiacrylat, 1,5-Pentandioldiacrylat, 1,6-Hexandioldiacrylat, 1,7-Heptandioldiacrylat, 1,8-Octandioldiacrylat, 1,9-Nonandioldiacrylat, 1,10-Decandioldiacrylat, 1,11-Undecandioldiacrylat, 1,12-Dodecandioldiacrylat, 1,13-Tridecandioldiacrylat, 1,14-Tetradecandioldiacrylat, 1,15-Pentadecandioldiacrylat, 1,16-Hexadecandioldiacrylat, 1,17-Heptadecandioldiacrylat, 1,18-Octadecandioldiacrylat, 1,19-Nonadecandioldiacrylat, 1,20-Eicosandioldiacrylat, 1,21-Heneicosandioldiacrylat, 1,22-Docosandioldiacrylat, 1,23-Tricosandioldiacrylat, 1,24-Tetracosandioldiacrylat, Ethylenglycoldimethacrylat, N,N'-Dihydroxyethylenbisacrylamid, Thiodiethylenglycoldiacrylat, 1,3-Propandioldimethacrylat, 2,3-Propandioldimethacrylat, 1,3-Butandioldimethacrylat, 1,4-Butandioldimethacrylat, 1,5-Pentandioldimethacrylat, 1,6-Hexandioldimethacrylat, 1,7-Heptandioldimethacrylat, 1,8-Octandioldimethacrylat, 1,9-Nonandioldimethacrylat, 1,10-Decandioldimethacrylat, 1,11-Undecandioldimethacrylat, 1,12-Dodecandioldimethacrylat, 1,13-Tridecandioldimethacrylat, 1,14-Tetradecandioldimethacrylat, 1,15-Pentadecandioldimethacrylat, 1,16-Hexadecandioldimethacrylat, 1,17-Heptadecandioldimethacrylat, 1,18-Octadecandioldimethacrylat, 1,19-Nonadecandioldimethacrylat, 1,20-Eicosandioldimethacrylat, 1,21-Heneicosandioldimethacrylat, 1,22-Docosandioldimethacrylat, 1,23-Tricosandioldimethacrylat, 1,24-Tetracosandioldimethacrylat, 2-(Acryloyloxy)-ethyl methacrylat, 2-(Acryloyloxy)-propyl methacrylat, 3-(Acryloyloxy)-propyl methacrylat, 4-(Acryloyloxy)-butyl methacrylat, 5-(Acryloyloxy)-pentyl methacrylat, 6-(Acryloyloxy)-hexyl methacrylat, 7-(Acryloyloxy)-heptyl methacrylat, 8-(Acryloyloxy)-octyl methacrylat, 9-(Acryloyloxy)-nonyl methacrylat, 10-(Acryloyloxy)-decyl methacrylat, 11-(Acryloyloxy)-undecyl methacrylat, 12-(Acryloyloxy)-dodecyl methacrylat, 13-(Acryloyloxy)-tridecyl methacrylat, 14-(Acryloyloxy)-tetradecyl methacrylat, 15-(Acryloyloxy)-pentadecyl methacrylat, 16-(Acryloyloxy)-hexadecyl methacrylat, 17-(Acryloyloxy)-heptadecyl methacrylat, 18-(Acryloyloxy)-octadecyl methacrylat, 19-(Acryloyloxy)-nonadecyl methacrylat, 20-(Acryloyloxy)-eicosanyl methacrylat, 21-(Acryloyloxy)-heneicosanyl methacrylat, 22-(Acryloyloxy)-docosanyl methacrylat, 23-(Acryloyloxy)-tricosanyl methacrylat, 24-(Acryloyloxy)-tetracosanyl methacrylat, Neopentylglycoldiacrylat, Di(ethylenglycol)diacrylat, N,N'-Hexamethylenbisacrylamid, Thiodiethylenglycoldiacrylat, Thiodiethylenglycoldimethacrylat, Neopentylglycoldimethacrylat, Diethylenglycoldimethacrylat, Diallylphthalat, Triallylcyanurat, Glyceryl-1,3-dimethacrylat, N,N'-Hexamethylenbismethacrylamid, Tri(ethylenglycol)diacrylat, Tri(ethylenglycol)dimethacrylat, Tetra(ethylenglycol)diacrylat, Tetra(ethylenglycol)dimethacrylat, Penta(ethylenglycol)diacrylat, Penta(ethylenglycol)dimethacrylat, Hexa(ethylenglycol)diacrylat, Hexa(ethylenglycol)dimethacrylat, Poly(ethylenglycol)dimethacrylat, Poly(ethylenglycol)diacrylat oder einer Kombination dieser Verbindungen ausgewählt wird.

Bei dem erfindungsgemäß auszuwählenden UV-Absorber handelt es sich um ein Molekül mit polymerisierbarer Gruppe und starker Absorption im UV-Bereich.

Beispiele für UV-Absorber sind:
3-(3-(tert-Butyl)-4-hydroxy-5-(5-methoxy-2H-benzo[d][1,2,3]triazol-2-yl)phenoxy)propylmethacrylat, 2-(2-Hydroxy-5-vinylphenyl)-2H-benzotriazol, Allyl-2-hydroxybenzophenon, 2-Allyl-6-(2*H*-benzotriazol-2-yl)-*p*-cresol, 4-Methacryloxy-2-hydroxybenzophenon, 2-(2'-Hydroxy-3'-methallyl-5'-methylphenyl)benzotriazol, 2-Hydroxy-4-methacryloyloxybenzophenon, 4-Acryloylethoxy-2-hydroxybenzophenon, 2-[3-(2H-Benzotriazol-2-yl)-4-hydroxyphenyl]ethylmethacrylat, 2-(2'-Hydroxy-5'-methacrylamidophenyl)-5-methoxybenzotriazol, 2-(2'-Hydroxy-5'-methacrylamidophenyl)-5-chlorobenzotriazol, 2-(2'-Hydroxy-5'-methacryloxypropylphenyl)benzotriazol, 2-(2'-Hydroxy-5'-methacryloylpropyl-3'-tert-butyl-phenyl)-5-methoxy-2H-benzotriazol, 2-(3-(tert-Butyl)-4-hydroxy-5-(5-methoxy-2H-benzo[d][1,2,3]triazol-2-yl)phenoxy)ethylmethacrylat, 2-[3'-tert-Butyl-2'-hydroxy-5'-(3"-methacryloyloxypropyl)phenyl]-5-chlorbenzotriazol, 2-{2'-Hydroxy-3'-tert-butyl-5'-[3'-methacryloyloxypropoxy]phenyl}-5-methoxy-2H-benzotriazol, 2-[3'tert-Butyl-5'-(3"-dimethylvinylsilylpropoxy)-2'-hydroxyphenyl]-5-methoxybenzotriazol, 2-(tert-Butyl)-6-(5-chloro-2H-benzo[d][1,2,3]triazol-2-yl)-4-vinylphenol, 2-(2H-1,2,3-benzotriazol-2-yl)-4-methyl-6-(2-methylprop-2-enyl)phenol, 2-(3-acetyl-2-aminophenoxy)ethyl methacrylat, 2-(4-benzoyl-3-hydroxyphenoxy)ethyl acrylat.

Bevorzugte UV-Absorber sind Methacrylate bzw. Acrylate von Phenyltriazolen oder Benzotriazolen, bevorzugt von Benzotriazolen.

Ein besonders bevorzugter UV-Absorber ist 2-[3-(2H-Benzotriazol-2-yl)-4-hydroxyphenyl]ethylmethacrylat oder 3-(3-(tert-Butyl)-4-hydroxy-5-(5-methoxy-2H-benzo[d][1,2,3]triazol-2-yl)phenoxy)propylmethacrylat.

Ein weiterer Gegenstand der Erfindung ist demzufolge eine Zusammensetzung, wie zuvor beschrieben oder nachfolgend bevorzugt beschrieben, wobei der UV-Absorber aus der Gruppe 3-(3-(tert-Butyl)-4-hydroxy-5-(5-methoxy-2H-benzo[d][1,2,3]triazol-2-yl)phenoxy)propylmethacrylat, 2-(2-Hydroxy-5-vinylphenyl)-2H-benzotriazol, Allyl-2-hydroxybenzophenon, 2-Allyl-6-(2*H*-benzotriazol-2-yl)-*p*-cresol, 4-Methacryloxy-2-hydroxybenzophenon, 2-(2'-Hydroxy-3'-methallyl-5'-methylphenyl)benzotriazol, 2-Hydroxy-4-methacryloyloxybenzophenon, 4-Acryloylethoxy-2-hydroxybenzophenon, 2-[3-(2H-Benzotriazol-2-yl)-4-hydroxyphenyl]ethylmethacrylat, 2-(2'-Hydroxy-5'-methacrylamidophenyl)-5-methoxybenzotriazol, 2-(2'-Hydroxy-5'-methacrylamidophenyl)-5-chlorobenzotriazol, 2-(2'-Hydroxy-5'-methacryloxypropylphenyl)benzotriazol, 2-(2'-Hydroxy-5'-methacryloylpropyl-3'-tert-butyl-phenyl)-5-methoxy-2H-benzotriazol, 2-(3-(tert-Butyl)-4-hydroxy-5-(5-methoxy-2H-benzo[d][1,2,3]triazol-2-yl)phenoxy)ethylmethacrylat, 2-[3'-tert-Butyl-2'-hydroxy-5'-(3"-methacryloyloxypropyl)phenyl]-5-chlorbenzotriazol, 2-{2'-Hydroxy-3'-tert-butyl-5'-[3'-methacryloyloxypropoxy]phenyl}-5-methoxy-2H-benzotriazol, 2-[3'tert-Butyl-5'-(3"-dimethylvinylsilylpropoxy)-2'-hydroxyphenyl]-5-methoxybenzotriazol, 2-(tert-Butyl)-6-(5-chloro-2H-benzo[d][1,2,3]triazol-2-yl)-4-vinylphenol, 2-(2H-1,2,3-benzotriazol-2-yl)-4-methyl-6-(2-methylprop-2-enyl)phenol, 2-(3-acetyl-2-aminophenoxy)ethyl methacrylat, 2-(4-benzoyl-3-hydroxyphenoxy)ethyl acrylat oder einer Kombination dieser Verbindungen ausgewählt wird.

Ein weiterer Gegenstand der Erfindung ist eine Zusammensetzung, wie zuvor beschrieben oder bevorzugt beschrieben, dadurch gekennzeichnet, dass
1 molares Äquivalent einer Verbindung der Formel (1) oder einer bevorzugten Verbindung der Formel (1), wie zuvor beschrieben, oder 1 molares Äquivalent der Summe aller Verbindungen der Formel (1), wie zuvor beschrieben oder bevorzugt beschrieben;
0,51 bis 1,24 molare Äquivalente der hydrophilen Monomere, wie zuvor beschrieben oder bevorzugt beschrieben;
0 bis 1,0 molare Äquivalente der nicht hydrophilen Monomere, welche nicht der Formel (1) entsprechen, wie zuvor beschrieben oder bevorzugt beschrieben;
0,04 bis 0,5 molare Äquivalente des oder der Quervernetzer(s), wie zuvor beschrieben oder bevorzugt beschrieben und
0,005 bis 0,05 molare Äquivalente des oder der UV-Absorber(s), wie zuvor beschrieben oder bevorzugt beschrieben, enthalten sind.

Ein weiterer Gegenstand der Erfindung ist eine Zusammensetzung, wie zuvor beschrieben oder bevorzugt beschrieben, dadurch gekennzeichnet, dass
1 molares Äquivalent einer Verbindung der Formel (1) oder einer bevorzugten Verbindung der Formel (1), wie zuvor beschrieben, oder 1 molares Äquivalent der Summe aller Verbindungen der Formel (1), wie zuvor beschrieben oder bevorzugt beschrieben;
0,51 bis 1,24 molare Äquivalente der hydrophilen Monomere, wie zuvor beschrieben oder bevorzugt beschrieben;
0 bis 0,2 molare Äquivalente der nicht hydrophilen Monomere, welche nicht der Formel (1) entsprechen, wie zuvor beschrieben oder bevorzugt beschrieben;
0,05 bis 0,5 molare Äquivalente des oder der Quervernetzer(s), wie zuvor beschrieben oder bevorzugt beschrieben und
0,005 bis 0,05 molare Äquivalente des oder der UV-Absorber(s), wie zuvor beschrieben oder bevorzugt beschrieben, enthalten sind.

Ein weiterer Gegenstand der Erfindung ist eine Zusammensetzung, wie zuvor beschrieben oder bevorzugt beschrieben, dadurch gekennzeichnet, dass
1 molares Äquivalent einer Verbindung der Formel (1) oder einer bevorzugten Verbindung der Formel (1), wie zuvor beschrieben, oder 1 molares Äquivalent der Summe aller Verbindungen der Formel (1), wie zuvor beschrieben oder bevorzugt beschrieben;
0,51 bis 1,24 molare Äquivalente der hydrophilen Monomere, wie zuvor beschrieben oder bevorzugt beschrieben;
0,05 bis 1,0 molare Äquivalente der nicht hydrophilen Monomere, welche nicht der Formel (1) entsprechen, wie zuvor beschrieben oder bevorzugt beschrieben;
0,04 bis 0,5 molare Äquivalente des oder der Quervernetzer(s), wie zuvor beschrieben oder bevorzugt beschrieben und
0,005 bis 0,05 molare Äquivalente des oder der UV-Absorber(s), wie zuvor beschrieben oder bevorzugt beschrieben, enthalten sind.

Ein weiterer Gegenstand der Erfindung ist eine Zusammensetzung, wie zuvor beschrieben oder bevorzugt beschrieben, dadurch gekennzeichnet, dass
1 molares Äquivalent einer Verbindung der Formel (1) oder einer bevorzugten Verbindung der Formel (1), wie zuvor beschrieben, oder 1 molares Äquivalent der Summe aller Verbindungen der Formel (1), wie zuvor beschrieben oder bevorzugt beschrieben;
0,51 bis 1,24 molare Äquivalente der hydrophilen Monomere, wie zuvor beschrieben oder bevorzugt beschrieben;
0,05 bis 0,2 molare Äquivalente der nicht hydrophilen Monomere, welche nicht der Formel (1) entsprechen, wie zuvor beschrieben oder bevorzugt beschrieben;
0,05 bis 0,5 molare Äquivalente des oder der Quervernetzer(s), wie zuvor beschrieben oder bevorzugt beschrieben und
0,005 bis 0,05 molare Äquivalente des oder der UV-Absorber(s), wie zuvor beschrieben oder bevorzugt beschrieben, enthalten sind.

In einer Ausführungsform der erfindungsgemäßen Zusammensetzung ist es bevorzugt, wenn
neben dem einen molaren Äquivalent einer Verbindung der Formel (1), (2), (3), (4) oder einer bevorzugten Verbindung, wie zuvor beschrieben, beispielsweise (M-1) bis (M-63), oder der Summe aller derartiger Verbindungen,
0,56 bis 1,2 molare Äquivalente oder bevorzugt 0,6 bis ein molares Äquivalent aller hydrophilen Monomere enthalten sind, wie zuvor beschrieben oder als bevorzugt beschrieben.

In einer Ausführungsform der erfindungsgemäßen Zusammensetzung ist es bevorzugt, wenn
neben dem einen molaren Äquivalent einer Verbindung der Formel (1), (2), (3), (4) oder einer bevorzugten Verbindung, wie zuvor beschrieben, beispielsweise (M-1) bis (M-63), oder der Summe aller derartiger Verbindungen,
0,1 bis 0,2 molare Äquivalente der Summe der nicht hydrophilen Monomere enthalten sind, wie zuvor beschrieben oder bevorzugt beschrieben.

In einer Ausführungsform der erfindungsgemäßen Zusammensetzung ist es bevorzugt, wenn
neben dem einen molaren Äquivalent einer Verbindung der Formel (1), (2), (3), (4) oder einer bevorzugten Verbindung, wie zuvor beschrieben, beispielsweise (M-1) bis (M-63), oder der Summe aller derartiger Verbindungen,
0,01 bis 0,03 molare Äquivalente der Summe der Quervernetzer enthalten sind, wie zuvor beschrieben oder bevorzugt beschrieben.

In einer Ausführungsform der erfindungsgemäßen Zusammensetzung ist es bevorzugt, wenn
neben dem einen molaren Äquivalent einer Verbindung der Formel (1), (2), (3), (4) oder einer bevorzugten Verbindung, wie zuvor beschrieben, beispielsweise (M-1) bis (M-63), oder der Summe aller derartiger Verbindungen,
0,05 bis 0,3 molare Äquivalente der Summe der Quervernetzer enthalten sind, wie zuvor beschrieben oder bevorzugt beschrieben.

In einer Ausführungsform der erfindungsgemäßen Zusammensetzung ist es bevorzugt, wenn
neben dem einen molaren Äquivalent einer Verbindung der Formel (1), (2), (3), (4) oder einer bevorzugten Verbindung, wie zuvor beschrieben, beispielsweise (M-1) bis (M-63), oder der Summe aller derartiger Verbindungen,
0,007 bis 0,02 molare Äquivalente der Summe der UV-Absorber enthalten sind, wie zuvor beschrieben oder bevorzugt beschrieben.

In einer Ausführungsform der erfindungsgemäßen Zusammensetzung ist es bevorzugt, wenn
neben dem einen molaren Äquivalent einer Verbindung der Formel (1), (2), (3), (4) oder einer bevorzugten Verbindung, wie zuvor beschrieben, beispielsweise (M-1) bis (M-63), oder der Summe aller derartiger Verbindungen und den zuvor genannten molaren Äquivalenten der Summe der hydrophilen Monomere, nicht hydrophilen Monomere, Quervernetzer und UV-Absorber,
0 bis 0,004 molare Äquivalente der Summe der Blauabsorber enthalten ist, wie zuvor beschrieben oder bevorzugt beschrieben bzw. bevorzugt 1 mikromolares Äquivalent bis 0,004 molare Äquivalente der Summe der Blauabsorber enthalten sind, wie zuvor beschrieben oder bevorzugt beschrieben, bzw. besonders bevorzugt 8 mikromolare Äquivalente bis 0,002 molare Äquivalente der Summe Blauabsorber enthalten sind, wie zuvor beschrieben oder bevorzugt beschrieben.

Die geeignete Auswahl der Menge des Blauabsorbers ist von der Bandenlage und dem entsprechenden Extinktionskoeffizienten abhängig, so dass der Fachmann in der Lage ist, die zuvor genannten molaren Äquivalente des Blauabsorbers entsprechend anzupassen. Die Auswahl der Menge des Blauabsorbers ist derart zu wählen, dass dieser das UV/VIS Spektrum des erfindungsgemäßen Copolymers so beeinflusst, dass die Transmission im blauen Wellenlängenbereich minimal ist.

In der erfindungsgemäßen Zusammensetzung, wie zuvor beschrieben oder als bevorzugt beschrieben, wird auch ein Radikalstarter zugegeben, damit eine Polymerisation der erfindungsgemäßen Zusammensetzung der Monomere, wie zuvor beschrieben, erfolgen kann.

Der Begriff Initiator, Radikalstarter oder Radikalinitiator wird synonym verwendet.

Die Polymerisation wird bevorzugt radikalisch initiiert, hierfür sind sowohl thermische Initiatoren, wie Acetylperoxid, Stearoylperoxid, 2,2'-Azo-bis-(isobutyronitril), tert-Butylperoxypivalat, 2,2'-Azo-bis-(2-cyanobutannitril), Benzoylperoxid, *Luperox*^{®} *TBEC,* 2,2'-(Diazene-1,2-diyl)bis(2,4-dimethylpentanenitril), Decanoylperoxid, Di-(tert-butylcyclohexyl)-peroxydicarbonat, Lauroylperoxid, tert-Butylperoxydiethylacetat, tert-Butylperoxy-2-ethylhexanoat, tert-Amylperoxy-2-ethylhexanoat, VA-086, 1,1'-Azodi(hexahydrobenzonitril), 1,1-Bis(tert-butylperoxy)-3,3,5-trimethylcyclohexan, Peroxydicarbonat, als auch photochemische Initiatoren, wie Darocur 2273, Darocur 3331, Darocur 1164, Irgacur 1850, Darocur 1700, Darocur 1173, Irgacur 184, Darocur 1116, Darocur 2959, Benzoinmethylether, Benzoinethylether, Irgacur 651, 2,4,6-(Trimethylbenzoyl)diphenylphosphinoxid, Bis-(2,4,6-trimethylbenzoyl)-phenylphosphinoxid, Bis-(2,6-dichlorobenzoyl)-4-propylphenylphosphinoxid, geeignet.

Es wird bevorzugt ein thermischer Initiator verwendet. Es wird bevorzugt ein thermischer Initiator verwendet, wie zuvor beschrieben. Besonders bevorzugt werden 1,1-Bis(tert-butylperoxy)-3,3,5-trimethylcyclohexan, tert-Butylperoxy-2-ethylhexanoat und tert-Amylperoxy-2-ethylhexanoat als Radikalinitiator eingesetzt, bevorzugt in 0,0025 bis 0,05 molaren Äquivalenten bezogen auf die Summe aller in der Zusammensetzung enthaltenen Verbindungen der Formel (1), wie zuvor beschrieben oder als bevorzugt beschrieben.

Ein weiterer Gegenstand der Erfindung ist daher eine Zusammensetzung, wie zuvor beschrieben, wobei die Zusammensetzung einen Radikalinitiator enthält.

Ein weiterer Gegenstand der Erfindung ist eine Zusammensetzung, wie zuvor beschrieben oder bevorzugt beschrieben, dadurch gekennzeichnet, dass
1 molares Äquivalent einer Verbindung der Formel (1) oder einer bevorzugten Verbindung der Formel (1), wie zuvor beschrieben, oder 1 molares Äquivalent der Summe aller Verbindungen der Formel (1), wie zuvor beschrieben oder bevorzugt beschrieben;
0,51 bis 1,24 molare Äquivalente der hydrophilen Monomere, wie zuvor beschrieben oder bevorzugt beschrieben;
0 bis 0,2 molare Äquivalente der nicht hydrophilen Monomere, welche nicht der Formel (1) entsprechen, wie zuvor beschrieben oder bevorzugt beschrieben;
0,05 bis 0,5 molare Äquivalente des oder der Quervernetzer(s), wie zuvor beschrieben oder bevorzugt beschrieben;
0,005 bis 0,05 molare Äquivalente des oder der UV-Absorber(s), wie zuvor beschrieben oder bevorzugt beschrieben;
0 bis 0,004 molare Äquivalente des oder der Blauabsorber(s), wie zuvor beschrieben oder bevorzugt beschrieben;
0,0025 bis 0,05 molare Äquivalente eines Radikalinitiators, wie zuvor beschrieben oder bevorzugt beschrieben, enthalten sind.

Ein weiterer Gegenstand der Erfindung ist eine Zusammensetzung, wie zuvor beschrieben oder bevorzugt beschrieben, dadurch gekennzeichnet, dass
1 molares Äquivalent einer Verbindung der Formel (1) oder einer bevorzugten Verbindung der Formel (1), wie zuvor beschrieben, oder 1 molares Äquivalent der Summe aller Verbindungen der Formel (1), wie zuvor beschrieben oder bevorzugt beschrieben;
0,51 bis 1,24 molare Äquivalente der hydrophilen Monomere, wie zuvor beschrieben oder bevorzugt beschrieben;
0 bis 1,0 molare Äquivalente der nicht hydrophilen Monomere, welche nicht der Formel (1) entsprechen, wie zuvor beschrieben oder bevorzugt beschrieben;
0,04 bis 0,5 molare Äquivalente des oder der Quervernetzer(s), wie zuvor beschrieben oder bevorzugt beschrieben;
0,005 bis 0,05 molare Äquivalente des oder der UV-Absorber(s), wie zuvor beschrieben oder bevorzugt beschrieben;
0 bis 0,004 molare Äquivalente des oder der Blauabsorber(s), wie zuvor beschrieben oder bevorzugt beschrieben;
0,0025 bis 0,05 molare Äquivalente eines Radikalinitiators, wie zuvor beschrieben oder bevorzugt beschrieben, enthalten sind.

Ein weiterer Gegenstand der Erfindung ist eine Zusammensetzung, wie zuvor beschrieben oder bevorzugt beschrieben, dadurch gekennzeichnet, dass sie aus
einem molaren Äquivalent einer Verbindung der Formel (1) oder einer bevorzugten Verbindung der Formel (1), wie zuvor beschrieben, oder einem molaren Äquivalent der Summe aller Verbindungen der Formel (1), wie zuvor beschrieben oder bevorzugt beschrieben;
0,51 bis 1,24 molaren Äquivalenten der hydrophilen Monomere, wie zuvor beschrieben oder bevorzugt beschrieben;
0 bis 0,2 molaren Äquivalenten der nicht hydrophilen Monomere, welche nicht der Formel (1) entsprechen, wie zuvor beschrieben oder bevorzugt beschrieben;
0,05 bis 0,5 molaren Äquivalenten des oder der Quervernetzer(s), wie zuvor beschrieben oder bevorzugt beschrieben;
0,005 bis 0,05 molaren Äquivalenten des oder der UV-Absorber(s), wie zuvor beschrieben oder bevorzugt beschrieben;
0 bis 0,004 molaren Äquivalenten des oder der Blauabsorber(s), wie zuvor beschrieben oder bevorzugt beschrieben;
0,005 bis 0,05 molaren Äquivalenten eines Radikalinitiators, wie zuvor beschrieben oder bevorzugt beschrieben, besteht.

In dieser Ausführungsform gelten die als bevorzugt angegebenen molaren Äquivalente der Bestandteile entsprechend, wie zuvor beschrieben.

Ein weiterer Gegenstand der Erfindung ist eine Zusammensetzung, wie zuvor beschrieben oder bevorzugt beschrieben, dadurch gekennzeichnet, dass sie aus
einem molaren Äquivalent einer Verbindung der Formel (1) oder einer bevorzugten Verbindung der Formel (1), wie zuvor beschrieben, oder einem molaren Äquivalent der Summe aller Verbindungen der Formel (1), wie zuvor beschrieben oder bevorzugt beschrieben;
0,51 bis 1,24 molaren Äquivalenten der hydrophilen Monomere, wie zuvor beschrieben oder bevorzugt beschrieben;
0 bis 1,0 molaren Äquivalenten der nicht hydrophilen Monomere, bevorzugt 0 bis 0,2 molare Äquivalente der nicht hydrophilen Monomere, welche nicht der Formel (1) entsprechen, wie zuvor beschrieben oder bevorzugt beschrieben;
0,04 bis 0,5 molaren Äquivalenten des oder der Quervernetzer(s), wie zuvor beschrieben oder bevorzugt beschrieben;
0,005 bis 0,05 molaren Äquivalenten des oder der UV-Absorber(s), wie zuvor beschrieben oder bevorzugt beschrieben;
0 bis 0,004 molaren Äquivalenten des oder der Blauabsorber(s), wie zuvor beschrieben oder bevorzugt beschrieben;
0,0025 bis 0,05 molaren Äquivalenten eines Radikalinitiators, wie zuvor beschrieben oder bevorzugt beschrieben, besteht.

Für die Zusammensetzung gilt, dass die Ausführungsformen und die bevorzugten Ausführungsformen der Bestandteile der Zusammensetzung beliebig kombiniert werden können. Es ist bevorzugt, wenn jeweils die bevorzugten Ausführungsformen der jeweiligen Bestandteile und ihrer Mengen kombiniert werden.

Wird die erfindungsgemäße Zusammensetzung, wie zuvor beschrieben oder als bevorzugt beschrieben, polymerisiert, so entstehen vernetzte Copolymere, welche ab einer Umgebungstemperatur zwischen 16°C und 20°C weich sind und alle Vorteile haben, wie zuvor beschrieben. Sie zeigen insbesondere kaum oder kein Glistening. Der Begriff "kaum oder kein Glistening" besitzt die Bedeutung, wie zuvor beschrieben. Die Copolymere besitzen Glastemperaturen (Tg) von 15°C oder weniger und haben einen Brechungsindex von mindestens 1,5, bevorzugt von mindestens 1,52, wobei die induzierbare Änderung der Brechkraft bevorzugt noch mindestens 0,005 (Δn_{D}= 0,005) ist.

Ein weiterer Gegenstand der Erfindung ist demzufolge ein vernetztes Copolymer enthaltend eine polymerisierte Zusammensetzung, wie zuvor beschrieben oder als bevorzugt beschrieben.

Ein weiterer Gegenstand der Erfindung ist demzufolge ein vernetztes Copolymer bestehend aus einer polymerisierten Zusammensetzung, wie zuvor beschrieben oder als bevorzugt beschrieben.

Die Reaktionsbedingungen einer radikalischen Polymerisation sind dem Fachmann auf dem Gebiet der Polymerchemie hinreichend bekannt. Aufgrund der Besonderheit, dass die Verbindungen der Formel (1) oder deren bevorzugte Ausführungsformen, wie zuvor beschrieben, in der Regel hydrophob sind, so kann die Mischbarkeit der Komponenten, insbesondere durch Anwesenheit der hydrophilen Monomere, in der erfindungsgemäßen Zusammensetzung eingeschränkt sein. Der Fachmann ist jedoch in der Lage, den Initiator sorgfältig zu wählen und das Verfahren bei einem thermischen Verfahren hinsichtlich der Temperatur so zu wählen, dass ein homogenes Copolymer entsteht. Im Fall einer identifizierten Mischungslücke ist die Polymerisationstemperatur so zu wählen, dass sie nicht innerhalb der Mischungslücke liegt.

Der Fachmann ist in der Lage, eine Unverträglichkeit der Materialien zu identifizieren, die zu einer Mischungslücke führen könnte. Er kann beispielsweise eine erfindungsgemäße Zusammensetzung, wie zuvor beschrieben, mit einer geeigneten Lichtquelle bestrahlen und bei verschiedenen Temperaturen UV/VIS-Spektren aufnehmen. Geeignete Wellenlängen liegen zwischen 450 nm und 750 nm. Trägt man beispielsweise die Transmission gegen die Temperatur für eine Wellenlänge von 450 nm auf, so identifiziert man eine Mischungslücke, wenn die Zunahme der Transmission sprungartig verläuft. Der sprunghafte Anstieg der Transmission kann durch die sprunghafte Abnahme der Dichte der Mischung erklärt werden, wenn eine Entmischung auftritt. Mit Hilfe eines derartigen Experiments kann der Fachmann die geeignete Temperatur der thermisch induzierten radikalischen Polymerisation auswählen.

Ein weiterer Gegenstand der Erfindung ist daher ein Verfahren zur Herstellung des vernetzten Copolymers, wie zuvor beschrieben, dadurch gekennzeichnet, dass die erfindungsgemäße Zusammensetzung, wie zuvor beschrieben enthaltend oder bestehend aus den beschriebenen oder als bevorzugt beschriebenen Komponenten, bereitgestellt wird und anschließend radikalisch polymerisiert wird, wobei die zu wählende Temperatur der Polymerisation bei Verwendung eines thermischen Radikalinitiators nicht innerhalb einer Mischungslücke der Materialen der bereitgestellten Zusammensetzung liegt.

Die Polymerisation, wie zuvor beschrieben, erfolgt bevorzugt in Substanz.

Die Eigenschaften des erfindungsgemäßen Copolymers als Rohstoff zur Herstellung von ophthalmologischen Produkten können nach Standardverfahren bestimmt werden, wie beispielsweise unter Anwendung der Refraktometrie mit und ohne Bestrahlung. Glistening und Wasseraufnahme wird derart bestimmt, dass bei einer bestimmten Temperatur und einer bestimmten Zeit die Probe inkubiert wird, ein Multifokusbild erzeugt wird und die Vakuolen auf diesem Bild ausgezählt werden. Die Vakuolenzahl wird normiert auf das Volumen angegeben. Die Wasseraufnahme kann beispielsweise aus der Massendifferenz vor und nach Inkubation in Wasser bestimmt werden. Techniken zur Bestimmung der Materialeigenschaft von Polymeren sind im Stand der Technik bekannt und sind in keiner Weise eingeschränkt. Die verwendeten Methoden zur Charakterisierung der erfindungsgemäßen vernetzten Copolymere werden im Ausführungsteil noch detaillierter beschrieben, sind jedoch nicht als einschränkend zu betrachten.

Ein weiterer Gegenstand der Erfindung ist ebenfalls die Verwendung der Zusammensetzung, wie zuvor beschrieben oder als bevorzugt beschrieben, oder die Verwendung des vernetzten Copolymers resultierend aus der polymerisierten Zusammensetzung, wie zuvor beschrieben oder als bevorzugt beschrieben, zur Herstellung eines Rohlings für ein ophthalmologisches Produkt, vorzugsweise für eine ophthalmische Linse oder ein ophthalmologisches Implantat, besonders bevorzugt für eine Intraokularlinse.

Der Begriff Rohling kann synonym auch mit dem Begriff Halbzeug verwendet werden und beschreibt Produkte, die in ihrer Grundform soweit aus einem Rohmaterial oder aus Rohmaterialien hergestellt sind, so dass sich die notwendigen Arbeitsschritte zur Fertigung des Endprodukts erheblich verringern. In der Regel sind Rohlinge auf ein bestimmtes Maß vorgefertigt, sind geometrisch bestimmte, feste Körper und entsprechen bestimmten Normen und Zertifizierungsmaßnahmen. Der aus der Metallindustrie bekannte Begriff Halbzeug, entstanden aus "Halb-Fertigstellung", umfasst nicht nur Produkte aus Metallen oder Metalllegierungen, sondern auch aus Kunststoff und gilt entsprechend auch für die Fertigung von Medizinprodukten, umfassend auch ophthalmologische Produkte.

Ein weiterer Gegenstand der Erfindung ist demzufolge ein Artikel enthaltend das erfindungsgemäße Copolymer oder die polymerisierte erfindungsgemäße Zusammensetzung, wie zuvor beschrieben oder als bevorzugt beschrieben. Der Artikel besitzt demzufolge die gleichen Vorteile, die für das erfindungsgemäßen Copolymer beschrieben sind. Die Ausführungen zuvor gelten entsprechend.

Der Artikel ist in keiner Weise eingeschränkt und ist bevorzugt ein Rohling oder das fertiggestellte ophthalmologische Produkt, vorzugsweise eine ophthalmische Linse oder ein ophthalmologisches Implantat, besonders bevorzugt eine Intraokularlinse oder eine Phake Intraokularlinse.

Ein weiterer Gegenstand der Erfindung ist demzufolge der Artikel wie zuvor beschrieben, ausgewählt aus einem Rohling für eine ophthalmische Linse oder ein ophthalmologisches Implantat, einem ophthalmologischen Implantat, oder einer ophthalmischen Linse.

Das erfindungsgemäße Copolymer oder die polymerisierte erfindungsgemäße Zusammensetzung, wie zuvor beschrieben, kann ohne Einschränkung für jede Art von ophthalmischen Linsen, bevorzugt Intraokularlinsen oder Phake Linsen, verwendet werden, sowohl für die Haptik als auch für die zentrale optische Linse. Das erfindungsgemäße Material kann auch mit weiteren Materialien kombiniert werden, die zur Herstellung von ophthalmischen Linsen bekannt sind. Dies wäre beispielsweise der Fall, wenn die Haptik aus einem anderen Kunststoff bestehen soll, als die zentrale optische Linse. Der Fachmann auf dem Gebiet der Herstellung von Intraokularlinsen kennt die notwendigen Verarbeitungsschritte zur Herstellung des Rohlings und des Fertigprodukts.

Die radikalische Polymerisation der erfindungsgemäßen Zusammensetzung, wie zuvor beschrieben oder als bevorzugt beschrieben kann beispielsweise in einer Polymerisationsform durchgeführt werden. Es sind vielfältige Materialien, Formen und Techniken diesbezüglich bekannt. Ein entsprechendes Beispiel ist im Ausführungsteil beschrieben.

Ein weiterer Gegenstand der Erfindung ist daher ein Verfahren zur Herstellung eines Artikels, wie zuvor beschrieben oder als bevorzugt beschrieben, dadurch gekennzeichnet, dass eine erfindungsgemäße Zusammensetzung, wie zuvor beschrieben, bereitgestellt wird, eine Polymerisation durchgeführt wird und dabei oder anschließend ein Artikel geformt wird. Der Artikel kann beispielsweise durch Formguß (molding) als Rohling hergestellt werden, den man weiter in das Fertigprodukt, beispielsweise die ophthalmische Linse, wie zuvor beschrieben, umwandelt. Die weiteren Fertigungsschritte durch spahnabhebende Verfahren sind dem Fachmann hinlänglich bekannt.

Auch ohne weitere Ausführungen wird davon ausgegangen, dass ein Fachmann die obige Beschreibung im weitesten Umfang nutzen kann. Die bevorzugten Ausführungsformen sind deswegen lediglich als beschreibende Offenbarung aufzufassen, die keineswegs in irgendeiner Weise limitierend ist.

Vor- und nachstehend sind alle Temperaturen in °C angegeben.

Die Erfindung wird durch die folgenden Beispiele näher erläutert, ohne jedoch hierauf beschränkt zu sein.

### Beispiele

### Beispiel 1 - Herstellung der Verbindungen A, B, C und D:

Verbindung A, entsprechend (M-23), 12-((2-oxo-3-(4-pentyl-2-(trifluoromethyl)phenyl)-2H-chromen-7-yl)oxy)dodecylacrylat:

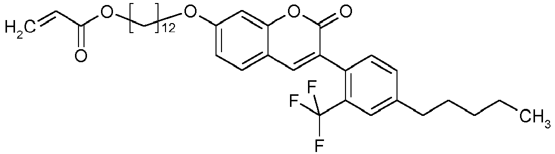

Verbindung B, entsprechend (M-20), 12-((2-oxo-3-(4-pentyl-2-(trifluoromethoxy)phenyl)-2H-chromen-7-yl)oxy)dodecylacrylat:

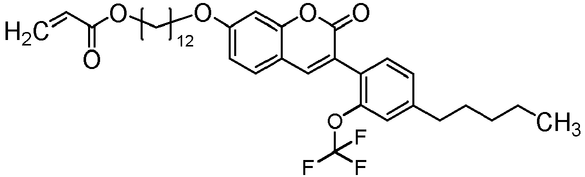

Verbindung C, entsprechend (M-42), 12-((2-oxo-3-(4-pentyl-2-(trifluoromethoxy)phenyl)-2H-chromen-7-yl)oxy)dodecylmethacrylat:

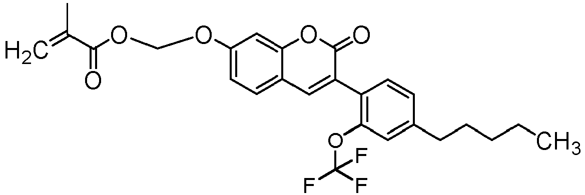

Verbindung D, entsprechend (M-33), 11-(2-oxo-3-(4-pentyl-2-(trifluoromethoxy)phenyl)-2H-chromen-7-yl)undecylacrylat:

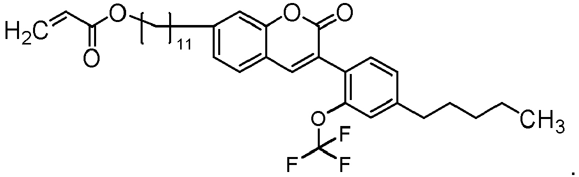

Die Herstellung der zuvor genannten Verbindungen A ist in Schema 1 dargestellt, die Herstellung der Verbindungen B und C ist in Schema 2 und die Herstellung der Verbindung D ist in Schema 3 dargestellt:

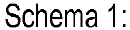

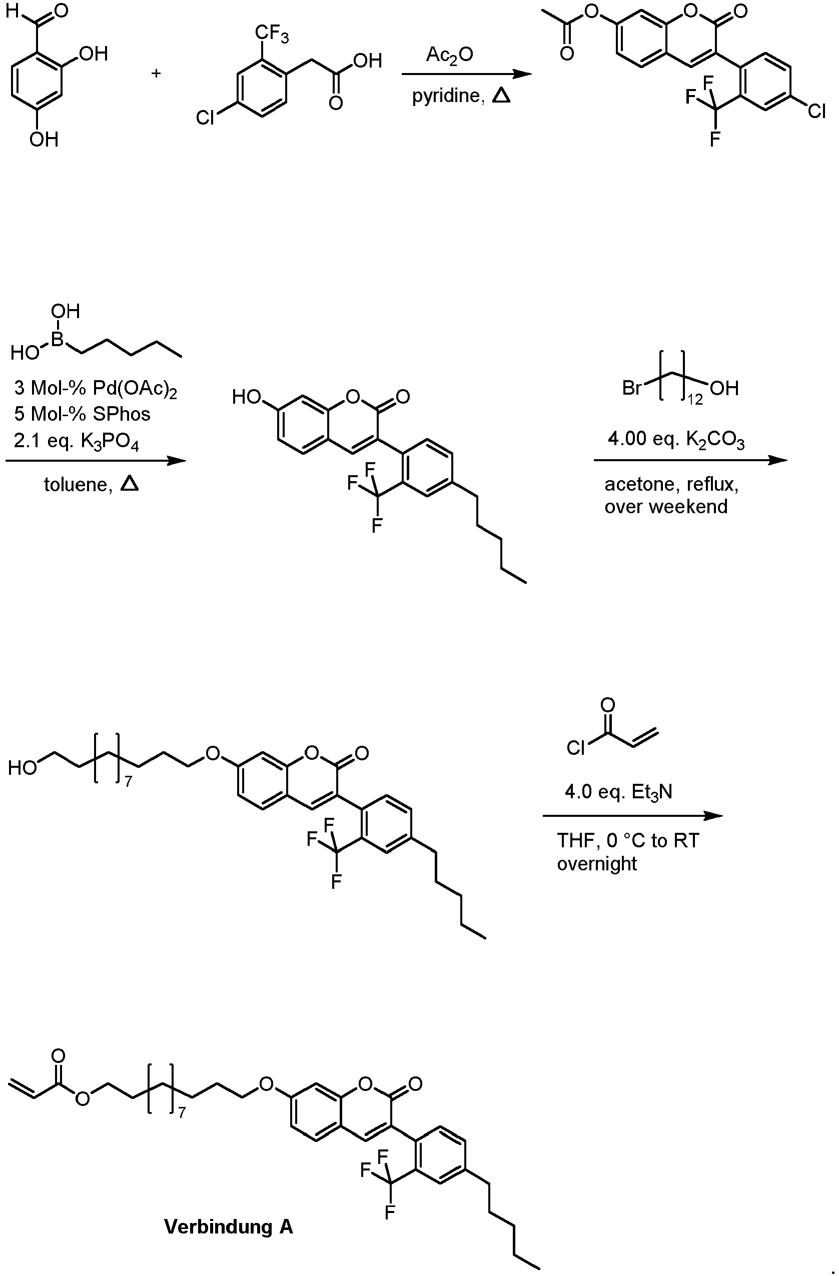

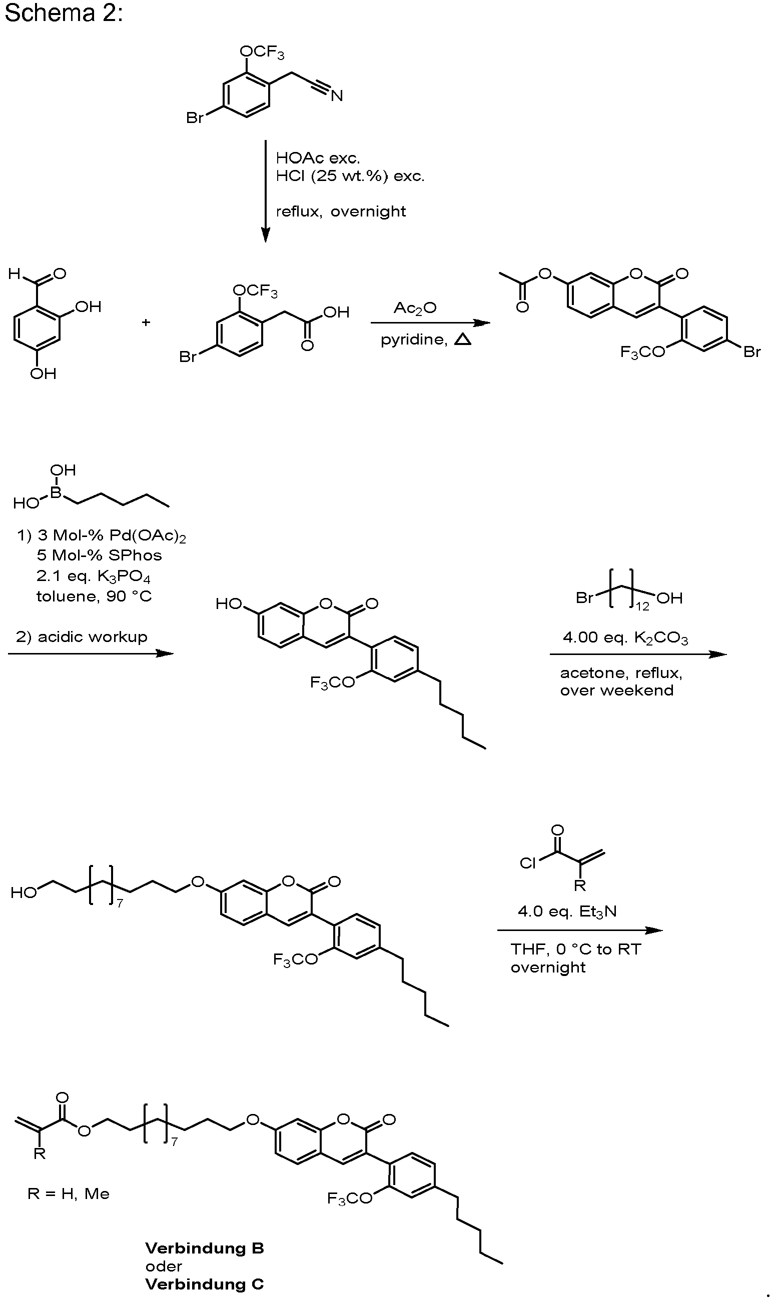

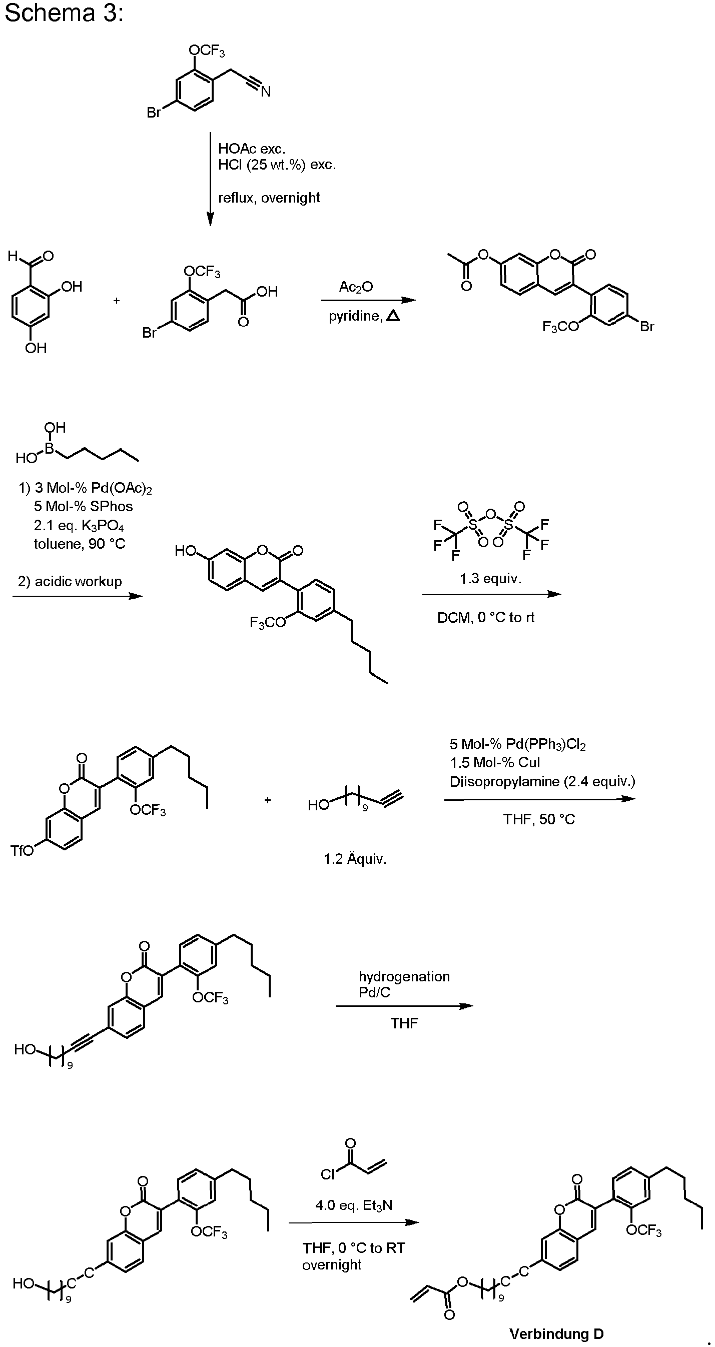

### Beispiel 2: Polymerisation

Die eingesetzten Monomere, wie in der folgenden Tabelle 1 erkenntlich, wurden käuflich erworben und ohne weitere Aufreinigung eingesetzt.

### Allgemeine Vorgehensweise:

In einem Kolben wird eine entsprechende erfindungsgemäße Zusammensetzung, wie in Tabelle 1 beschrieben, durch Mischung der Einzelkomponenten hergestellt und entgast.

Die Polymerisation erfolgt in Substanz. Die Polymerisationsform besteht im Inneren aus einer Silikonmatte geeigneter Dicke, beispielsweise einer Dicke zwischen 1 bis 3 mm, aus der die Form des Probenkörpers, beispielsweise eines Riegels von 1 mm x 25 mm x 30 -70 mm, oder des entsprechend gewünschten Rohlings, sowie ein Einfüllkanal ausgeschnitten sind, sowie zwei Glasplatten, zwischen die die Silikonmatte gelegt wird. Zwischen Glasplatte und Silikonmatte wird jeweils eine Trennschicht eingelegt, beispielsweise eine PET-Folie. Die Polymerisationsbedingungen werden abhängig vom Initiator gewählt, welche sich für Fachpersonal aus der jeweiligen Mischungszusammensetzung erschließen. Die Menge des Initiators ist ebenfalls in Tabelle 1 angegeben. Die Polymerisationstemperatur liegt zwischen 70°C und 180°C.
C18MA = Octadecylmethacrylat
HEMA = 2Hydroxyethylmethacrylat
EGDMA = Ethylenglycoldimethacrylat
UV-Abs = 2-[3-(2H-Benzotriazol-2-yl)-4-hydroxyphenyl]ethylmethacrylat
DtCyP = 1,1-Bis(*tert*-butylperoxy)-3,3,5-trimethylcyclohexan

**Tabelle 1: Zusammensetzungen - Angabe in Äquivalenten, das photoaktive Monomer entspricht der Verbindung A:**

| | **1** | **2** | **3** | **4*** | **5*** | **6*** |
|---|---|---|---|---|---|---|
| Verb. A | 1,00 | 1,00 | 1,00 | 1,00 | 1,00 | 1,00 |
| C18MA | 0,15 | 0,15 | 0,15 | 0,15 | 0,15 | 0,15 |
| HEMA | 0,00 | 0,25 | 0,50 | 0,60 | 0,70 | 0,80 |
| EGDMA | 0,10 | 0,10 | 0,10 | 0,10 | 0,10 | 0,10 |
| UV-Abs | 0,01 | 0,01 | 0,01 | 0,01 | 0,01 | 0,01 |
| DtCyP | 0,02 | 0,02 | 0,02 | 0,02 | 0,02 | 0,02 |
| | | | | | | |

| | **7*** | **8** | **9** | **10** | | |
|---|---|---|---|---|---|---|
| Verb. A | 1,00 | 1,00 | 1,00 | 1,00 | | |
| C18MA | 0,15 | 0,15 | 0,15 | 0,15 | | |
| HEMA | 1,00 | 1,25 | 1,50 | 2,00 | | |
| EGDMA | 0,10 | 0,10 | 0,10 | 0,10 | | |
| UV-Abs | 0,01 | 0,01 | 0,01 | 0,01 | | |
| DtCyP | 0,02 | 0,02 | 0,02 | 0,02 | | |

Die erfindungsgemäßen Zusammensetzungen sind mit einem * gekennzeichnet.

Die Materialien aus der Polymerisation der Zusammensetzungen 1 bis 10 der Tabelle 1 werden mit den folgenden Methoden charakterisiert:

### Refraktometrie

Der Brechungsindex n_{D} wird mittels eines Mehrwellenrefraktometers der Firma Schmidt-Haensch des Typs ATR-Lambda bestimmt. Die Messungen werden bei 20 °C durchgeführt.

### Bestrahlung und Brechungsindexänderung

Eine Probe wird mit einem Borsilicatglas abgedeckt und mittels einer 125 W Hg-Hochdrucklampe bestrahlt. Zwischen den Messungen wird der Brechungsindex bestimmt. Es wird so lange bestrahlt, bis keine Brechungsindexänderung mehr zu beobachten ist. Die Differenz des Ausgangsbrechungsindex und des Brechungsindex nach der Bestrahlung wird als Δn_{D} bezeichnet.

### Glistening (GT) und Wasseraufnahme (WA)

Eine 1 mm dicke Probe, beispielsweise eine Scheibe mit einem Durchmesser von 9,5 mm und einer Stärke von 1mm, wird 24 h bei 45 °C in Wasser inkubiert. Anschließend wird die Probe weitere 2,5 h in 37 °C warmem Wasser inkubiert. Die so behandelten Proben werden mikroskopisch untersucht. Hierfür wird im Dunkelfeld mit einem Mikroskop (M205 FA, Leica), das mit einer Kamera (DMC 4500, Leica) ausgestattet ist, eine Bilder-Serie mit verschiedenen Fokusebenen aufgenommen. Dieses wird zu einem Multifokusbild zusammengefügt und die Vakuolen auf diesem Bild ausgezählt. Die Vakuolenzahl ist normiert auf das Volumen angegeben.

Die Wasseraufnahme wird aus der Massendifferenz vor und nach 72-stündiger Inkubation in Wasser bei 45 °C oder 30°C bestimmt.

**Tabelle 2: Ergebnisse: (n.b. = nicht bestimmt)**

| | **1** | **2** | **3** | **4*** | **5*** | **6*** |
|---|---|---|---|---|---|---|
| Aussehen nach Polymerisation | klar | klar | klar | klar | klar | klar |
| n_{D} | 1,544 | 1,542 | 1,541 | 1,539 | 1,537 | 1,532 |
| Δn_{D} | 0,006 | 0,006 | 0,005 | 0,007 | 0,006 | 0,006 |
| Aussehen nach GT Test | getrübt | getrübt | getrübt | klar | klar | klar |
| Vakuole/mm³ | n.b. | n.b. | n.b. | 9,0 | 3,9 | 10,8 |
| Miyata-Skala | n.b. | n.b. | n.b. | 0 | 0 | 0 |
| WA (45°C)/% | 0 | 0 | 0,2 | 0,9 | 0,9 | 1,4 |
| WA (30°C)/% | 0,1 | 0,2 | 0,2 | 0,6 | 0,8 | 1,0 |

**Fortsetzung Tabelle 2:**

| | **7*** | **8** | **9** | **10** | | |
|---|---|---|---|---|---|---|
| Aussehen nach Polymerisation | klar | klar | getrübt | getrübt | | |
| n_{D} | 1,529 | 1,542 | 1,530 | 1,525 | | |
| Δn_{D} | 0,006 | 0,003 | 0,005 | 0,004 | | |
| Aussehen nach GT Test | klar | getrübt | getrübt | getrübt | | |
| UV-Abs | 0,01 | 0,01 | 0,01 | 0,01 | | |
| Vakuole/mm³ | 8,5 | n.b. | n.b. | n.b. | | |
| Miyata-Skala | 0 | n.b. | n.b. | n.b. | | |
| WA (45°C)/% | 1,6 | 3,6 | 3,0 | 4,2 | | |
| WA (30°C)/% | 1,6 | 2,7 | 3,3 | 3,9 | | |

Die Ergebnisse der polymerisierten Zusammensetzungen 1 bis 10 (entsprechend der Copolymere 1 bis 10) zeigen deutlich, dass aufgrund der Zugabe der hydrophilen Komponente HEMA immer noch gute Brechungsindexänderungen erzielt werden, es jedoch bei erfindungsgemäßer Auswahl der Menge an HEMA keine Trübung beim Glistening-Test auftritt. Das Copolymer der polymerisierten Zusammensetzungen 4, 5, 6, 7 ist nach der Polymerisation noch klar, weiterhin zeigt es nach dem Glistening keine Trübung, d.h. es ist kaum Glistening erkennbar und die Vakuolenzahl entspricht dem Grad 0 der Skala, eingeführt von Miyata.

Die erfindungsgemäßen polymerisierten Zusammensetzungen 4 bis 7 sind ideal. Betrachtet man alle Materialeigenschaften zusammen, so ist die polymerisierte Zusammensetzung 5 besonders bevorzugt.

### Beispiel 3:

Analog zu Beispiel 2 werden folgende Zusammensetzungen polymerisiert und entsprechend nach Beispiel 2 vermessen:

**Tabelle 3:**

| | **11*** | **12*** | **13*** | **14*** | **15*** | **16*** |
|---|---|---|---|---|---|---|
| Verbindung | A | A | B | C | D | D |
| Menge der Verbindung | 1,00 | 1,00 | 1,00 | 1,00 | 1,00 | 1,00 |
| HEMA | - | - | 0,60 | 0,60 | 0,80 | 0,60 |
| HEA | 0,56 | 0,6 | - | - | - | - |
| EGPEA | 0,11 | - | - | - | - | - |
| GDMA | 0,1 | 0,1 | 0,1 | 0,1 | 0,1 | 0,1 |
| UV-Abs | 0,01 | 0,01 | 0,01 | 0,01 | 0,01 | 0,01 |
| DtCyP | 0,02 | 0,02 | 0,02 | 0,02 | 0,02 | 0,02 |

**Fortsetzung Tabelle 3:**

| | **17*** | **18** | | | | |
|---|---|---|---|---|---|---|
| Verbindung | B | B | | | | |
| Menge der Verbindung | 1,00 | 1,00 | | | | |
| HEMA | 1,00 | 1,25 | | | | |
| HEA | - | - | | | | |
| EGPEA | - | - | | | | |
| GDMA | 0,1 | 0,1 | | | | |
| UV-Abs | 0,01 | 0,01 | | | | |
| DtCyP | 0,02 | 0,02 | | | | |

Die Ergebnisse sind in Tabelle 4 angezeigt:

**Tabelle 4:**

| | **11*** | **12*** | **13*** | **14*** | **15*** | **16*** |
|---|---|---|---|---|---|---|
| Aussehen nach Polymerisation | klar | klar | klar | klar | klar | klar |
| n_{D} | 1,548 | 1,547 | 1,544 | 1,542 | 1,538 | 1,537 |
| Δn_{D} | 0,007 | 0,003 | 0,022 | 0,019 | 0,013 | 0,012 |
| Aussehen nach GT-Test | klar | klar | klar | klar | klar | klar |
| Vakuole/mm³ | 15,3 | 10,8 | 2,2 | 17,4 | 13,6 | 7,1 |
| Miyata-Skala | 0 | 0 | 0 | 0 | 0 | 0 |
| WA (45°C)/% | 0,9 | 1,3 | 1,6 | 1,3 | 2,3 | 2,1 |
| WA (30°C)/% | 0,8 | 1,0 | 1,0 | 0,8 | 1,7 | 1,5 |

**Fortsetzung Tabelle 4:**

| | **17*** | **18** | | | | |
|---|---|---|---|---|---|---|
| Aussehen nach Polymerisation | klar | klar | | | | |
| n_{D} | 1,549 | 1,543 | | | | |
| Δn_{D} | 0,012 | 0,007 | | | | |
| Aussehen nach GT-Test | klar | getrübt | | | | |
| Vakuole/mm³ | 1,4 | n.b. | | | | |
| Miyata-Skala | 0 | n.b. | | | | |
| WA (45°C)/% | 3,0 | 3,9 | | | | |
| WA (30°C)/% | 2,6 | 3,5 | | | | |

Die Ergebnisse der polymerisierten Zusammensetzungen 11 bis 17 zeigen deutlich, dass aufgrund der Zugabe der hydrophilen Komponente immer noch gute Brechungsindexänderungen erzielt werden, es jedoch bei erfindungsgemäßer Auswahl der Menge an hydrophiler Komponente keine Trübung beim Glistening-Test auftritt.

## Patentansprüche

1. Zusammensetzung enthaltend mindestens eine Verbindung der Formel (1) 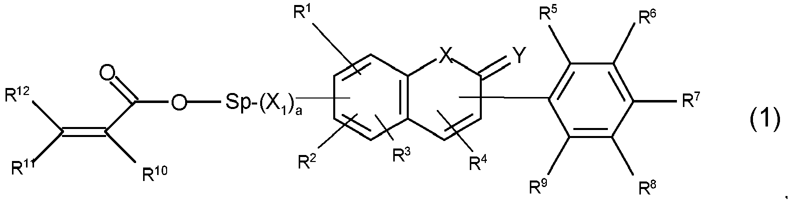 wobei für die verwendeten Symbole und Indizes gilt:
X ist bei jedem Auftreten gleich oder verschieden O, S oder NR⁰;
Y ist bei jedem Auftreten gleich oder verschieden O oder S;
X₁ ist O oder S;
a ist 0 oder 1;
Sp ist ein Alkandiyl, Alkendiyl oder ein Alkindiyl, das mit einem oder mehreren Gruppen R substituiert sein kann;
R⁰ ist eine geradkettige oder verzweigte Alkylgruppe mit 1 bis 10 C-Atomen;
R¹, R², R³ und R⁴ sind jeweils unabhängig voneinander bei jedem Auftreten H, F, Cl, Br, I, eine geradkettige oder verzweigte Alkylgruppe mit 1 bis 20 C-Atomen, eine teilweise oder vollständig halogenierte geradkettige oder verzweigte Alkylgruppe mit 1 bis 20 C-Atomen oder eine Aryl- oder Heteroarylgruppe mit 5 bis 40 Ringatomen;
R⁵, R⁶, R⁷, R⁸ und R⁹ sind jeweils unabhängig voneinander bei jedem Auftreten H, F, Cl, Br, I, eine geradkettige oder verzweigte Alkylgruppe mit 1 bis 20 C-Atomen, eine geradkettige oder verzweigte Alkoxygruppe mit 1 bis 20 C-Atomen, eine teilweise oder vollständig halogenierte geradkettige oder verzweigte Alkylgruppe mit 1 bis 20 C-Atomen, eine teilweise oder vollständig halogenierte geradkettige oder verzweigte Alkoxygruppe mit 1 bis 20 C-Atomen oder eine Aryl- oder Heteroarylgruppe mit 5 bis 40 Ringatomen, wobei mindestens ein Rest aus der Gruppe der Substituenten R⁵ bis R⁹ eine geradkettige oder verzweigte Alkylgruppe mit 1 bis 20 C-Atomen bedeutet, die teilweise oder vollständig halogeniert sein kann;
R¹⁰, R¹¹, R¹² sind jeweils unabhängig voneinander bei jedem Auftreten H, F, eine lineare oder verzweigte Alkylgruppe mit 1 bis 20 C-Atomen, die teilweise oder vollständig halogeniert sein kann, oder eine Arylgruppe mit 6 bis 14 C-Atomen;
R ist bei jedem Auftreten gleich oder verschieden ausgewählt aus der Gruppe bestehend aus einer geradkettigen oder verzweigten Alkylgruppe mit 1 bis 10 C-Atomen, einer teilhalogenierten oder vollständig halogenierten geradkettigen oder verzweigten Alkylgruppe mit 1 bis 10 C-Atomen, einer geradkettigen oder verzweigten Alkoxygruppe mit 1 bis 10 C-Atomen oder einer teilhalogenierten oder vollständig halogenierten geradkettigen oder verzweigten Alkoxygruppe mit 1 bis 10 C-Atomen;
mindestens ein hydrophiles Monomer, gewählt aus 3-Hydroxypropylmethacrylat, 3-Hydroxypropylacrylat, 2-Hydroxyethylmethacrylat, 2-Hydroxyethylacrylat, 4-Hydroxybutylmethacrylat, 4-Hydroxybutylacrylat, Glycerylmethacrylat, Glycerylacrylat, Acrylamid, N-Vinylpyrrolidon, 6-Hydroxyhexylmethacrylat, 6-Hydroxyhexylacrylat, 18-Hydroxyoctadecylmethacrylat, 18-Hydroxyoctadecylacrylat, 11-Hydroxyundecylmethacrylat, 11-Hydroxyundecylacrylat, 12-Hydroxydodecylmethacrylat, 12-Hydroxydodecylacrylat, Ethylenglycolphenyletheracrylat, Ethylenglycolphenylethermethacrylat oder einer Kombination dieser Verbindungen; mindestens einen UV-Absorber und mindestens einen Quervernetzer, wobei das molare Verhältnis der Summe aller Verbindungen der Formel (1) zur Summe aller hydrophilen Monomere 1:0,51 bis 1:1,24 ist.

2. Zusammensetzung nach Anspruch 1, **dadurch gekennzeichnet, dass** sie mindestens ein weiteres nicht hydrophiles Monomer, welches nicht der Formel (1) entspricht und/oder einen Blauabsorber enthält, wobei das nicht hydrophile Monomer aus n-Butylacrylat, n-Butylmethacrylat, Ethylmethacrylat, Ethylacrylat, Methylmethacrylat, Methylacrylat, n-Propylmethacrylat, n-Propylacrylat, iso-Propylmethacrylat, isoPropylacrylat, n-Pentylacrylat, n-Pentylmethacrylat, iso-Pentylmethacrylat, iso-Pentylacrylat, s-Butylacrylat, s-Butylmethacrylat, n-Hexylacrylat, n-Hexylmethacrylat, s-Pentylacrylat, s-Pentylmethacrylat, iso-Hexylacrylat, iso-Hexylmethacrylat, n-Octylacrylat, n-Octylmethacrylat, iso-Octylacrylat, iso-Octylmethacrylat, n-Nonylacrylat, n-Nonylmethacrylat, n-Decylacrylat, n-Decylmethacrylat, n-Undecylacrylat, n-Undecylmethacrylat, n-Dodecyllacrylat, n-Dodecylmethacrylat, n-Octadecylacrylat, n-Octadecylmethacrylat, 2-Ethylhexylacrylat, 2-Ethylhexylmethacrylat, n-Dodecylacrylat, n-Dodecylmethacrylat, n-Tridecylacrylat, n- Tridecylmethacrylat, n-Tetradecylacrylat, n-Tetradecylmethacrylat, n-Pentadecylacrylat, n-Pentadecylmethacrylat, n-Hexadecylacrylat, n-Hexadecylmethacrylat, 2,2-Dimethylpropylacrylat, 2,2-Dimethylpropylmethacrylat, Trimethylcyclohexylacrylat, Trimethylcyclohexylmethacrylat, isoButylacrylat, iso-Butylmethacrylat, 2-(4-Bromphenyl)ethylmethacrylat, 4-Phenylbutylmethacrylat, 4-Methylphenylmethacrylat, Phenylmethacrylat, 4-Methylphenylacrylat, Benzylacrylat, Benzylmethacrylat, 2-Benzyloxyethylmethacrylat, 3-Benzyloxypropylmethacrylat, Phenylethylacrylat, Phenylethylmethacrylat, 3-Phenylpropylmethacrylat, 2-Phenoxyethylacrylat, 2-Benzyloxyethylacrylat, 3-Phenylpropylacrylat, 4-Methylbenzylacrylat, Phenylacrylat, 2-(Phenylthio)ethylmethacrylat, 4-Phenylbutylacrylat, 5-Phenylpentylacrylat, 3-Benzyloxypropylacrylat, 2-(Phenylthio)propylacrylat, 2-(Phenylthio)ethylacrylat, 4-Phenylbutylacrylat, 4-Methylbenzylmethacrylat, 2-(2-Methylphenyl)ethylacrylat, 2-(2-Methylphenyl)ethylmethacrylat, 2-(3-Methylphenyl)ethylacrylat, 2-(3-Methylphenyl)ethylmethacrylat, 2-(4-Methylphenyl)ethylacrylat, 2-(4-Methylphenyl)ethylmethacrylat, 2-(4-Propylphenyl)ethylacrylat, 2-(4-Propylphenyl)ethylmethacrylat, 2-(4-(1-Methylethyl)phenyl)ethylacrylat, 2-(4-(1-Methylethyl)phenyl)ethylmethacrylat, 2-(4-Methoxyphenyl)ethylmethacrylat, 2-(4-Methoxyphenyl)ethylacrylat, 2-(4-Cyclohexylphenyl)ethylacrylat, 2-(4-Cyclohexylphenyl)ethylmethacrylat, 2-(4-Chlorphenyl)ethylmethacrylat, 2-(4-Chlorphenyl)ethylacrylat, 2-(3-Chlorphenyl)ethylmethacrylat, 2-(3-Chlorphenyl)ethylacrylat, 2-(2-Chlorphenyl)ethylmethacrylat, 2-(2-Chlorphenyl)ethylacrylat, 2-(4-Bromphenyl)ethylacrylat, 2-(4-Phenylphenyl)ethylmethacrylat, 2-(4-Phenylphenyl)ethylacrylat, 2-(3-Phenylphenyl)ethylmethacrylat, 2-(3-Phenylphenyl)ethylacrylat, 2-(4-Benzylphenyl)ethylmethacrylat, 2-(4-Benzylphenyl)ethylacrylat, 2-(Phenylthio)ethylacrylat, 3-Benzyloxypropylacrylat, 2-[2-(Benzyloxy)ethoxy]ethylacrylat, 2-[2-(Benzyloxy)ethoxy]ethylmethacrylat, Pentafluorphenylmethacrylat, Heptadecafluordecylmethacrylat, Dodecafluorheptylmethacrylat, Heptadecafluorodecylacrylat, Trifluorethylmethacrylat, Octafluorpentylmethacrylat, Hexafluorbutylmethacrylat, Octafluorpentylacrylat, Trifluorethylacrylat, Heptafluorbutylacrylat, Tetrafluorpropylmethacrylat, Hexafluorbutylacrylat, Pentafluorphenylacrylate, Hexafluor-iso-propylmethacrylat gewählt wird.

3. Zusammensetzung nach Anspruch 1 oder 2, **dadurch gekennzeichnet, dass**
1 molares Äquivalent einer Verbindung der Formel (1) oder 1 molares Äquivalent der Summe aller Verbindungen der Formel (1);
0,51 bis 1,24 molare Äquivalente der hydrophilen Monomere;
0 bis 1,0 molare Äquivalente der nicht hydrophilen Monomere, welche nicht der Formel (1) entsprechen;
0,04 bis 0,5 molare Äquivalente des oder der Quervernetzer(s) und
0,005 bis 0,05 molare Äquivalente des oder der UV-Absorber(s) enthalten sind.

4. Zusammensetzung nach einem oder mehreren der Ansprüche 1 bis 3, **dadurch gekennzeichnet, dass** die Zusammensetzung einen Radikalinitiator enthält.

5. Zusammensetzung nach einem oder mehreren der Ansprüche 1 bis 4, **dadurch gekennzeichnet, dass** die Zusammensetzung aus einem molaren Äquivalent einer Verbindung der Formel (1) oder einem molaren Äquivalent der Summe aller Verbindungen der Formel (1);
0,51 bis 1,24 molaren Äquivalenten der hydrophilen Monomere;
0 bis 1,0 molaren Äquivalenten der nicht hydrophilen Monomere, welche nicht der Formel (1) entsprechen;
0,04 bis 0,5 molaren Äquivalenten des oder der Quervernetzer(s);
0,005 bis 0,05 molaren Äquivalenten des oder der UV-Absorber(s);
0 bis 0,004 molaren Äquivalenten des oder der Blauabsorber(s) und
0,0025 bis 0,05 molaren Äquivalenten eines Radikalinitiators besteht.

6. Zusammensetzung nach einem oder mehreren der Ansprüche 1 bis 5, **dadurch gekennzeichnet, dass** der Quervernetzter aus Para-Divinylbenzol, Allylacrylat, Ethyleneglycol-Divinylether, Divinylsulfon, Allylmethacrylat, N,N'-Methylen-bis-Acrylamid, Ethylenglycoldiacrylat, N,N'-Methylen-bis-Methacrylamid, 1,3-Propandioldiacrylat, 2,3-Propandioldiacrylat, 1,4-Butandioldiacrylat, 1,3-Butandioldiacrylat, 1,5-Pentandioldiacrylat, 1,6-Hexandioldiacrylat, 1,7-Heptandioldiacrylat, 1,8-Octandioldiacrylat, 1,9-Nonandioldiacrylat, 1,10-Decandioldiacrylat, 1,11-Undecandioldiacrylat, 1,12-Dodecandioldiacrylat, 1,13-Tridecandioldiacrylat, 1,14-Tetradecandioldiacrylat, 1,15-Pentadecandioldiacrylat, 1,16-Hexadecandioldiacrylat, 1,17-Heptadecandioldiacrylat, 1,18-Octadecandioldiacrylat, 1,19-Nonadecandioldiacrylat, 1,20-Eicosandioldiacrylat, 1,21-Heneicosandioldiacrylat, 1,22-Docosandioldiacrylat, 1,23-Tricosandioldiacrylat, 1,24-Tetracosandioldiacrylat, Ethylenglycoldimethacrylat, N,N'-Dihydroxyethylenbisacrylamid, Thiodiethylenglycoldiacrylat, 1,3-Propandioldimethacrylat, 2,3-Propandioldimethacrylat, 1,3-Butandioldimethacrylat, 1,4-Butandioldimethacrylat, 1,5-Pentandioldimethacrylat, 1,6-Hexandioldimethacrylat, 1,7-Heptandioldimethacrylat, 1,8-Octandioldimethacrylat, 1,9-Nonandioldimethacrylat, 1,10-Decandioldimethacrylat, 1,11-Undecandioldimethacrylat, 1,12-Dodecandioldimethacrylat, 1,13-Tridecandioldimethacrylat, 1,14-Tetradecandioldimethacrylat, 1,15-Pentadecandioldimethacrylat, 1,16-Hexadecandioldimethacrylat, 1,17-Heptadecandioldimethacrylat, 1,18-Octadecandioldimethacrylat, 1,19-Nonadecandioldimethacrylat, 1,20-Eicosandioldimethacrylat, 1,21-Heneicosandioldimethacrylat, 1,22-Docosandioldimethacrylat, 1,23-Tricosandioldimethacrylat, 1,24-Tetracosandioldimethacrylat, 2-(Acryloyloxy)-ethyl methacrylat, 2-(Acryloyloxy)-propyl methacrylat, 3-(Acryloyloxy)-propyl methacrylat, 4-(Acryloyloxy)-butyl methacrylat, 5-(Acryloyloxy)-pentyl methacrylat, 6-(Acryloyloxy)-hexyl methacrylat, 7-(Acryloyloxy)-heptyl methacrylat, 8-(Acryloyloxy)-octyl methacrylat, 9-(Acryloyloxy)-nonyl methacrylat, 10-(Acryloyloxy)-decyl methacrylat, 11-(Acryloyloxy)-undecyl methacrylat, 12-(Acryloyloxy)-dodecyl methacrylat, 13-(Acryloyloxy)-tridecyl methacrylat, 14-(Acryloyloxy)-tetradecyl methacrylat, 15-(Acryloyloxy)-pentadecyl methacrylat, 16-(Acryloyloxy)-hexadecyl methacrylat, 17-(Acryloyloxy)-heptadecyl methacrylat, 18-(Acryloyloxy)-octadecyl methacrylat, 19-(Acryloyloxy)-nonadecyl methacrylat, 20-(Acryloyloxy)-eicosanyl methacrylat, 21-(Acryloyloxy)-heneicosanyl methacrylat, 22-(Acryloyloxy)-docosanyl methacrylat, 23-(Acryloyloxy)-tricosanyl methacrylat, 24-(Acryloyloxy)-tetracosanyl methacrylat, Neopentylglycoldiacrylat, Di(ethylenglycol)diacrylat, N,N'-Hexamethylenbisacrylamid, Thiodiethylenglycoldiacrylat, Thiodiethylenglycoldimethacrylat, Neopentylglycoldimethacrylat, Diethylenglycoldimethacrylat, Diallylphthalat, Triallylcyanurat, Glyceryl-1,3-dimethacrylat, N,N'-Hexamethylenbismethacrylamid, Tri(ethylenglycol)diacrylat, Tri(ethylenglycol)dimethacrylat, Tetra(ethylenglycol)diacrylat, Tetra(ethylenglycol)dimethacrylat, Penta(ethylenglycol)diacrylat, Penta(ethylenglycol)dimethacrylat, Hexa(ethylenglycol)diacrylat, Hexa(ethylenglycol)dimethacrylat, Poly(ethylenglycol)dimethacrylat, Poly(ethylenglycol)diacrylat ausgewählt wird.

7. Zusammensetzung nach einem oder mehreren der Ansprüche 1 bis 6, **dadurch gekennzeichnet, dass** der UV-Absorber aus 3-(3-(tert-Butyl)-4-hydroxy-5-(5-methoxy-2H-benzo[d][1,2,3]triazol-2-yl)phenoxy)propylmethacrylat, 2-(2-Hydroxy-5-vinylphenyl)-2H-benzotriazol, Allyl-2-hydroxybenzophenon, 2-Allyl-6-(2*H*-benzotriazol-2-yl)-p-cresol, 4-Methacryloxy-2-hydroxybenzophenon, 2-(2'-Hydroxy-3'-methallyl-5'-methylphenyl)benzotriazol, 2-Hydroxy-4-methacryloyloxybenzophenon, 4-Acryloylethoxy-2-hydroxybenzophenon, 2-[3-(2H-Benzotriazol-2-yl)-4-hydroxyphenyl]ethylmethacrylat, 2-(2'-Hydroxy-5'-methacrylamidophenyl)-5-methoxybenzotriazol, 2-(2'-Hydroxy-5'-methacrylamidophenyl)-5-chlorobenzotriazol, 2-(2'-Hydroxy-5'-methacryloxypropylphenyl)benzotriazol, 2-(2'-Hydroxy-5'-methacryloylpropyl-3'-tert-butyl-phenyl)-5-methoxy-2H-benzotriazol, 2-(3-(tert-Butyl)-4-hydroxy-5-(5-methoxy-2H-benzo[d][1,2,3]triazol-2-yl)phenoxy)ethylmethacrylat, 2-[3'-tert-Butyl-2'-hydroxy-5'-(3"-methacryloyloxypropyl)phenyl]-5-chlorbenzotriazol, 2-{2'-Hydroxy-3'-tert-butyl-5'-[3'-methacryloyloxypropoxy]phenyl}-5-methoxy-2H-benzotriazol, 2-[3'tert-Butyl-5'-(3"-dimethylvinylsilylpropoxy)-2'-hydroxyphenyl]-5-methoxybenzotriazol, 2-(tert-Butyl)-6-(5-chloro-2H-benzo[d][1,2,3]triazol-2-yl)-4-vinylphenol, 2-(2H-1,2,3-benzotriazol-2-yl)-4-methyl-6-(2-methylprop-2-enyl)phenol, 2-(3-acetyl-2-aminophenoxy)ethyl methacrylat, 2-(4-benzoyl-3-hydroxyphenoxy)ethyl acrylat oder einer Kombination dieser Verbindungen ausgewählt wird.

8. Vernetztes Copolymer enthaltend eine polymerisierte Zusammensetzung nach einem oder mehreren der Ansprüche 1 bis 7.

9. Verfahren zur Herstellung eines Copolymers nach Anspruch 8, **dadurch gekennzeichnet, dass** eine Zusammensetzung nach einem oder mehreren der Ansprüche 1 bis 7 bereitgestellt wird und anschließend radikalisch polymerisiert wird, wobei die zu wählende Temperatur der Polymerisation bei Verwendung eines thermischen Radikalinitiators nicht innerhalb einer Mischungslücke der Materialien liegt.

10. Verwendung einer Zusammensetzung nach einem oder mehreren der Ansprüche 1 bis 7 oder ein Copolymer nach Anspruch 8 zur Herstellung eines Rohlings für eine ophthalmische Linse oder ein ophthalmologisches Implantat.

11. Verwendung nach Anspruch 10 zur Herstellung einer Intraokularlinse.

12. Artikel enthaltend ein Copolymer nach Anspruch 8.

13. Artikel nach Anspruch 12, ausgewählt aus einem Rohling für eine ophthalmische Linse oder ein ophthalmologisches Implantat, einem ophthalmologischem Implantat oder einer ophthalmischen Linse.

14. Artikel nach Anspruch 12, ausgewählt aus einer Intraokularlinse oder einer Phake Linse.

15. Verfahren zur Herstellung eines Artikels nach Anspruch 12, **dadurch gekennzeichnet, dass** eine Zusammensetzung nach einem oder mehreren der Ansprüche 1 bis 7 bereitgestellt wird, eine Polymerisation durchgeführt wird und dabei oder anschließend der Artikel, vorzugsweise durch Formguß, geformt wird.

## Claims

1. Composition comprising at least one compound of the formula (1) 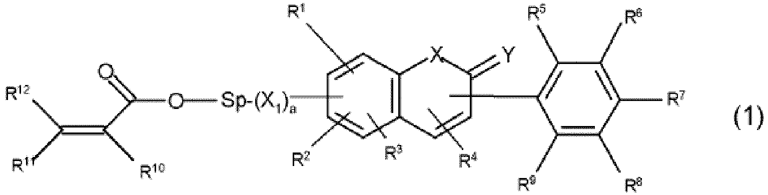 where the symbols and indices used are as follows:
X is the same or different at each instance and is O, S or NR⁰;
Y is the same or different at each instance and is O or S;
X₁ is O or S;
a is 0 or 1;
Sp is an alkanediyl, alkenediyl or an alkynediyl, which may be substituted by one or more R groups;
R⁰ is a straight-chain or branched alkyl group having 1 to 10 carbon atoms;
R¹, R², R³ and R⁴ are each independently at each instance H, F, Cl, Br, I, a straight-chain or branched alkyl group having 1 to 20 carbon atoms, a partly or fully halogenated straight-chain or branched alkyl group having 1 to 20 carbon atoms or an aryl or heteroaryl group having 5 to 40 ring atoms;
R⁵, R⁶, R⁷, R⁸ and R⁹ are each independently at each instance H, F, Cl, Br, I, a straight-chain or branched alkyl group having 1 to 20 carbon atoms, a straight-chain or branched alkoxy group having 1 to 20 carbon atoms, a partly or fully halogenated straight-chain or branched alkyl group having 1 to 20 carbon atoms, a partly or fully halogenated straight-chain or branched alkoxy group having 1 to 20 carbon atoms or an aryl or heteroaryl group having 5 to 40 ring atoms, where at least one radical from the group of substituents R⁵ to R⁹ is a straight-chain or branched alkyl group having 1 to 20 carbon atoms that may be partly or fully halogenated;
R¹⁰, R¹¹, R¹² are each independently at each instance H, F, a linear or branched alkyl group which has 1 to 20 carbon atoms and may be partly or fully halogenated, or an aryl group having 6 to 14 carbon atoms;
R is the same or different at each instance and is selected from the group consisting of a straight-chain or branched alkyl group having 1 to 10 carbon atoms, a partly halogenated or fully halogenated straight-chain or branched alkyl group having 1 to 10 carbon atoms, a straight-chain or branched alkoxy group having 1 to 10 carbon atoms or a partly halogenated or fully halogenated straight-chain or branched alkoxy group having 1 to 10 carbon atoms;
at least one hydrophilic monomer selected from 3-hydroxypropyl methacrylate, 3-hydroxypropyl acrylate, 2-hydroxyethyl methacrylate, 2-hydroxyethyl acrylate, 4-hydroxybutyl methacrylate, 4-hydroxybutyl acrylate, glyceryl methacrylate, glyceryl acrylate, acrylamide, N-vinylpyrrolidone, 6-hydroxyhexyl methacrylate, 6-hydroxyhexyl acrylate, 18-hydroxyoctadecyl methacrylate, 18-hydroxyoctadecyl acrylate, 11-hydroxyundecyl methacrylate, 11-hydroxyundecyl acrylate, 12-hydroxydodecyl methacrylate, 12-hydroxydodecyl acrylate, ethylene glycol phenyl ether acrylate, ethylene glycol phenyl ether methacrylate or a combination of these compounds;
at least one UV absorber and at least one crosslinker, where the molar ratio of the sum total of all compounds of the formula (1) to the sum total of all hydrophilic monomers is 1:0.51 to 1:1.24.

2. Composition according to Claim 1, **characterized in that** it comprises at least one further non-hydrophilic monomer that does not conform to the formula (1) and/or a blue absorber, wherein the non-hydrophilic monomer is selected from n-butyl acrylate, n-butyl methacrylate, ethyl methacrylate, ethyl acrylate, methyl methacrylate, methyl acrylate, n-propyl methacrylate, n-propyl acrylate, isopropyl methacrylate, isopropyl acrylate, n-pentyl acrylate, n-pentyl methacrylate, isopentyl methacrylate, isopentyl acrylate, s-butyl acrylate, s-butyl methacrylate, n-hexyl acrylate, n-hexyl methacrylate, s-pentyl acrylate, s-pentyl methacrylate, isohexyl acrylate, isohexyl methacrylate, n-octyl acrylate, n-octyl methacrylate, isooctyl acrylate, isooctyl methacrylate, n-nonyl acrylate, n-nonyl methacrylate, n-decyl acrylate, n-decyl methacrylate, n-undecyl acrylate, n-undecyl methacrylate, n-dodecyl acrylaet, n-dodecyl methacrylate, n-octadecyl acrylate, n-octadecyl methacrylate, 2-ethylhexyl acrylate, 2-ethylhexyl methacrylate, n-dodecyl acrylate, n-dodecyl methacrylate, n-tridecyl acrylate, n-tridecyl methacrylate, n-tetradecyl acrylate, n-tetradecyl methacrylate, n-pentadecyl acrylate, n-pentadecyl methacrylate, n-hexadecyl acrylate, n-hexadecyl methacrylate, 2,2-dimethylpropyl acrylate, 2,2-dimethylpropyl methacrylate, trimethylcyclohexyl acrylate, trimethylcyclohexyl methacrylate, isobutyl acrylate, isobutyl methacrylate, 2-(4-bromophenyl)ethyl methacrylate, 4-phenylbutyl methacrylate, 4-methylphenyl methacrylate, phenyl methacrylate, 4-methylphenyl acrylate, benzyl acrylate, benzyl methacrylate, 2-benzyloxyethyl methacrylate, 3-benzyloxypropyl methacrylate, phenylethyl acrylate, phenylethyl methacrylate, 3-phenylpropyl methacrylate, 2-phenoxyethyl acrylate, 2-benzyloxyethyl acrylate, 3-phenylpropyl acrylate, 4-methylbenzyl acrylate, phenyl acrylate, 2-(phenylthio)ethyl methacrylate, 4-phenylbutyl acrylate, 5-phenylpentyl acrylate, 3-benzyloxypropyl acrylate, 2-(phenylthio)propyl acrylate, 2-(phenylthio)ethyl acrylate, 4-phenylbutyl acrylate, 4-methylbenzyl methacrylate, 2-(2-methylphenyl)ethyl acrylate, 2-(2-methylphenyl)ethyl methacrylate, 2-(3-methylphenyl)ethyl acrylate, 2-(3-methylphenyl)ethyl methacrylate, 2-(4-methylphenyl)ethyl acrylate, 2-(4-methylphenyl)ethyl methacrylate, 2-(4-propylphenyl)ethyl acrylate, 2-(4-propylphenyl)ethyl methacrylate, 2-(4-(1-methylethyl)phenyl)ethyl acrylate, 2-(4-(1-methylethyl)phenyl)ethyl methacrylate, 2-(4-methoxyphenyl)ethyl methacrylate, 2-(4-methoxyphenyl)ethyl acrylate, 2-(4-cyclohexylphenyl)ethyl acrylate, 2-(4-cyclohexylphenyl)ethyl methacrylate, 2-(4-chlorophenyl)ethyl methacrylate, 2-(4-chlorophenyl)ethyl acrylate, 2-(3-chlorophenyl)ethyl methacrylate, 2-(3-chlorophenyl)ethyl acrylate, 2-(2-chlorophenyl)ethyl methacrylate, 2-(2-chlorophenyl)ethyl acrylate, 2-(4-bromophenyl)ethyl acrylate, 2-(4-phenylphenyl)ethyl methacrylate, 2-(4-phenylphenyl)ethyl acrylate, 2-(3-phenylphenyl)ethyl methacrylate, 2-(3-phenylphenyl)ethyl acrylate, 2-(4-benzylphenyl)ethyl methacrylate, 2-(4-benzylphenyl)ethyl acrylate, 2-(phenylthio)ethyl acrylate, 3-benzyloxypropyl acrylate, 2-[2-(benzyloxy)ethoxy]ethyl acrylate, 2-[2-(benzyloxy)ethoxy]ethyl methacrylate, pentafluorophenyl methacrylate, heptadecafluorodecyl methacrylate, dodecafluoroheptyl methacrylate, heptadecafluorodecyl acrylate, trifluoroethyl methacrylate, octafluoropentyl methacrylate, hexafluorobutyl methacrylate, octafluoropentyl acrylate, trifluoroethyl acrylate, heptafluorobutyl acrylate, tetrafluoropropyl methacrylate, hexafluorobutyl acrylate, pentafluorophenyl acrylates, hexafluoroisopropyl methacrylate.

3. Composition according to Claim 1 or 2, **characterized in that**
1 molar equivalent of a compound of the formula (1) or 1 molar equivalent of the sum total of all compounds of the formula (1);
0.51 to 1.24 molar equivalents of the hydrophilic monomers;
0 to 1.0 molar equivalent of the non-hydrophilic monomers that do not conform to the formula (1);
0.04 to 0.5 molar equivalent of the crosslinker(s) and
0.005 to 0.05 molar equivalent of the UV absorber(s) are present.

4. Composition according to one or more of Claims 1 to 3, **characterized in that** the composition comprises a free-radical initiator.

5. Composition according to one or more of Claims 1 to 4, **characterized in that** the composition consists of one molar equivalent of a compound of the formula (1) or one molar equivalent of the sum total of all compounds of the formula (1);
0.51 to 1.24 molar equivalents of the hydrophilic monomers;
0 to 1.0 molar equivalent of the non-hydrophilic monomers that do not conform to the formula (1);
0.04 to 0.5 molar equivalent of the crosslinker(s);
0.005 to 0.05 molar equivalent of the UV absorber (s) ;
0 to 0.004 molar equivalent of the blue absorber(s) and
0.0025 to 0.05 molar equivalent of a free-radical initiator.

6. Composition according to one or more of Claims 1 to 5, **characterized in that** the crosslinker is selected from para-divinylbenzene, allyl acrylate, ethylene glycol divinyl ether, divinyl sulfone, allyl methacrylate, N,N'-methylenebisacrylamide, ethylene glycol diacrylate, N,N'-methylenebismethacrylamide, 1,3-propanediol diacrylate, 2,3-propanediol diacrylate, 1,4-butanediol diacrylate, 1,3-butanediol diacrylate, 1,5-pentanediol diacrylate, 1,6-hexanediol diacrylate, 1,7-heptanediol diacrylate, 1,8-octanediol diacrylate, 1,9-nonanediol diacrylate, 1,10-decanediol diacrylate, 1,11-undecanediol diacrylate, 1,12-dodecanediol diacrylate, 1,13-tridecanediol diacrylate, 1,14-tetradecanediol diacrylate, 1,15-pentadecanediol diacrylate, 1,16-hexadecanediol diacrylate, 1,17-heptadecanediol diacrylate, 1,18-octadecanediol diacrylate, 1,19-nonadecanediol diacrylate, 1,20-eicosanediol diacrylate, 1,21-heneicosanediol diacrylate, 1,22-docosanediol diacrylate, 1,23-tricosanediol diacrylate, 1,24-tetracosanediol diacrylate, ethylene glycol dimethacrylate, N,N'-dihydroxyethylenebisacrylamide, thiodiethylene glycol diacrylate, 1,3-propanediol dimethacrylate, 2,3-propanediol dimethacrylate, 1,3-butanediol dimethacrylate, 1,4-butanediol dimethacrylate, 1,5-pentanediol dimethacrylate, 1,6-hexanediol dimethacrylate, 1,7-heptanediol dimethacrylate, 1,8-octanediol dimethacrylate, 1,9-nonanediol dimethacrylate, 1,10-decanediol dimethacrylate, 1,11-undecanediol dimethacrylate, 1,12-dodecanediol dimethacrylate, 1,13-tridecanediol dimethacrylate, 1,14-tetradecanediol dimethacrylate, 1,15-pentadecanediol dimethacrylate, 1,16-hexadecanediol dimethacrylate, 1,17-heptadecanediol dimethacrylate, 1,18-octadecanediol dimethacrylate, 1,19-nonadecanediol dimethacrylate, 1,20-eicosanediol dimethacrylate, 1,21-heneicosanediol dimethacrylate, 1,22-docosanediol dimethacrylate, 1,23-tricosanediol dimethacrylate, 1,24-tetracosanediol dimethacrylate, 2-(acryloyloxy)ethyl methacrylate, 2-(acryloyloxy)-propyl methacrylate, 3-(acryloyloxy)propyl methacrylate, 4-(acryloyloxy)butyl methacrylate, 5-(acryloyloxy)pentyl methacrylate, 6-(acryloyloxy)-hexyl methacrylate, 7-(acryloyloxy)heptyl methacrylate, 8-(acryloyloxy)octyl methacrylate, 9-(acryloyloxy)nonyl methacrylate, 10-(acryloyloxy)-decyl methacrylate, 11-(acryloyloxy)undecyl methacrylate, 12-(acryloyloxy)dodecyl methacrylate, 13-(acryloyloxy)tridecyl methacrylate, 14-(acryloyloxy)tetradecyl methacrylate, 15-(acryloyloxy)pentadecyl methacrylate, 16-(acryloyloxy)hexadecyl methacrylate, 17-(acryloyloxy)heptadecyl methacrylate, 18-(acryloyloxy)octadecyl methacrylate, 19-(acryloyloxy)nonadecyl methacrylate, 20-(acryloyloxy)eicosanyl methacrylate, 21-(acryloyloxy)heneicosanyl methacrylate, 22-(acryloyloxy)docosanyl methacrylate, 23-(acryloyloxy)tricosanyl methacrylate, 24-(acryloyloxy)tetracosanyl methacrylate, neopentyl glycol diacrylate, di(ethylene glycol)diacrylate, N,N'-hexamethylenebisacrylamide, thiodiethylene glycol diacrylate, thiodiethylene glycol dimethacrylate, neopentyl glycol dimethacrylate, diethylene glycol dimethacrylate, diallyl phthalate, triallyl cyanurate, glyceryl 1,3-dimethacrylate, N,N'-hexamethylenebismethacrylamide, tri(ethylene glycol) diacrylate, tri(ethylene glycol) dimethacrylate, tetra(ethylene glycol) diacrylate, tetra(ethylene glycol) dimethacrylate, penta(ethylene glycol) diacrylate, penta(ethylene glycol) dimethacrylate, hexa(ethylene glycol) diacrylate, hexa(ethylene glycol) dimethacrylate, poly(ethylene glycol) dimethacrylate, poly(ethylene glycol) diacrylate.

7. Composition according to one or more of Claims 1 to 6, **characterized in that** the UV absorber is selected from 3-(3-(tert-butyl)-4-hydroxy-5-(5-methoxy-2H-benzo[d][1,2,3]triazol-2-yl)phenoxy)propyl methacrylate, 2-(2-hydroxy-5-vinylphenyl)-2H-benzotriazole, allyl-2-hydroxybenzophenone, 2-allyl-6-(2H-benzotriazol-2-yl)-p-cresol, 4-methacryloyloxy-2-hydroxybenzophenone, 2-(2'-hydroxy-3'-methallyl-5'-methylphenyl)benzotriazole, 2-hydroxy-4-methacryloyloxybenzophenone, 4-acryloylethoxy-2-hydroxybenzophenone, 2-[3-(2H-benzotriazol-2-yl)-4-hydroxyphenyl]ethyl methacrylate, 2-(2'-hydroxy-5'-methacrylamido-phenyl)-5-methoxybenzotriazole, 2-(2'-hydroxy-5'-methacrylamidophenyl)-5-chlorobenzotriazole, 2-(2'-hydroxy-5'-methacryloyloxypropylphenyl)-benzotriazole, 2-(2'-hydroxy-5'-methacryloylpropyl-3'-tert-butylphenyl)-5-methoxy-2H-benzotriazole, 2-(3-(tert-butyl)-4-hydroxy-5-(5-methoxy-2H-benzo[d][1,2,3]triazol-2-yl)phenoxy)ethyl methacrylate, 2-[3'-tert-butyl-2'-hydroxy-5'-(3"-methacryloyloxypropyl)phenyl]-5-chlorobenzotriazole, 2-{2'-hydroxy-3'-tert-butyl-5'-[3'-methacryloyloxypropoxy]phenyl}-5-methoxy-2H-benzotriazole, 2-[3'-tert-butyl-5'-(3"-dimethyl-vinylsilylpropoxy)-2'-hydroxyphenyl]-5-methoxybenzotriazole, 2-(tert-nutyl)-6-(5-chloro-2H-benzo[d][1,2,3]triazol-2-yl)-4-vinylphenol, 2-(2H-1,2,3-benzotriazol-2-yl)-4-methyl-6-(2-methylprop-2-enyl)phenol, 2-(3-acetyl-2-aminophenoxy)ethyl methacrylate, 2-(4-benzoyl-3-hydroxyphenoxy)ethyl acrylate or a combination of these compounds.

8. Crosslinked polymer containing a polymerized composition according to one or more of Claims 1 to 7.

9. Process for preparing a copolymer according to Claim 8, **characterized in that** a composition according to one or more of Claims 1 to 7 is provided and then free-radically polymerized, where the polymerization temperature to be chosen, when a thermal free-radical initiator is used, is not within a miscibility gap of the materials.

10. Use of a composition according to one or more of Claims 1 to 7 or a copolymer according to Claim 8 for production of a blank for an ophthalmic lens or an ophthalmological implant.

11. Use according to Claim 10 for production of an intraocular lens.

12. Article comprising a copolymer according to Claim 8.

13. Article according to Claim 12, selected from a blank for an ophthalmic lens or an ophthalmological implant, an ophthalmological implant or an ophthalmic lens.

14. Article according to Claim 12, selected from an intraocular lens or a phakic lens.

15. Process for producing an article according to Claim 12, **characterized in that** the composition according to one or more of Claims 1 to 7 is provided, a polymerization is performed, and in the course thereof or subsequently the article is formed, preferably by cast moulding.

## Revendications

1. Composition contenant au moins un composé de formule (1) 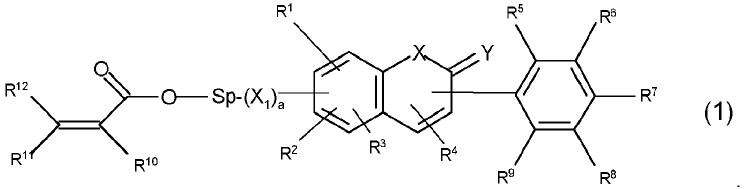 où, pour les symboles et indices utilisés, ce qui suit est d'application :
X représente en chaque occurrence, de manière identique ou différente, O, S ou NR⁰ ;
Y représente en chaque occurrence, de manière identique ou différente, O ou S ;
X₁ représente O ou S ;
a vaut 0 ou 1 ;
Sp représente un alcanediyle, un alcènediyle ou un alcynediyle, qui peut être substitué par un ou plusieurs groupes R ;
R⁰ représente un groupe alkyle linéaire ou ramifié comprenant 1 à 10 atomes de carbone ;
R¹, R², R³ et R⁴ représentent, à chaque fois indépendamment les uns des autres, en chaque occurrence, H, F, Cl, Br, I, un groupe alkyle linéaire ou ramifié comprenant 1 à 20 atomes de carbone, un groupe alkyle linéaire ou ramifié, partiellement ou complètement halogéné, comprenant 1 à 20 atomes de carbone ou un groupe aryle ou hétéroaryle comprenant 5 à 40 atomes de cycle ;
R⁵, R⁶, R⁷, R⁸ et R⁹ représentent, à chaque fois indépendamment les uns des autres, en chaque occurrence, H, F, Cl, Br, I, un groupe alkyle linéaire ou ramifié comprenant 1 à 20 atomes de carbone, un groupe alcoxy linéaire ou ramifié comprenant 1 à 20 atomes de carbone, un groupe alkyle linéaire ou ramifié, partiellement ou complètement halogéné, comprenant 1 à 20 atomes de carbone, un groupe alcoxy linéaire ou ramifié, partiellement ou complètement halogéné , comprenant 1 à 20 atomes de carbone ou un groupe aryle ou hétéroaryle comprenant 5 à 40 atomes de cycle, au moins un radical du groupe des substituants R⁵ à R⁹ signifiant un groupe alkyle linéaire ou ramifié comprenant 1 à 20 atomes de carbone, qui peut être partiellement ou complètement halogéné ;
R¹⁰, R¹¹, R¹² représentent, à chaque fois indépendamment les uns des autres, en chaque occurrence, H, F, un groupe alkyle linéaire ou ramifié comprenant 1 à 20 atomes de carbone qui peut être partiellement ou complètement halogéné ou un groupe aryle comprenant 6 à 14 atomes de cycle ;
R est choisi de manière identique ou différente en chaque occurrence dans le groupe constitué par un groupe alkyle linéaire ou ramifié comprenant 1 à 10 atomes de carbone, un groupe alkyle linéaire ou ramifié, partiellement ou complètement halogéné, comprenant 1 à 10 atomes de carbone, un groupe alcoxy linéaire ou ramifié comprenant 1 à 10 atomes de carbone ou un groupe alcoxy linéaire ou ramifié, partiellement ou complètement halogéné comprenant 1 à 10 atomes de carbone ;
au moins un monomère hydrophile, choisis parmi le méthacrylate de 3-hydroxypropyle, l'acrylate de 3-hydroxypropyle, le méthacrylate de 2-hydroxyéthyle, l'acrylate de 2-hydroxyéthyle, le méthacrylate de 4-hydroxybutyle, l'acrylate de 4-hydroxybutyle, le méthacrylate de glycéryle, l'acrylate de glycéryle, l'acrylamide, la N-vinylpyrrolidone, le méthacrylate de 6-hydroxyhexyle, l'acrylate de 6-hydroxyhexyle, le méthacrylate de 18-hydroxyoctadécyle, l'acrylate de 18-hydroxyoctadécyle, le méthacrylate de 11-hydroxyundécyle, l'acrylate de 11-hydroxyundécyle, le méthacrylate de 12-hydroxydodécyle, l'acrylate de 12-hydroxydodécyle, l'acrylate d'éthylèneglycolphényléther, le méthacrylate d'éthylèneglycolphényléther ou une combinaison de ces composés ;
au moins un absorbant des UV et au moins un réticulant, le rapport molaire de la somme de tous les composés de formules (1) à la somme de tous les monomères hydrophiles étant de 1:0,51 à 1:1,24.

2. Composition selon la revendication 1, **caractérisée en ce qu'**elle contient au moins un monomère non hydrophile, qui ne correspond pas à la formule (1) et/ou un azurant optique, le monomère non hydrophile étant choisi parmi l'acrylate de n-butyle, le méthacrylate de n-butyle, le méthacrylate d'éthyle, l'acrylate d'éthyle, le méthacrylate de méthyle, l'acrylate de méthyle, le méthacrylate de n-propyle, l'acrylate de n-propyle, le méthacrylate d'iso-propyle, l'acrylate d'iso-propyle, l'acrylate de n-pentyle, le méthacrylate de n-pentyle, le méthacrylate d'iso-pentyle, l'acrylate d'iso-pentyle, l'acrylate de s-butyle, le méthacrylate de s-butyle, l'acrylate de n-hexyle, le méthacrylate de n-hexyle, l'acrylate de s-pentyle, le méthacrylate de s-pentyle, l'acrylate d'isohexyle, le méthacrylate d'isohexyle, l'acrylate de n-octyle, le méthacrylate d n-octyle, l'acrylate d'iso-octyle, le méthacrylate d'iso-octyle, l'acrylate de n-nonyle, le méthacrylate de n-nonyle, l'acrylate de n-décyle, le méthacrylate de n-décyle, l'acrylate de n-undécyle, le méthacrylate de n-undécyle, l'acrylate de n-dodécyle, le méthacrylate de n-dodécyle, l'acrylate de n-octadécyle, le méthacrylate de n-octadécyle, l'acrylate de 2-éthylhexyle, le méthacrylate de 2-éthylhexyle, l'acrylate de n-dodécyle, le méthacrylate de n-dodécyle, l'acrylate de n-tridécyle, le méthacrylate de n-tridécyle, l'acrylate de n-tétradécyle, le méthacrylate de n-tétradécyle, l'acrylate de n-pentadécyle, le méthacrylate de n-pentadécyle, l'acrylate de n-hexadécyle, le méthacrylate de n-hexadécyle, l'acrylate de 2,2-diméthylpropyle, le méthacrylate de 2,2-diméthylpropyle, l'acrylate de triméthylcyclohexyle, le méthacrylate de triméthylcyclohexyle, l'acrylate d'iso-butyle, le méthacrylate d'iso-butyle, le méthacrylate de 2-(4-bromophényl)éthyle, le méthacrylate de 4-phénylbutyle, le méthacrylate de 4-méthylphényle, le méthacrylate de phényle, l'acrylate de 4-méthylphényle, l'acrylate de benzyle, le méthacrylate de benzyle, le méthacrylate de 2-benzyloxyéthyle, le méthacrylate de 3-benzyloxypropyle, l'acrylate de phényléthyle, le méthacrylate de phényléthyle, le méthacrylate de 3-phénylpropyle, l'acrylate de 2-phénoxyéthyle, l'acrylate de 2-benzyloxyéthyle, l'acrylate de 3-phénylpropyle, l'acrylate de 4-méthylbenzyle, l'acrylate de phényle, le méthacrylate de 2-(phénylthio)éthyle, l'acrylate de 4-phénylbutyle, l'acrylate de 5-phénylpentyle, l'acrylate de 3-benzyloxypropyle, l'acrylate de 2-(phénylthio)propyle, l'acrylate de 2-(phénylthio)éthyle, l'acrylate de 4-phénylbutyle, le méthacrylate de 4-méthylbenzyle, l'acrylate de 2-(2-méthylphényl)éthyle, le méthacrylate de 2-(2-méthylphényl)éthyle, l'acrylate de 2-(3-méthylphényl)éthyle, le méthacrylate de 2-(3-méthylphényl)éthyle, l'acrylate de 2-(4-méthylphényl)éthyle, le méthacrylate de 2-(4-méthylphényl)éthyle, l'acrylate de 2-(4-propylphényl)éthyle, le méthacrylate de 2-(4-propylphényl)éthyle, l'acrylate de 2-(4-(1-méthyléthyl)phényl)éthyle, le méthacrylate de 2-(4-(1-méthyléthyl)phényl)éthyle, le méthacrylate de 2-(4-méthoxyphényl)éthyle, l'acrylate de 2-(4-méthoxyphényl)éthyle, l'acrylate de 2-(4-cyclohexylphényl)éthyle, le méthacrylate de 2-(4-cyclohexylphényl)éthyle, le méthacrylate de 2-(4-chlorophényl)éthyle, l'acrylate de 2-(4-chlorophényl)éthyle, le méthacrylate de 2-(3-chlorophényl)éthyle, l'acrylate de 2-(3-chlorophényl)éthyle, le méthacrylate de 2-(2-chlorophényl)éthyle, l'acrylate de 2-(2-chlorophényl)éthyle, l'acrylate de 2-(4-bromophényl)éthyle, le méthacrylate de 2-(4-phénylphényl)éthyle, l'acrylate de 2-(4-phénylphényl)éthyle, le méthacrylate de 2-(3-phénylphényl)éthyle, l'acrylate de 2-(3-phénylphényl)éthyle, le méthacrylate de 2-(4-benzylphényl)éthyle, l'acrylate de 2-(4-benzylphényl)éthyle, l'acrylate de 2-(phénylthio)éthyle, l'acrylate de 3-benzyloxypropyle, l'acrylate de 2-[2-(benzyloxy)éthoxy]éthyle, le méthacrylate de 2-[2-(benzyloxy)éthoxy]éthyle, le méthacrylate de pentafluorophényle, le méthacrylate d'heptadécafluorodécyle, le méthacrylate de dodécafluoroheptyle, l'acrylate d'heptadécafluorodécyle, le méthacrylate de trifluoroéthyle, le méthacrylate d'octafluoropentyle, le méthacrylate d'hexafluorobutyle, l'acrylate d'octafluoropentyle, l'acrylate de trifluoroéthyle, l'acrylate d'heptafluorobutyle, le méthacrylate de tétrafluoropropyle, l'acrylate d'hexafluorobutyle, l'acrylate de pentafluorophényle, le méthacrylate d'hexafluoro-isopropyle.

3. Composition selon la revendication 1 ou 2, **caractérisée en ce qu'**elle contient
- 1 équivalent molaire d'un composé de formule (1) ou 1 équivalent molaire de la somme de tous les composés de formule (1) ;
- 0,51 à 1,24 équivalent molaire des monomères hydrophiles ;
- 0 à 1,0 équivalent molaire des monomères non hydrophiles, qui ne correspondent pas à la formule (1) ;
- 0,04 à 0,5 équivalent molaire du ou des réticulant(s) et
- 0,005 à 0,05 équivalent molaire du ou des absorbant(s) des UV.

4. Composition selon l'une ou plusieurs des revendications 1 à 3, **caractérisée en ce que** la composition contient un initiateur radicalaire.

5. Composition selon l'une ou plusieurs des revendications 1 à 4, **caractérisée en ce que** la composition est constituée par
- un équivalent molaire d'un composé de formule (1) ou un équivalent molaire de la somme de tous les composés de formule (1) ;
- 0,51 à 1,24 équivalent molaire des monomères hydrophiles ;
- 0 à 1,0 équivalent molaire des monomères non hydrophiles, qui ne correspondent pas à la formule (1) ;
- 0,04 à 0,5 équivalent molaire du ou des réticulant(s) ;
- 0,005 à 0,05 équivalent molaire du ou des absorbant(s) des UV ;
- 0 à 0,004 équivalent molaire du ou des azurant(s) optique(s) et
- 0,0025 à 0,05 équivalent molaire d'un initiateur radicalaire.

6. Composition selon l'une ou plusieurs des revendications 1 à 5, **caractérisée en ce que** le réticulant est choisi parmi le para-divinylbenzène, l'acrylate d'allyle, l'éthylèneglycol-divinyléther, la divinylsulfone, le méthacrylate d'allyle, le N,N'-méthylène-bis-acrylamide, le diacrylate d'éthylèneglycol, le N,N'-méthylène-bis-méthacrylamide, le diacrylate de 1,3-propanediol, le diacrylate de 2,3-propanediol, le diacrylate de 1,4-butanediol, le diacrylate de 1,3-butanediol, le diacrylate de 1,5-pentanediol, le diacrylate de 1,6-hexanediol, le diacrylate de 1,7-heptanediol, le diacrylate de 1,8-octanediol, le diacrylate de 1,9-nonanediol, le diacrylate de 1,10-décanediol, le diacrylate de 1,11-undécanediol, le diacrylate de 1,12-dodécanediol, le diacrylate de 1,13-tridécanediol, le diacrylate de 1,14-tétradécanediol, le diacrylate de 1,15-pentadécanediol, le diacrylate de 1,16-hexadécanediol, le diacrylate de 1,17-heptadécanediol, le diacrylate de 1,18-octadécanediol, le diacrylate de 1,19-nonadécanediol, le diacrylate de 1,20-eicosanediol, le diacrylate de 1,21-heneicosanediol, le diacrylate de 1,22-docosanediol, le diacrylate de 1,23-tricosanediol, le diacrylate de 1,24-tétracosanediol, le diméthacrylate d'éthylèneglycol, le N,N'-dihydroxyéthylène-bis-acrylamide, le diacrylate de thiodiéthylèneglycol, le diméthacrylate de 1,3-propanediol, le diméthacrylate de 2,3-propanediol, le diméthacrylate de 1,3-butanediol, le diméthacrylate de 1,4-butanediol, le diméthacrylate de 1,5-pentanediol, le diméthacrylate de 1,6-hexanediol, le diméthacrylate de 1,7-heptanediol, le diméthacrylate de 1,8-octanediol, le diméthacrylate de 1,9-nonanediol, le diméthacrylate de 1,10-décanediol, le diméthacrylate de 1,11-undécanediol, le diméthacrylate de 1,12-dodécanediol, le diméthacrylate de 1,13-tridécanediol, le diméthacrylate de 1,14-tétradécanediol, le diméthacrylate de 1,15-pentadécanediol, le diméthacrylate de 1,16-hexadécanediol, le diméthacrylate de 1,17-heptadécanediol, le diméthacrylate de 1,18-octadécanediol, le diméthacrylate de 1,19-nonadécanediol, le diméthacrylate de 1,20-éicosanediol, le diméthacrylate de 1,21-heneicosanediol, le diméthacrylate de 1,22-docosanediol, le diméthacrylate de 1,23-tricosanediol, le diméthacrylate de 1,24-tétracosanediol, le méthacrylate de 2-(acryloyloxy)-éthyle, le méthacrylate de 2-(acryloyloxy)-propyle, le méthacrylate de 3-(acryloyloxy)-propyle, le méthacrylate de 4-(acryloyloxy)-butyle, le méthacrylate de 5-(acryloyloxy)-pentyle, le méthacrylate de 6-(acryloyloxy)-hexyle, le méthacrylate de 7-(acryloyloxy)-heptyle, le méthacrylate de 8-(acryloyloxy)-octyle, le méthacrylate de 9-(acryloyloxy)-nonyle, le méthacrylate de 10-(acryloyloxy)-décyle, le méthacrylate de 11-(acryloyloxy)-undécyle, le méthacrylate de 12-(acryloyloxy)-dodécyle, le méthacrylate de 13-(acryloyloxy)-tridécyle, le méthacrylate de 14-(acryloyloxy)-tétradécyle, le méthacrylate de 15-(acryloyloxy)-pentadécyle, le méthacrylate de 16-(acryloyloxy)-hexadécyle, le méthacrylate de 17-(acryloyloxy)-heptadécyle, le méthacrylate de 18-(acryloyloxy)-octadécyle, le méthacrylate de 19-(acryloyloxy)-nonadécyle, le méthacrylate de 20-(acryloyloxy)-eicosanyle, le méthacrylate de 21-(acryloyloxy)-heneicosanyle, le méthacrylate de 22-(acryloyloxy)-docosanyle, le méthacrylate de 23-(acryloyloxy)-tricosanyle, le méthacrylate de 24-(acryloyloxy)-tétracosanyle, le diacrylate de néopentylglycol, le diacrylate de di(éthylèneglycol), le N,N'-hexaméthylène-bis-acrylamide, le diacrylate de thiodiéthylèneglycol, le diméthacrylate de thiodiéthylèneglycol, le diméthacrylate de néopentylglycol, le diméthacrylate de diéthylèneglycol, le phtalate de diallyle, le cyanurate de triallyle, le 1,3-diméthacrylate de glycéryle, le N,N'-hexaméthylène-bis-méthacrylamide, le diacrylate de tri(éthylèneglycol), le diméthacrylate de tri(éthylèneglycol), le diacrylate de tétra(éthylèneglycol), le diméthacrylate de tétra(éthylèneglycol), le diacrylate de penta(éthylèneglycol), le diméthacrylate de penta(éthylèneglycol), le diacrylate d'hexa(éthylèneglycol), le diméthacrylate d'hexa(éthylèneglycol), le diméthacrylate de poly(éthylèneglycol), le diacrylate de poly(éthylèneglycol).

7. Composition selon l'une ou plusieurs des revendications 1 à 6, **caractérisée en ce que** l'absorbant des UV est choisi parmi le méthacrylate de 3-(3-(tert-butyl)-4-hydroxy-5-(5-méthoxy-2H-benzo[d] [1,2,3]triazol-2-yl)phénoxy)propyle, le 2-(2-hydroxy-5-vinylphényl)-2H-benzotriazole, l'allyl-2-hydroxybenzophénone, le 2-allyl-6-(2H-benzotriazol-2-yl)-p-crésol, la 4-méthacryloxy-2-hydroxybenzophénone, le 2-(2'-hydroxy-3'-méthallyl-5'-méthylphényl)benzotriazole, la 2-hydroxy-4-méthacryloyloxybenzophénone, la 4-acryloyléthoxy-2-hydroxybenzophénone, le méthacrylate de 2-[3-(2H-benzotriazol-2-yl)-4-hydroxyphényl]éthyle, le 2-(2'-hydroxy-5'-méthacrylamidophényl)-5-méthoxybenzotriazole, le 2-(2'-hydroxy-5'-méthacrylamidophényl)-5-chlorobenzotriazole, le 2-(2'-hydroxy-5'-méthacryloxypropylphényl)benzotriazole, le 2-(2'-hydroxy-5'-méthacryloylpropyl-3'-tert-butylphényl)-5-méthoxy-2H-benzotriazole, le méthacrylate de 2-(3-(tert-butyl)-4-hydroxy-5-(5-méthoxy-2H-benzo[d] [1,2,3]triazol-2-yl)phénoxy)éthyle, le 2-[3'-tert-butyl-2'-hydroxy-5'-(3"-méthacryloyloxypropyl)phényl]-5-chlorobenzotriazole, le 2-{2'-hydroxy-3'-tert-butyl-5'-[3'-méthacryloyloxypropoxy]phényl}-5-méthoxy-2H-benzotriazole, le 2-[3'-tert-butyl-5'-(3"-diméthylvinylsilylpropoxy)-2'-hydroxyphényl]-5-méthoxybenzotriazole, le 2-(tert-butyl)-6-(5-chloro-2H-benzo[d][1,2,3]triazol-2-yl)-4-vinylphénol, le 2-(2H-1,2,3-benzotriazol-2-yl)-4-méthyl-6-(2-méthylprop-2-ényl)phénol, le méthacrylate de 2-(3-acétyl-2-aminophénoxy)éthyle, l'acrylate de 2-(4-benzoyl-3-hydroxyphénoxy)éthyle ou une combinaison de ces composés.

8. Copolymère réticulé contenant une composition polymérisée selon l'une ou plusieurs des revendications 1 à 7.

9. Procédé pour la préparation d'un copolymère selon la revendication 8, **caractérisé en ce qu'**une composition selon l'une ou plusieurs des revendications 1 à 7 est préparée et ensuite polymérisée par voie radicalaire, la température à choisir de la polymérisation, lors de l'utilisation d'un initiateur radicalaire thermique, n'étant pas située dans une lacune de mélange des matériaux.

10. Utilisation d'une composition selon l'une ou plusieurs des revendications 1 à 7 ou d'un copolymère selon la revendication 8 pour la fabrication d'une ébauche pour une lentille ophtalmique ou un implant ophtalmique.

11. Utilisation selon la revendication 10 pour la fabrication d'une lentille intraoculaire.

12. Article contenant un copolymère selon la revendication 8.

13. Article selon la revendication 12, choisi parmi une ébauche pour une lentille ophtalmique ou pour un implant ophtalmique, un implant ophtalmique ou une lentille ophtalmique.

14. Article selon la revendication 12, choisi parmi une lentille intraoculaire ou une lentille Phake.

15. Procédé pour la fabrication d'un article selon la revendication 12, **caractérisé en ce qu'**une composition selon l'une ou plusieurs des revendications 1 à 7 est préparée, une polymérisation est réalisée et l'article étant façonné ce faisant ou consécutivement, de préférence par moulage.
